(19) Europäisches Patentamt
European Patent Office
Office européen des brevets

(11) EP 4 693 155 A2

(12) EUROPEAN PATENT APPLICATION

(43) Date of publication:
**11.02.2026 Bulletin 2026/07**

(21) Application number: **25224095.7**

(22) Date of filing: **08.01.2019**

(51) International Patent Classification (IPC):
***G06Q 40/06*** *(2012.01)*

(52) Cooperative Patent Classification (CPC):
**G06Q 40/02; G06Q 40/03; G06Q 40/06; G06Q 50/163**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2018 US 201862614720 P**
**07.01.2019 US 201916241820**

(62) Document number(s) of the earlier application(s) in accordance with Art. 76 EPC:
**19736046.4 / 3 738 094**

(71) Applicant: **DOMOS, LLC**
**Stanford, CA 94305 (US)**

(72) Inventor: **STRNAD, James Frank II**
**California, 94305 (US)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

Remarks:
This application was filed on 16-12-2025 as a divisional application to the application mentioned under INID code 62.

# (54) METHOD AND APPARATUS FOR REAL TIME, DYNAMIC MANAGEMENT OF REAL ESTATE FINANCE, SERVICES, AND REPORTING

(57) Real time, dynamic management of real estate finance, services, and reporting maintains a website accessible to a homeowner and an investor that displays terms, parameters, and upcoming actions under a housing finance arrangement; stores a housing instrument in a blockchain; implements adjustments under a balancing mechanism; receives, periodically, a message from a managing entity initiating a balancing entry onto the housing instrument; transmits a query to the blockchain for data relevant to a balancing calculation; receives the data; determines an updated balance; writes an updated account balance along with details of the computation on the housing instrument in the blockchain, modifies a website accessible to the homeowner and investor to display the updated account balance, and alerts the homeowner and investor of the updated account balance through a mobile device.



Processed by Luminess, 75001 PARIS (FR)

## Description

### CROSS REFERENCE TO RELATED APPLICATIONS

This application claims priorities to U.S. provisional patent application s/n 62/614,720, filed January 8, 2018 and U.S. Patent Application s/n 16/241,820 filed January 7, 2019 which applications are incorporated herein in its entirety by this reference thereto.

### TECHNICAL FIELD

The invention relates to data processing. More particularly, the invention relates to a method and apparatus for real time, dynamic management of real estate finance, services, and reporting.

### BACKGROUND

Computer technology provides an integrated and low-cost experience for consumers and providers of many goods and services. For example, consumers of investment services can access brokerage websites on which they can buy and sell securities, track their account in real time, receive monthly statements, receive securities price quotes, engage in margin borrowing to buy securities, borrow securities to sell short, and move back and forth between more expensive and less expensive levels of service with different features. Computer technology links other service providers into the operation in real time, including trading venues, margin lenders, security settlement services, quotation providers, and others. The result is a seamless, comprehensive, and low-cost presentation, as well as execution, both for consumers of investment services and for various service providers. In particular, consumers typically can access all the services they need at low cost on one website through a few GUI-based pages, and a variety of service providers can interact with consumers efficiently through the same website.

In contrast to many other industries, current computer technology in the field of residential real estate services and finance results in a fragmented presentation along with high costs for consumers who buy and own homes, for investors that provide mortgage or equity funding, and for various service providers. Various functions and services have online implementations, but these are not integrated. Current computer technology does not facilitate coordination between various parties on the finance side adequately, resulting in high costs for all. The resulting consumer experience contrasts sharply with what is available for investment services in which the service providers are coordinated and operate seamlessly, obviating any need for the consumer to deal with them separately or at all. The description which follows illustrates the fragmentation and lack of coordination inherent in current technology in the field of residential real estate services and finance.

The purchase, finance, and sale of homes involves multiple actors and multiple transactions. Some of the major parties are: (1) homeowners; (2) investors who provide mortgage or equity finance; (3) originators who interact with consumers to initiate mortgage or equity finance or refinance; (4) mortgage servicers who perform functions such as collecting payments from homeowners, transferring the payments to investors, and providing information to both parties; (5) mortgage insurers that for a fee or fees insure investors in mortgages against non-payment; (6) investment pools of mortgages or rental properties; and (7) real estate agents and others who participate in the purchase and sale of homes.

Fragmentation is particularly evident at the homeowner level. Homeowners must access separate websites for disparate purposes. Homeowners can apply for mortgage finance or refinance on one set of websites, for example Rocket Mortgage. Homeowners can access separate servicer-provided portals to receive information about their mortgages and to make payments. Home buyers or sellers can access yet other websites that provide valuations and identify listed properties, for example Zillow and Redfin. Real estate agencies have websites that offer purchase and sale services, for example Coldwell Banker.

This fragmentation makes some services extremely costly because they are done on a one off, separate basis instead of being integrated through computer technology into a comprehensive, ongoing service. For example, it often costs 2-3% of the loan principal amount to refinance a mortgage. This situation stands in stark contrast to many other consumer services in which there is ongoing capability to change the terms of service online for little or no cost.

This fragmentation is accompanied by a lack of coordination that drives up costs both for homeowners and for the various service providers involved. The treatment of mortgages is a good example. Mortgages are typically packaged into pools and sold to investors. When interest rates go down, homeowners prepay their mortgages and refinance, which decimates existing mortgage pools. This prepayment risk for investors causes them to require a premium, typically in the form of a higher interest rate paid by homeowners, to lend. Refinancing is a *de novo* transaction, not an adjustment to an existing mortgage, and the homeowner typically carries this out either on a separate website from the servicing website for the current mortgage or entirely offline in person at a financial institution or with a mortgage broker.

Fragmentation and lack of coordination not only results in costs for home equity and mortgage investors but also precludes major investment opportunities. Most striking, it is very difficult to invest in owner-occupied housing in a comprehensive way. Mortgages, a debt component, are the major investment vehicle. It also is possible to invest in appreciation shares either as part of shared appreciation mortgages or directly, for example Unison.

There currently is no way to capture the returns from owner-occupied housing comprehensively, both the implicit rents and the appreciation. No current vehicle accesses implicit rents at all. The inability of third parties to invest comprehensively in owner-occupied housing is a major loss. Residential real estate is a major asset class, e.g. $31.8 trillion in 2017 for the United States, which exceeded total U.S. stock market capitalization. The bulk of it is owner-occupied.

It is possible to invest in portfolios of rental homes, for example American Homes 4 Rent, but these homes tend to have lower returns than owner-occupied homes because owners take better care of homes than tenants do.

Fragmentation exists at the service provider level also. Discrete functions, such as underwriting and marketing mortgages to mortgage pools or investors, take place on separate websites or portals. These functions are not coordinated with consumers in a dynamic way. They are separate steps that need to be updated manually when there is a change in homeowner status or the mortgage deal that a homeowner desires.

Behind this environment of fragmentation and lack of coordination is a simple reality. Current computer technology typically takes single business methods or operations that are not coordinated with each other and applies them separately online largely as is. For example, one fills out a mortgage application online at a website primarily devoted to that purpose instead of filling out a paper application. Integrated, low-cost computer implementations are not available.

## SUMMARY

In accordance with an embodiment, a computer technology system for real time, dynamic management of real estate finance, services, and reporting comprises:

maintaining, on a website controlled by a managing entity and accessible to at least a homeowner and an investor, a display of the terms, parameter values, and upcoming required actions under a housing finance arrangement;

storing, in at least one blockchain system containing at least a housing instrument data blockchain, the system containing at least: contractual information specifying at least one housing finance arrangement between at least one homeowner and at least one investor financing a particular home, a time series of economic parameters relevant to dynamic management of at least one housing finance arrangement, a record of current and past ownership of the financing debt or equity, a record of transactions including at least payments by the homeowner to investors, a record of any adjustments to or changes in the housing finance arrangement, specification of at least one balancing mechanism designed to track at least the homeowner's and investor's net contributions considering the housing finance arrangement between them as a joint venture and to adjust at least one residual account to reflect the net contributions of the parties, a record of the data and calculations of a balancing engine operating continuously based on one or more balancing mechanisms along with the resulting adjustments of at least one residual account, an access protocol defining various levels of access to data in the blockchain system as well as levels of permission to write new data onto the blockchain system, and data describing the homes that are the subject of the housing finance arrangements;

maintaining, on at least one processing server controlled by a managing entity, a balancing engine embodied in at least one processing unit, at least one receiving unit, and at least one transmitting unit for purposes of implementing adjustments under a balancing mechanism;

receiving, periodically through a receiving unit of the balancing engine, a message from the managing entity or an artificial intelligence entity representing it, initiating a balancing entry onto the housing instrument data blockchain; transmitting, through a transmitting unit of the balancing engine, a query of the blockchain system for data relevant to a balancing calculation; receiving said data through a receiving unit of the balancing engine;

in a direct arrangement, determining through a processing unit of the balancing engine an updated balance in at least one residual account; writing, through a transmitting unit of the balancing engine, the updated residual account balance along with details of the computation on the housing instrument data blockchain; modifying, through a processing unit and a transmitting unit of the balancing engine, a website accessible at least to a homeowner and an investor to display the updated residual account balance and then, through a transmitting unit of the balancing engine, alerting at least a homeowner and an investor, who may be offline, of the updated residual account balance through a mobile phone or other receiving device;

or in an arrangement that is not a direct arrangement, determining through a processing unit of the balancing engine an updated unscheduled outcome and associated quantities that use the unscheduled outcome as an input; writing, through a transmitting unit of the balancing engine, the updated unscheduled outcome and associated quantities along with details of the computation on the housing instrument data blockchain; modifying, through a processing unit and a transmitting unit of the balancing engine, a website accessible to at least a homeowner, an investor, and a residual balancing position holder to display the updated unscheduled outcome and associated quantities and then, through a transmitting unit of the balancing engine, alerting at least a homeowner, an investor, and a residual balancing position holder, who may be offline, of the updated unscheduled outcome and associated quantities through a mobile phone or other receiving device;

maintaining, on at least one processing server controlled by a managing entity, at least one data engine embodied in at least one processing unit, at least one receiving unit, at least one transmitting unit, and at least one database for purposes of creating, gathering, updating, processing, storing, and communicating at least one time series of at least one data parameter;

receiving, on a receiving unit of at least one data engine, third-party data comprising input data for computing at least one data parameter generated by the data engine; formatting, through a processing unit of the data engine, the added data and then modifying, through the same processing unit of the data engine, a database to incorporate the added data; computing, through a processing unit of the data engine, at least one non-third-party version of the data parameter if desired; computing, through a processing unit of the data engine, a single operative value of the data parameter using the third-party and non-third-party valuations; writing, through a transmitting unit of the data engine, the updated operative value of the data parameter along with a record of the calculation including at least a time and date stamp of the calculation, the third-party and non-third-party values, and the methodology used to compute the operative value onto a housing instrument data blockchain; modifying, through a processing unit and a transmitting unit of the data engine, a website accessible at least to a homeowner and an investor to display the updated operative value of the data parameter and then, through a transmitting unit of the data engine, alerting at least a homeowner and an investor, who may be offline, of the updated operative value through a mobile phone or other receiving device if either party requested updates of the operative value generally or upon certain values of the data parameter being realized;

maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement;

receiving, on a receiving unit of at least one third-party data engine operating on a processing server controlled by the managing entity, data with respect to at least one third-party finance arrangement; identifying, through a processing unit of the third-party data engine, the elements of the data that need to be recorded on a housing instrument data blockchain and modifying the data that needs to be recorded into a suitable format; writing, through a transmitting unit of the third-party data engine, the necessary data elements along with a record of any associated calculations on a housing instrument data blockchain; extracting from the housing instrument data blockchain, through a receiving unit of the third-party data engine, data adequate to describe the current status and relevant history of the third-party finance arrangement; organizing, through a processing unit of the third-party data engine, this data into a form suitable for website display; modifying, through a processing unit and a transmitting unit of the third-party data engine, a website accessible at least to a homeowner and an investor to display the updated data for the third-party finance arrangement, and then, through a transmitting unit of the third-party data engine, alerting at least a homeowner and an investor, who may be offline, of the updated data through a mobile phone or other receiving device if either party requested such updated data generally or upon certain values of certain data parameters being realized;

maintaining, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor;

receiving, through a receiving unit of a contract engine operating on a processing server controlled by a managing entity, initial contract data describing a housing finance arrangement; identifying, through a processing unit, the elements of the initial contract data that need to be recorded on a housing instrument data blockchain; organizing and modifying, through a processing unit of the contract engine, the data that needs to be recorded into a suitable format; writing through a transmitting unit of the contract engine the necessary data elements onto a housing instrument data blockchain;

receiving, on a website or other input device controlled by a managing entity, a request from the homeowner to alter at least one term in a housing finance arrangement specifying at least one option for a new term; transmitting, through a transmitting unit of a server controlled by the managing entity, the request to a receiving unit of a contract engine operating through a processing unit controlled by the managing entity;

in the case of a direct arrangement, extracting, from the housing instrument data blockchain through a receiving unit of the contract engine, necessary contract provisions governing the requested change in terms for each option along with other relevant data; determining, through a processing unit of the contract engine, if the requested change in terms for each option is permitted under the housing finance arrangement contract and, if so, whether any approvals by parties other than the homeowner are required; if the change in terms under at least one option is otherwise permissible, seeking, through a transmitting unit of the contract engine, any required approvals for each option by alerting at least one relevant party through at least one receiving device of said party of the need to approve or deny approval of each option that requires approval; after receiving a response or after the deadline for a response lapses, determining, through a processing unit of the contract engine, whether each option proposed by the homeowner is approved or denied; modifying, through a transmitting unit of the contract engine, a website accessible to the homeowner to inform the homeowner of whether each option is authorized or denied, and, in the case that at least one option is authorized, requesting the homeowner to confirm acceptance of one of the options or to reject all of them, and then via a transmitting unit of the data engine alerting at least the homeowner, who may be offline, through a mobile phone or other receiving device of the authorized or denied options, and, if at least one option is authorized, the need to confirm one option or reject them all; if the homeowner confirms an option, writing, through a transmitting unit of the contract engine, the change in terms along with associated data comprising the accepted option including at least the effective date and time of the change in terms onto the housing instrument data blockchain; modifying, through a processing unit and a transmitting unit of the contract engine, a website accessible at least to a homeowner and an investor to confirm that the change is in effect, to display the effective time and date of the change, and to display the new housing finance arrangement terms, and then, through a transmitting unit of the contract engine alerting at least a homeowner and an investor, who may be offline, that the change is in effect along with the effective time and date of the change through a mobile phone or other receiving device;

or in an arrangement that is not a direct arrangement, extracting, from the housing instrument data blockchain, through a receiving unit of the third-party data engine, necessary contract provisions governing the requested change in terms along with other relevant data including at least data sufficient to generate offers to the homeowner with respect to each option, the offers containing changes in terms of the housing finance arrangement other than the terms that are the subject of the request; computing, through a processing unit of the contract engine, at least one offer for each change-in-terms option specified by the homeowner; modifying, through a transmitting unit of the contract engine, a website accessible to the homeowner to inform the homeowner of the offers and requesting the homeowner to confirm acceptance of one of the offers or to confirm rejection of all of the offers, and then, through a transmitting unit of the contract engine alerting at least the homeowner, who may be offline, through a mobile phone or other receiving device of the offers and the need to accept one or turn them all down; creating, through a processing unit of the contract engine, an offer data ensemble including at least the content of the offers and the values of the governing data parameters at the time of the offers, values that govern the offer terms; writing, through a transmitting unit of the contract engine, the offer data ensemble onto the housing instrument data blockchain; if the homeowner accepts an offer, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the new housing finance arrangement along with the starting residual account positions of the parties, and the date and time the new arrangement went into effect; writing, through a transmitting unit of the contract engine, the transition data onto the housing instrument data blockchain, thereby effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display in commonly accessible areas of the website the new arrangement, and, through a transmitting unit of the contract engine, alerting each of the relevant parties, who may be offline, of the transition data relevant to that party as well as of the common data describing the new housing finance arrangement;

receiving, on a website or other input device controlled by a managing entity, a request from a homeowner to sell a residual account position to at least one investor or to buy a residual account position from at least one investor; transmitting, through a transmitting unit of a server controlled by the managing entity, the sell or buy request to a receiving unit of a contract engine operating through a processing unit controlled by the managing entity;

in the case of a direct arrangement, extracting, from the housing instrument data blockchain through a receiving unit of the contract engine, necessary contract provisions governing the requested sale or purchase along with other relevant data including at least the data required to determine the terms of the sale or purchase; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale; and if the sale or purchase is otherwise permissible, seeking, through a transmitting unit of the contract engine, investor approvals, if required, based on the computed terms by alerting the investors through at least one receiving device of each said investor of the terms and the need to approve or deny approval; after receiving a response or after the deadline for a response lapses, determining, through a processing unit of the contract engine, whether the sale or purchase on the computed terms is authorized or denied; modifying, through a transmitting unit of the contract engine, a website accessible to the homeowner to inform the homeowner of authorization or denial, and, in the case of authorization, requesting the homeowner to confirm acceptance or rejection on the basis of the computed terms, and then, through a transmitting unit of the contract engine, alerting the homeowner, who may be offline, through a mobile phone or other receiving device of the authorization or denial, and, in the case of authorization, requesting the homeowner to confirm acceptance or rejection of the transaction on the basis of the computed terms; if the homeowner confirms the transaction, transmitting, through a transmitting unit of the contract engine, a message informing the relevant party or parties of the required steps; receiving, through a receiving unit of the contract engine, verification that the required steps, including any required payments between the parties, have been completed; compiling, through a processing unit of the contract engine, a transaction data package including at least the confirmation of the transaction, the terms of the transaction, the date and time the transaction was effective, and the new residual account positions of the parties as of that date and time; writing, through a transmitting unit of the contract engine, after suitable formatting through a processing unit of the contract engine, the transaction data onto the housing instrument data blockchain; modifying, through a processing unit and a transmitting unit of the contract engine, a website accessible at least to a homeowner and an investor to display the relevant portions of the transaction data, and then, through a transmitting unit of the contract engine alerting at least a homeowner and an investor, who may be offline, of the relevant portions of the transaction data through a mobile phone or other receiving device;

or in an arrangement that is not a direct arrangement, extracting from the housing instrument data blockchain, through a receiving unit of the third-party data engine, necessary contract provisions governing the requested sale or purchase along with other relevant data including at least data sufficient to generate offers to the homeowner with respect to the proposed sale or purchase, each offer containing changes in the terms of the housing finance arrangement accompanying the proposed sale or purchase; computing, through a processing unit of the contract engine, at least one offer with respect to the sale or purchase proposed by the homeowner; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale and the terms of each offer; and if the sale or purchase is otherwise permissible, seeking, through a transmitting unit, investor approvals with respect to each offer, if required, based on the computed terms by alerting the investors through at least one receiving device of each said investor of the offers, and the need to approve or deny approval of each offer; after receiving a response or after the deadline for a response lapses, determining, through a processing unit of the contract engine, whether each offer is authorized or denied; modifying, through a transmitting unit of the contract engine, a website accessible to the homeowner to inform the homeowner of authorization or denial of each offer, and, in the case of authorization of at least one offer, requesting the homeowner to confirm acceptance of one offer along with the sale or purchase terms or to reject them all, and then, through a transmitting unit of the contract engine, alerting the homeowner, who may be offline, through a mobile phone or other receiving device of the authorization or denial of each offer, and, in the case of authorization of at least one offer, requesting the homeowner to confirm acceptance of one offer along with the sale or purchase terms or to reject them all; creating, through a processing unit of the contract engine, an offer data ensemble including at least the content of the offers, the sale or purchase terms, and the values of the governing data parameters at the time of the offers, values that govern the offer terms; writing, through a transmitting unit of the contract engine, the offer data ensemble onto the housing instrument data blockchain; if the homeowner accepts an offer along with the sale or purchase terms, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting, through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect; writing, through a transmitting unit of the contract engine, the transition data onto the housing instrument data blockchain, effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and then, through a transmitting unit of the contract engine, alerting each of the relevant parties, who may be offline, of the transition data relevant to that party as well as the common data describing the new housing finance arrangement.

## DESCRIPTION OF THE DRAWINGS

FIG. 1 is a block diagram illustrating a macro system architecture for integrating centralized and decentralized computer systems to create optimized dynamic data structures that accurately reflect housing market conditions to facilitate home finance transactions and produce a unified user experience in accordance with exemplary embodiments.

FIG. 2 is a block diagram illustrating the balancing engine of FIG. 1 that manages data structures, allocates home equity to residual accounts, and authorizes equity rebalancing in accordance with exemplary embodiments.

FIG 3. Is a block diagram of the blockchain system of FIG. 1 that receives, processes, and transmits data to and from a blockchain database in accordance with exemplary embodiments.

FIG. 4 is a block diagram illustrating the application layer of FIG. 1 that processes data, accesses centralized and decentralized databases, and provides the computer architecture to support user interfaces for the parties involved in accordance with exemplary embodiments.

FIG. 5 is a flow diagram illustrating the process for authorization of an equity rebalancing request using the processing server of FIG. 4 and issuing a transaction message in accordance with exemplary embodiments.

FIG. 6 is a block diagram illustrating an exemplary embodiment of a FIG. 1 data engine that creates, updates, and transmits one or more parameter values used by the system, in which an exemplary embodiment comprises a valuation engine that transforms data structures with a series of algorithms to calculate the value of home equity and the associated data structures on centralized and decentralized databases in accordance with exemplary embodiments.

FIG. 7 is a flow diagram illustrating the process of authorizing an equity valuation request, executing an equity valuation using the processing server of FIG. 6 and issuing a transaction message in accordance with exemplary embodiments.

FIG. 8 is a block diagram illustrating the contract engine of FIG. 1 for managing, processing, and executing the contractual arrangements between parties in accordance with exemplary embodiments.

FIG. 9 is a flow diagram illustrating the process of authorizing a homeowner’s request in accordance with exemplary embodiments.

FIG. 10 is a flow diagram illustrating a process for selling cryptocurrency and writing to a transaction blockchain in relation to a homeowner selling equity in accordance with exemplary embodiments.

FIG. 11 is a block diagram illustrating a cryptocurrency trading engine or cryptocurrency portfolio engine in accordance with exemplary embodiments.

FIG. 12 is a flow diagram illustrating the process for writing to a cryptocurrency portfolio blockchain in accordance with exemplary embodiments.

FIG. 13 is a flow diagram illustrating the process of organizing a data ensemble from the data blockchain system of FIG. 1, recording this data ensemble on the data blockchain system, and transmitting a data message in accordance with exemplary embodiments.

FIG. 14 is a flow diagram illustrating the process for writing payment data to and extracting updated data from the blockchain system in accordance with exemplary embodiments.

FIG. 15 is a flow diagram illustrating the process for requesting a valuation from the blockchain system and recoding to the blockchain a paydown amount in accordance with exemplary embodiments.

FIG. 16 is a flow diagram illustrating the process for recording payment data to the blockchain system or using the blockchain system to identify investor contacts to deliver an inadequate funds message in accordance with exemplary embodiments.

FIG. 17 is a flow diagram processing a received default notice using data obtained by the blockchain and determining and recording in the blockchain system a change in investor in accordance with exemplary embodiments.

FIG. 18 is a flow diagram illustrating the process for extracting contract provisions data from the blockchain system and for causing activation of a payment engine to generate and write payment data to the blockchain system in accordance with exemplary embodiments.

FIG. 19 is a flow diagram illustrating the process for updating the blockchain system in relation to an initiated EBP arrangement in accordance with exemplary embodiments.

FIG. 20 is a flow diagram illustrating the process for adding balance entry data to the blockchain system in relation to unscheduled outcomes in accordance with exemplary embodiments.

FIG. 21 is a flow diagram illustrating the process for extracting contract data from the blockchain system, computing an offer data ensemble, and writing the offer data ensemble to the blockchain system in relation to a payment change request in accordance with exemplary embodiments.

FIG. 22 is a flow diagram illustrating the process for computing a required allocation, causing a bank transfer to execute, and updating the blockchain system in relation to an accepted payment offer in accordance with exemplary embodiments.

FIG. 23 is a block diagram illustrating a transaction engine in accordance with exemplary embodiments.

FIG. 24 is a flow diagram illustrating a buy offer process and updating to the blockchain system in relation to an accepted buy offer in accordance with exemplary embodiments.

FIG. 25 is a block diagram of a computer system as may be used to implement certain features of some of the embodiments.

## DETAILED DESCRIPTION

### *Dynamic Housing Data Structures*

Various of the disclosed embodiments concern dynamically updating a data structure that defines logical relationships between multiple entities to adapt to real-time fluctuations in conditions defined by multiple data streams that affect said logical relationships, such as those between parties to dynamic housing instruments. More particularly, embodiments of the invention concern data structures in the form of DOOR instruments. DOOR stands for "dynamic owner-occupied real estate." By creating appropriate underlying dynamic data structures, that is, by choosing appropriate DOOR instruments, storing the associated data on traditional databases and one or more publicly verifiable blockchains, and using blockchain-based methods to settle key transactional components, embodiments of the invention enable the computer to dynamically modify web pages and create graphical user interfaces in real time that are capable of providing homeowners and service providers with an integrated, transparent, low-cost experience.

DOOR instruments as a class provide homeowners, mortgagees, and equity investors with new methods to live in and invest in owner-occupied real estate. Embodiments of the invention center on particular balancing engines that monitor various factors that affect the criteria that define rights and obligations with regard to said real estate and accordingly dynamically adjust said rights and obligations in real time. The balancing engine is only one aspect of a DOOR instrument. Other aspects include, but are not limited to, various data engines that support the dynamic data structure that comprise the DOOR instrument.

Some DOOR instrument balancing engines translate directly into commercially valuable arrangements between homeowners and investors who finance the homeownership. Several such "direct arrangement" variants provide easy to understand embodiments in the description that follows. The invention, however, is more general. It exploits the use of a certain set of balancing engines capable of solving the technical problems that result in the fragmentation and lack of coordination that currently characterize computer technology in the field of residential real estate services and finance. In many such cases the arrangement that would be implicit in the balancing engine is not the housing arrangement made available to homeowners and investors who finance ownership. The balancing engine resides in the background, creating computer technology that provides homeowners and service providers with an integrated, transparent, low-cost experience with respect to a different arrangement entirely.

Before discussing a more general level of the invention, it is useful to consider as examples and for the purpose of explanation, some direct arrangements that DOOR instruments make possible and how the invention operates for those arrangements.

*DOOR Implementations of Housing Finance Arrangements*

DOOR instruments are data structures that permit allocations between the homeowner and equity investor and that are preferably non-linear and dynamic. In a preferred embodiment of a DOOR instrument, the sharing rule can be more general than a linear schedule over various home value ranges, and it can be dynamic. That is, the rule itself is a data structure that may change as a result of economic conditions or the value of the home. This approach allows the sharing rule to address many problems that are irreconcilable under a piecewise linear, static approach. These problems include, but are not limited to: (1) suboptimal homeowner incentives to maintain the home; (2) financial strategies for the homeowner that are not sensible, e.g. effectively putting a large share of wealth in a single leveraged asset that is correlated with life outcomes so that home value and total wealth tend to decline sharply at the same time as income declines or a job loss occurs; (3) the inability of the investor to receive returns on owner-occupied housing in a pure and transparent form; (4) the inability to increase borrowing against the home without a costly refinance of the equity instrument; (5) the inability to value instruments easily for purposes of creating or accepting new investments in investment pools; and (6) the presence of incentives to strategically refinance equity instruments when home values fall. Some of these problems underlie the lack of coordination between housing finance and services functions as well as the fragmentation that characterizes current computer technology that is directed toward real estate finance and services.

Importantly, under static approaches the arrangement becomes more favorable toward the homeowner or investor as time passes and economic conditions change. For the arrangement to be viable, there must be either restrictions on homeowner refinancing opportunities or the terms need to favor the investor. The dynamic nature of DOOR instruments make it possible in certain embodiments to obviate these restrictions in ways that result in a superior deal for homeowners, preserve at least a market rate of return for investors, and free investors from losses due to prepayment. DOOR arrangements typically also extend to the accompanying mortgage, in some variants eliminating the impact of prepayments on the mortgagee/investor and allowing features, such as automatic, nearly costless, and online refinance of the mortgage when mortgage rates decline.

Embodiments of the invention concern the use of a class of non-linear algorithms to create DOOR instruments that dynamically maintain an economic balance between the homeowner and investor on an ongoing basis. At each moment, treating the arrangement as a joint venture, a DOOR balancing engine acts as an analytic machine that calculates changes in equity shares or other accounts that precisely capture each party's net contribution to the venture. As a result of the ongoing economic balance, the arrangement is neutral in the sense that it does not become misaligned, favoring one party over the other, and results in each party earning a market rate of return after adjusting for what they have received from and contributed to the arrangement. It also is possible to add subsidies or a favorable rate of return versus the market for either party, but any such feature is explicit -- useful, for example, when the investor is a government or private entity that wishes to provide subsidized housing to citizens or employees.

In DOOR arrangements aimed at economic balance, one or more residual accounts are required to do the balancing. These residual accounts may consist of equity shares, debt or debt-like interests secured by the home, fluctuating payments between the parties, cash or investment accounts, cryptocurrency balances, or other vehicles, and any one arrangement may employ more than one residual account.

*Discussion*

Embodiments of the invention create computer technology in the form of appropriate underlying dynamic data structures that enable the computer to modify web pages and create graphical user interfaces capable of providing homeowners and service providers with an integrated, transparent, low-cost implementation of housing finance arrangements.

The following discussion includes several examples which first describe a particular housing arrangement, along with a qualitative indication of how a DOOR instrument works in the arrangement, and then explain an implementation of the invention. The description of the housing finance arrangements permits the definition of crucial terms.

MM-0 and MM-1, the two housing finance arrangements described as initial examples, can be implemented as direct arrangements by using suitable DOOR instrument balancing engines. Subsequent examples include instances that are not implementations of direct arrangements. The housing finance arrangement examples as a whole provide an important backdrop to describe further embodiments of the invention disclosed herein. The embodiments are drawn from a general claimed class of DOOR instrument variants that include ANZIE-DOOR (see WO 2010/085481 A1). It is important to keep in mind that some DOOR instrument variants in the class implement balancing engines that enable the computer to modify web pages and create graphical user interfaces that are capable of providing homeowners and service providers with an integrated, transparent, low-cost experience, even if the real estate arrangement differs from the direct arrangement inherent in the balancing engine.

The following discussion of embodiments of the invention begins with a section which provides a description of some aspects of the required technical environments and a list of some of the relevant parties to the associated housing finance arrangements and transactions. Immediately subsequent sections include:

(i) a description of the MM-0 housing finance arrangement, an arrangement with only two parties, a homeowner and an investor who provides housing finance;

(ii) an explanation of how one embodiment of MM-0 is implemented by the invention that illustrates how the computer technology comprising the invention solves the problem of fragmentation and lack of coordination inherent in current computer technology for a direct arrangement;

(iii) a description of the claimed class of data structures (DOOR instruments) and the theory behind it, using one particular residual account, earned equity, and emphasizing the associated balancing engines;

(iv) an indication of the extent of the disclosed class by describing applications involving: residual accounts other than earned equity; multiple homeowners, investors, or mortgagees; accrual under a residual account that flows to a party other than the homeowner; and the ability to shift seamlessly between neutral DOOR instruments;

(v) a description of the MM-1 housing finance arrangement, an arrangement that differs from MM-0 because multiple independent service providers are involved in addition to the homeowner and the investor providing housing finance;

(vi) an explanation of how an embodiment of MM-1 is implemented by the invention that illustrates how the computer technology comprising the invention solves the problem of fragmentation and lack of coordination inherent in current computer technology for this more complex direct arrangement;

(vii) a description of a scheduled earned equity housing finance arrangement that cannot be implemented as a direct arrangement;

(viii) an explanation of how one embodiment of the scheduled earned equity finance arrangement is implemented by the invention that illustrates how the computer technology comprising the invention solves the problem of fragmentation and lack of coordination inherent in current computer technology for an arrangement that is not a direct arrangement.

These sections are followed by others that describe further embodiments and aspects of the invention.

*Various Parties and Technical Environment Aspects*

Multiple parties are involved at the point of purchase, at the point of sale, and during the ownership period for a particular home and homeowner. During the period of ownership, typically there is at least one homeowner and one financing party (an "investor"). If the financing party is a mortgagee, then there may be mortgage guarantors, mortgage insurers, mortgage servicers, and other parties involved with the mortgage. There may be a maintenance contract for the house with a party providing maintenance services. The maintenance servicer or appraisers may periodically provide an assessment of the value of the home based on its current condition. There is a managing entity that oversees the operation of the ownership arrangement and the associated computer technology.

In some embodiments, the investor may be a portfolio fund that holds a portfolio of equity or debt interests in homes on behalf of "portfolio fund investors" who own stakes in the fund, and in further embodiments, this portfolio may be embodied in a tradable cryptocurrency in which case the investor is a "cryptocurrency portfolio fund." Whether or not a cryptocurrency is involved, the portfolio fund operates as an investment fund, collecting investments from portfolio fund investors who from time to time may invest additional funds in the portfolio held by the portfolio fund or withdraw funds from the portfolio resulting in additions or subtractions to the portfolio.

In addition to a homeowner and investor, there may be various third parties. A "third-party financing entity" may provide "third-party housing finance" that supplements the housing finance provided by the investor. In addition, and possibly distinct from the third-party financing entity may be at least one "third-party service provider" that provides services with respect to either the financing provided by the investor, the financing provided by the third-party financing entity or both. For example, if the third-party housing finance is a mortgage, the third-party financing entity is the mortgagee, and, separate from the mortgagee, there may be a mortgage servicer and a mortgage insurer, two third-party service providers.

The invention requires and enables a deep computing and communication environment. Each instrument is continuously updated with respect to the value of residual accounts and the share among various parties in such accounts and in the associated housing stakes. As a result, central to the invention is a dynamic data structure that constantly updates the values and shares based on fluctuating economic variables interacting with real-time decisions of the parties and that dynamically generates a corresponding user experience. Various events such as refinancing mortgages, changing payment amounts, or even changing the applicable DOOR variant itself require actions or approvals by various parties. Such events include purchase and sale of the underlying properties. These events require an added layer of communication devices and software to enable or improve the functioning of computing or other devices devoted to the task.

Although there are other ways to implement the invention, we illustrate here by considering implementations that rely on blockchain methods and that require use of certain purchase parity DOOR variants, which are defined and described in a later section. Blockchain provides a way to make data immutable and verifiable and therefore may be crucial for making the technical solutions embodied in the invention credible to the various parties of interest in the underlying housing arrangements.

Blockchain ledgers store data in an immutable and transparent way. There are many possible ways to implement and use blockchains consistent with our innovation including at least: (1) a centralized system in which data is anchored to the blockchain using a third-party method that provides the application layer between the user and the blockchain; (2) the use of smart contracts to organize data and facilitate transactions by saving smart contract states to a public blockchain with much of the work occurring off chain to increase efficiency; and (3) developing a custom private blockchain. In the embodiments below, we refer to a "blockchain system" to mean both a blockchain and a method of implementation. It should be appreciated that the details of implementation are by way of example only and are not in any way meant to be limiting.

In the embodiments that follow, one or more blockchain systems are used for the following purposes:

(1) **Housing Instrument Data and History.** One or more "housing instrument data blockchains" contain the data and history of each housing instrument in an immutable form along with the current value of relevant economic variables. The associated blockchain systems form a transparent basis for queries by investors, homeowners, servicing entities, other blockchain systems, or other parties concerning current DOOR instrument shares, values, or other elements using various computing or communication devices.

(2) **Transaction Data.** One or more "transaction blockchain systems" might be used to complete part or all of certain transactions including at least refinancing the mortgage underlying a DOOR instrument, changing payment rates, shifting among neutral DOOR instruments, or buying or selling the underlying home with the concomitant creation or retirement of the associated DOOR instrument.

(3) **Cryptocurrency Operation.** One or more "cryptocurrency blockchains" might include data over time on the housing interests held by various cryptocurrencies that embody portfolios of such interests. Using purchase parity variants results in the property that, across a wide variety of DOOR instruments that use different residual accounts and differ in other ways, the investor continuously earns precisely the economic return on the underlying home. These instruments can be pooled, creating a portfolio of pure housing returns that can serve as the basis of a cryptocurrency operated through a blockchain system. National, regional, or world housing returns can be simulated through the underlying pool, resulting in a hard currency backed by housing returns of a certain type. Soft fiat currencies, such as the dollar would fluctuate continuously relative to this hard currency.

Implementing the dynamic data structures that comprise DOOR instruments requires an immense, coordinated communication and computing environment in which various devices, software, and the blockchain systems that are part of the invention enable or enhance the technical operation of the underlying devices. To make this aspect more concrete, consider a narrative example.

Suppose that one embodiment involves purposes (1) and (2) for a wide variety of DOOR instruments, some of which are in purchase parity form and otherwise are appropriate for inclusion in the cryptocurrency pool, i.e. purpose (3). A homeowner purchases a home, financing it through a DOOR purchase parity embodiment that involves mortgage payments, additional payments, and accrual of earned equity in favor of the homeowner. Later, the homeowner wants to reduce the rate at which additional payments are made.

Consider first, a purchase transaction. To complete the purchase, it is necessary to query potential investors and possibly also potential mortgagees and then perform various actions and secure various approvals from multiple parties. For the dynamic instrument embodied in the invention, the instrument terms are varying in real time along with the relevant market variables. Thus, time is of the essence, lest the quoted terms for the initial instrument move away from being consistent with current market conditions. Various communication devices and software, such as mobile phone applications, are required to provide notifications and secure approvals from the relevant parties. Otherwise the basic computing and communication devices that are central to the DOOR system cannot work efficiently.

Now consider the homeowner's later request for a reduction in the rate at which the homeowner makes additional payments. As with the home purchase, the rate change requires a complex set of actions and approvals that are contingent on each other. The homeowner must initiate the request for the change in rate. Approval under the terms of the instrument typically is necessary because the payment rate affects the accumulation of earned equity and the instrument may require certain minimum levels of earned equity or of earned equity accrual to ensure that the homeowner has an appropriately powerful incentive to maintain the home. In addition, approval of payment rate changes may be required by the investor or investors in the instrument. Again, time is of the essence because the changed payment rate has a dynamic impact on the accrual of earned equity and on the homeowner's cash flows in a way that depends on market conditions. Various communication devices and software, such as mobile phone applications, are required to provide notifications and secure approvals from the relevant parties, as well as to determine whether the change is permissible under the terms of the instrument.

Finally, on top of the structure implementing purposes (1) and (2) is the cryptocurrency. If the cryptocurrency is based on an index idea, such as a balanced portfolio of homes across a nation, continuous adjustments and interactions with homeowners, investors, and other blockchains are required. For instance, consider a cryptocurrency backed by a pool of DOOR instruments covering a representative set of homes across the United States, in effect creating a portfolio of housing returns for an underlying pool of homes that form or replicate a U.S. housing index. If the DOOR instruments are purchase parity MM-0 variants, the equity position underlying the cryptocurrency continuously shrinks, and offsetting cash flows accrue to the cryptocurrency. In addition, certain underlying homes are sold, converting the underlying DOOR instrument positions to cash. Because the cryptocurrency aims at replicating a balanced set of housing returns across the United States, it is necessary to seek out new DOOR instrument investments with the accumulating cash, investments that not only move the cryptocurrency close to full investment in housing, but also do so in a balanced way. At any given time, for example, more investments in homes located in northeastern cities may be required to reestablish balance. Balance might require sales of DOOR investment shares, as well as purchases. The cryptocurrency managers or artificial intelligence entities representing them might query one or more other housing instrument data blockchain systems for suitable purchase candidates and then make offers to the associated investors. They might also offer properties for sale through blockchain systems or otherwise. The queries might extend outward to real estate agents or other parties, informing them of the presence of an immediately interested and very liquid buyer or seller. Because the cryptocurrency is in real-time use, time is of the essence, and various communication devices and software, such as mobile phone applications, are required to make offers of purchase or sale, complete the required transactions, and secure approvals from the relevant parties.

This narrative example, as well as more technical examples presented below, is illustrative rather than exhaustive with respect to the technical aspects of the invention.

*MM-0 Housing Finance Arrangements*

Housing finance arrangements for a single owner-occupied property implemented using DOOR instruments may include multiple investors, multiple homeowners, and multiple mortgagees holding the same or different debt interests secured by the property. One or more of the investors or homeowners also may be a mortgagee. Furthermore, there may be debt-like instruments that do not involve interest payments but, instead, equivalent credits that enter into the balancing calculation.

We begin with MM-0, a very simple class of housing finance arrangements:

(i) There is at most only one mortgage and no debt-like instruments;

(ii) When there is a mortgage, the investor is also the mortgagee, providing all of the home finance by contributing equity as an investor and also lending money secured by the home;

(iii) The mortgage is non-recourse versus the homeowner, with no implications for the homeowner if funds at sale are inadequate to pay the principal due on the mortgage after making any required payments to the homeowner. Thus, if there is a shortfall, the investor as mortgagee simply absorbs the loss; and

(iv) The DOOR instrument variant is adapted to implement MM-0 directly, an "MM-0 variant" of DOOR.

MM-0 housing finance is characterized by the following operational features:

(1) **Conventional Equity Position Held by the DOOR Investor.** A DOOR instrument investor funds the conventional equity position in a home that also may be financed by a mortgage. If there is a mortgage, the mortgage financing is provided by the DOOR investor. If there is no mortgage, the DOOR investor provides all of the funding as equity.

(2) **Homeowner Obligations.** The homeowner is responsible for any mortgage payments (both principal and interest), property taxes, maintaining the home, and other obligations, possibly including scheduled payments that accumulate, at least in part, in favor of the DOOR investor. In the case where there is no mortgage, typically there are scheduled payments, but scheduled payments also may supplement mortgage payments.

(3) **Earned Equity Held by the Homeowner.** The homeowner accrues earned equity, which is a percentage of home value that the DOOR investor is obligated to pay the homeowner upon sale of the home or other termination of the DOOR instrument. Earned equity accumulates based on the homeowner's net contribution to the venture as specified by a dynamic algorithm, the core of the engine that creates economic balance. Major positive elements of that net contribution are loan payments, property tax payments, scheduled payments, if any, and maintenance of the home. The major negative element is the imputed rental value of living in the home. If there is a down payment by the homeowner, it increases earned equity directly as a percentage of home value. Earned equity is an unleveraged equity interest in the home, a percentage of total home value at any given point in time. Earned equity has priority at sale over the debt and equity interests held by the investor.

(4) **Robust Maintenance Incentive.** Contractual terms mandate that failure to maintain the home in a condition at least as good as at the time of purchase results in a dollar-for-dollar reduction in earned equity that would be paid to the homeowner at termination. Because the earned equity position comprises unleveraged equity in the home, the homeowner's maintenance incentives remain robust in the face of situations in which the home is worth less than the outstanding mortgage debt.

(5) **Periodic Adjustment that Implements Economic Balance.** The DOOR balancing engine is an analytic engine that continuously adjusts a residual account to compensate the party making a net contribution. In the case of MM-0, the residual account is the homeowner's earned equity and the balancing mechanism is based on the purchase parity accumulation algorithm described below. The balancing engine translates the homeowner's net contribution during each period into an appropriate increase in earned equity, that is, an increase that is precisely compensatory in expectation for both parties when viewed with respect to the current period.

The terms of DOOR instruments, including MM-0, vary depending on market conditions. A fully dynamic instrument incorporates the current values of all relevant parameters such as interest rates, the value of the underlying home, the rental rate for the home, depreciation rates for the home, property tax rates, and other variables. Making instruments fully dynamic eliminates certain options associated with them. For example, it is not worth refinancing a fully dynamic DOOR instrument because the terms of the new instrument are the same as the old one, reflecting current market values. The option to refinance is worthless. In contrast, this option has value under conventional mortgage contracts, and the mortgagor has an incentive to prepay the mortgage and refinance when mortgage rates fall, with ensuing consequences: the initial price of borrowing is higher, there is a dilemma of when to exercise for the homeowner, and valuation of mortgages is more difficult because it depends on prepayment behavior.

Some DOOR implementations use approximations: The DOOR contract only adjusts to exact, real-time market values with respect to a subset of the relevant parameters, using approximations for the others. The result is an instrument that only approximates zeroing out option values, but one with more predictable outcomes for quantities such as earned equity. In other DOOR implementations the goal is to come as close as possible to the fully dynamic version of the instrument.

Note that MM-0 housing finance arrangements can operate with or without a mortgage. In the case where there is no mortgage, typically there needs to be payments from the homeowner into the venture or directly to the investor to create enough of a net contribution from the homeowner to generate significant earned equity. These scheduled payments may be a function of home value, may fluctuate to achieve and maintain a target level of earned equity, or may vary in other ways depending on the nature of the arrangement.

The dynamic nature of DOOR instruments allows adding many other features. Some that might be particularly appealing additions to MM-0 or other variants are:

(A) **Reducing the Level of Payments as an Option or as a Basis Underlying Rescue Provisions for Financially Distressed Homeowners.** If homeowners get into financial distress, provisions of the DOOR arrangement may permit them to omit scheduled payments or mortgage payments for a period of time or up to a total amount. There is no impact on the investor because the payment reductions are fully offset by slower accrual of earned equity or actual reductions in earned equity. In variants that involve third-party mortgages, that is, where the investor is not also the mortgagee, the investor steps in and makes the mortgage payments omitted by the homeowner. Again, the investor is compensated exactly by a reduction in the investor's earned equity obligation at sale. The possibility of reducing the level of payments is general, not limited to distress situations, and can be included as a homeowner option.

(B) **Partial Mortgage Payoff to Limit the Loan-to-value ("LTV") Ratio or Equivalent Reductions in Scheduled Payments.** DOOR contract provisions may require the investor to partially pay off or reduce the mortgage obligation of the homeowner to limit the LTV ratio. In cases where there is a third-party mortgage with priority over earned equity, the LTV level may be set to guarantee that the investor's conventional equity exceeds the earned equity due at sale. A desirable way to structure the pay-off under MM-0 is to remove part of the loan, lowering the payment, but leaving the terms otherwise the same, in effect creating a scaled-down version of the original loan. Without the LTV ceiling, earned equity accumulates very fast in low-value situations, potentially swallowing up the remaining available home equity entirely. The DOOR mechanism provides the DOOR investor exact economic compensation for any paydown because reducing the loan payments reduces the rate at which earned equity accrues in a manner that is exactly compensatory. Where there is no mortgage, but there are scheduled payments under MM-0, the payments can be reduced in an equivalent manner in low-value situations with a compensating reduction in the accrual of earned equity.

(C) **Additional Homeowner Payments.** The DOOR contract may allow homeowners to make additional optional or regularly scheduled payments to or for the benefit of the investor. These payments increase the accrual of earned equity in a way that exactly compensates the homeowner for making them.

(D) **Targeted Earned Equity.** The DOOR arrangement may encompass accumulation of earned equity up to a target level with payments adjusting thereafter to zero out the future net contributions of the homeowner and thereby forestall any additional accumulation. The homeowner may be permitted to move the target amount of earned equity up and down within certain limits through an adjustment in ongoing payments made to achieve the target over time or through lump-sum payments in either direction to implement the adjustment immediately.

These features and many others are easy to add because the DOOR balancing engine is an analytic mechanism that fully compensates the parties for any changes in their contributions to the arrangement considered as a joint venture. Many of the possible features require that the parties to the arrangement be notified and make interlocking and interdependent decisions on a real-time basis.

The next section illustrates how the invention creates computer technology that allows a representative embodiment of MM-0 to be implemented in a way that enables the computer to modify web pages and create graphical user interfaces that are capable of providing homeowners and service providers with an integrated, low-cost experience, what is missing under current technology.

*Implementation of an Embodiment of an MM-0 Housing Finance Arrangement*

FIG. 1 illustrates a system **100** comprising the macro system architecture for integrating centralized and decentralized computer systems to create optimized dynamic data structures that accurately reflect housing market conditions to facilitate home finance transactions and produce a unified user experience.

In system **100,** a transaction may occur between the computing device of a homeowner **102** and an investor **104** that is embodied in a home finance instrument and facilitated by a managing entity **106** and an associated computer interface or interfaces. The managing entity may oversee a number of computer systems, including one or more balancing engines **108,** data engines **110,** and contract engines **112.** A number of third parties **114** and associated computer interfaces may also be involved in the transaction. The system may also include an application layer **116** that receives, processes, and transmits data and provides the requisite computer architecture to manage user interfaces for the parties involved in a specific transaction. The application layer may also interact with one or more trading engines **118** and/or one or more blockchain systems **120.**

To describe how system **100** operates, consider implementation of an embodiment of the MM-0 housing arrangement. We focus on the ownership period and begin with the simple case of a homeowner **102,** a single investor **104,** and 100% equity finance, that is, no mortgage. At the core of the invention is a balancing engine **108** embodied in a processing unit **206,** at least one receiving unit **202,** and at least one transmitting unit **204** operated on a processing server by the managing entity.

FIG. 2 illustrates an embodiment of the balancing engine **108** of system **100.** The balancing engine **102** may include a database **208,** receiving unit **202** configured to receive data over one or more networks, a processing unit **206** that performs the functions of the balancing engine **108** described herein, and a transmitting unit **204** configured to transmit data over one or more networks.

The balancing engine **108** assesses over time the ongoing contributions of the homeowner **102** and investor **104,** considering the housing arrangement between them as a joint venture. In one embodiment, the investor **104** initially finances the entire home with equity finance, i.e. no mortgage, the homeowner **102** makes payments to the investor **104,** the homeowner **102** makes property tax payments, the homeowner **102** maintains the home, and the homeowner **102** lives in the home. In this embodiment, the homeowner's **102** net contribution equals (i) the payments to the investor **104,** (ii) the property tax payments, (iii) the maintenance, and (iv) other obligations such as insurance, less (v) what would be charged as rent (the "implicit rent"), which is the value of living in the home. The balancing mechanism requires a residual account stored on a centralized **208** or decentralized database **120** to reconcile the interests of the homeowner **102** and investor **104.** In this embodiment, the residual account consists of an unleveraged interest in the home, which the investor **104** must pay the homeowner **102** upon sale of the home or termination of the financing arrangement, and the payments are set so that the homeowner's **102** net contribution is positive. Because the unleveraged equity accrues based on homeowner **102** net contributions, we call it "earned equity."

In system **100,** the data for input into the balancing engine **108** resides in a housing instrument data blockchain system **120.** FIG. 3 illustrates an embodiment of the data blockchain system **120** of system **100.** The data includes a time series of all the contribution elements including at least homeowner **102** payments to the investor **104.** The housing instrument data blockchain system **120** has a receiving unit **302** configured to receive data over one or more networks as well as a database **308** for storing data. The blockchain system **120** also includes a processing unit **306** with an access protocol and is protected and anonymized using methods familiar to those skilled in the art such as encryption, state channels, and public and private keys. The access protocol defines various levels of access to data on the blockchain system **120,** as well as levels of permission to write new data onto the blockchain system **120.** Persons or entities seeking access to the blockchain system **120** submit access authorization data that determines through the access protocol, the level of access to data as well as the extent of the ability to write on the blockchain accorded to that person or entity. The housing instrument data blockchain system **120** has a transmitting unit **304** configured to transmit data over one or more networks.

FIG. 4 illustrates an embodiment of an application layer **116** of system **100** with a receiving unit **402** designed to receive data over one or more networks, a transmitting unit **404** to broadcast data over one or more networks, a processing unit **406** with the computer architecture to support user interfaces for relevant parties, and a database **408** for storing data. The managing entity computer system **106** controls the balancing engine **108,** which transmits data to the blockchain system **120** via the application layer **116.**

An embodiment can be understood with reference to FIG. 5, a flow diagram (500) illustrating the process for execution of an equity rebalancing request using the processing server of FIG. 4 and issuing a transaction message in accordance with exemplary embodiments. Periodically, the managing entity or an artificial intelligence entity representing it, sends a message to a receiving unit of the balancing engine initiating a balancing entry onto the housing instrument data blockchain (502). The balancing engine transmits through a transmitting unit a query of the housing instrument data blockchain system along with access authorization data to extract relevant data on contributions and other elements, including the governing algorithm for computing earned equity under the contract covering the home finance arrangement, itself encoded on the housing instrument data blockchain (504). The housing instrument data blockchain system implements its access protocol to determine if the balancing engine has access to the requested data. After verification that access is permitted, the balancing engine receives this data via a receiving unit, and the processing unit associated with the balancing engine updates the earned equity balance (residual account) of the homeowner (506). The balancing engine sends this updated balance along with details of the computation to a transmitting unit, which writes it to the housing instrument data blockchain along with details of the computation itself (508). The balancing engine sends via a transmitting unit, the updated earned equity value to a website accessible to the homeowner and the investor where the new value is reported (510). The balancing engine via a transmitting unit alerts the homeowner and the investor (or an artificial intelligence entity representing the investor), who may be offline, of the updated earned equity value via email or an SMS message through a mobile phone or other receiving device (512).

In system **100,** the input data for the balancing engine **108** resides on the housing instrument data blockchain **120** and is generated by multiple data engines **110** residing on one or more servers controlled by the managing entity **106.** Each data engine **110** operates for the purposes of creating, gathering, updating, processing, storing, and communicating at least one time series of at least one data parameter.

FIG 6. illustrates a valuation engine, which provides an exemplary embodiment of a data engine **110** of system **100,** operating on a processing server controlled by the managing entity **106.** A valuation engine **110** creates and updates a time series of house values for the home that is subject to financing by writing to the housing instrument data blockchain **120.** One exemplary embodiment of a valuation engine **110** has a receiving unit **602** that receives data over one or more networks, a transmitting unit **604** that transmits over one or more networks, a processing unit **606** with the computer architecture to execute the exemplary embodiments, and a database **608** for storing data.

An embodiment can be understood with reference to FIG. 7, a flow diagram (700) illustrating the process of receiving an equity valuation request, executing an equity valuation using the processing server of FIG. 6, and issuing a transaction message in accordance with exemplary embodiments. The valuation engine receives a data request corresponding to the equity valuation request (702). The valuation engine through one or more receiving units collects third-party valuations via a query (704). The valuation engine encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine. Through a transmitting unit, the valuation engine writes the operative valuation to the housing instrument data blockchain along with a timestamp and a record of the calculation (714), including the third-party and non-third-party valuations, the methodology used to compute the non-third-party valuations, and the methodology used to compute the operative valuation (716). The valuation engine generates a data message (718) and sends via a transmitting unit (720), the new operative valuation along with the third-party and non-third-party valuations to a website accessible to the homeowner and the investor where these valuations are reported. The valuation engine via a transmitting unit alerts the homeowner and investor (or an artificial intelligence entity representing the investor), who may be offline, via email or an SMS message through a mobile phone or other receiving device of the new operative valuation if they have requested updates of the operative valuation generally or upon certain values being realized.

To compute non-third-party valuations, the valuation engine requires data from third-party sources including at least housing transaction data. A receiving unit of the valuation engine receives data from third-party providers automatically or when prompted by the managing entity. The valuation engine formats this data appropriately and adds the data to a housing database after processing it to make it consistent with the data structure in the database. Data may include appraisals of the value of the home being financed or of other homes.

Other data elements, including at least implicit rent, depreciation, and property tax liability, are governed by other data engines operating in a manner similar to the valuation engine.

The managing entity **106** maintains, on a least one processing server controlled by a managing entity, a contract engine **112** embodied in at least one processing unit **806,** at least one receiving unit **802,** and at least one transmitting unit **804** for purposes of initiating, implementing, enforcing, and updating the housing finance arrangement between at least a homeowner **102** and an investor **104.** Input data for the contract engine **112** resides in a housing instrument data blockchain system **120.**

FIG. 8 illustrates an exemplary embodiment of the contract engine **112** of system **100** with a receiving unit **802** designed to receive data over one or more networks, a transmitting unit **804** to broadcast data over one or more networks, a processing unit **806** with the computer architecture to execute the exemplary function of the embodiment described, and a database **808** for storing data.

FIG. 9 is a flow diagram illustrating the process of addressing a homeowner's request in accordance with exemplary embodiments (900). The homeowner may want to change the level of payments to the investor, effectively refinancing the home finance arrangement.

The homeowner accesses the website operated by the managing entity and requests a change in the level of the payment, generating a transmission message sent through a transmitting unit to the receiving unit of a contract engine controlled by the managing entity (902). The contract engine processing unit sends through a transmitting unit a query of the housing instrument data blockchain system along with access authorization data to extract relevant information including necessary contract information and other data including at least the level of earned equity (904). The housing instrument data blockchain system implements its access protocol to determine if the contract engine has access to the requested data. After verification that access is permitted, the contract engine receives this data via a receiving unit, and the processing unit associated with the contract engine determines if the change in payment is permissible under the contract without further investor approval (906). If the change is not permissible, the contract engine generates a denial message (908) and sends it to the website where it is displayed (910). The contract engine simultaneously alerts the homeowner, who may be offline, via email or an SMS message via a mobile phone or other receiving device informing the homeowner whether the change in payment level has been approved or denied and, if approved, asking the homeowner to confirm the change (912). If the change is confirmed, a confirmation message is generated, sent through a transmitting unit associated with the website to a receiving unit associated with the contract engine. The contract engine transmits through a transmitting unit a query of the housing instrument data blockchain system along with access authorization data to secure permission to write the change consisting of at least the change in payment level along with the date and time the change is effective (914) onto the housing instrument data blockchain. The housing instrument data blockchain system implements its access protocol to verify that the contract engine has the requisite permissions. After receiving verification of the permissions through a receiving unit, the contract engine, through a transmitting unit writes the change data onto the blockchain, creating a record of the change in level of payments on the blockchain (916).

The contract engine, through a transmitting unit, generates (918) and sends (920) a second confirmation message to a webpage, and the webpage, which is visible to the homeowner and investor, reports that the change is in effect as of the specified date and time. The contract engine through a transmitting unit simultaneously alerts the homeowner and investor, who may be offline, via email or via an SMS message accessible by mobile phone or other receiving device that the change is in effect as of the specified date and time. This configuration results in an almost instantaneous, low-cost change in the terms of the financing arrangement via the same website that allows the homeowner to track payments made and earned equity accumulated. In future iterations of earned equity accumulation, the balancing engine takes into account the different payment level, adjusting the amount of accumulation accordingly so that the impact is economically exactly what is appropriate for both the homeowner and the investor. The investor is not affected in net by the change in financing terms because the adjustment in the rate of accumulation of earned equity precisely offsets whatever the change in payment level is.

In a different embodiment, there is a mortgage component, as well as an equity component, in the financing arrangement, the investor holds both positions, and part or all of the payment from the homeowner to the investor is a mortgage payment. In this embodiment, the same kind of mechanism as the one just described can be employed with the same result: Refinancing can be low-cost, nearly instantaneous, and without any net economic consequence for the investor.

An embodiment can be understood with reference to FIG. 10, a flow diagram illustrating a process for approval of an equity adjustment and issuance of a transaction message requesting authorization and/or issuance of a transaction message confirming the transaction in accordance with exemplary embodiments (1000). Also referring to the prior embodiment, a homeowner may wish to sell some of the homeowner's earned equity back to the investor in exchange for proceeds in the form of a specified fiat currency under a contractual right to do so without further investor approval, where in a particular embodiment the investor is a cryptocurrency portfolio fund affiliated with the managing entity, and the cryptocurrency portfolio fund holds the investor-side housing equity interest in the particular home.

The homeowner accesses a "managing entity website" controlled by the managing entity and initiates a request to buy or sell equity, generating a transmission message sent through a transmitting unit to the receiving unit of a contract engine controlled by the managing entity (1002). The data for input into the contract engine resides in a housing instrument data blockchain. The contract engine transmits through a transmitting unit a query of the housing instrument data blockchain system along with access authorization data to extract relevant data including the applicable contract terms and the current values of relevant parameters, including at least the current operative home valuation, stored on the blockchain (1004). The housing instrument data blockchain system implements its access protocol to determine if the contract engine has access to the requested data. After verification that access is permitted, the contract engine receives the data via a receiving unit, including contract data pertinent to the question of whether the transaction is permissible (1006), and the processing unit associated with the contract engine determines whether the requested transaction is permissible under the contract without further investor approval given the current value of the relevant parameters extracted from the housing instrument data blockchain (1008). If the requested transaction is not permissible, the processing unit associated with the contract engine generates a denial message (1010) and transmits the denial message to the homeowner and investor (or an artificial intelligence entity representing the investor), who may be offline, by email, SMS message, or otherwise (1012).

The assessment comprises tasks including at least determining whether a minimum level of earned equity will remain after the requested sale of earned equity by the homeowner is carried out, a level sufficient to support the homeowner's maintenance obligation. As part of the assessment, the contract engine computes the amount of equity in percentage (of home value) terms and the corresponding dollar amount based on the house value extracted from the housing instrument data blockchain for the requested sale of equity by the homeowner (1014). The contract engine generates an outcome message (1016) and sends the message through a transmitting unit to the managing entity website accessible to the homeowner and investor (1018). The request outcome message contains request outcome data that includes at least: (i) the percentage and dollar value of the earned equity that the homeowner proposes to sell to the investor; (ii) whether the request was approved or denied; (iii) in the case of denial, the applicable reasons for denial; and (iv) in the case of approval, the time limits for confirmation by the homeowner along with a request for confirmation and payment receipt instructions from the homeowner.

The managing entity website reports through a graphical user interface or other accessible display option the approval or denial along with the other applicable request outcome data. The contract engine via a transmitting unit notifies the homeowner and investor (or an artificial intelligence entity representing the investor), who may be offline, by email, SMS message, or otherwise whether the request was approved or not along with the request outcome data relevant to each party. If the request was approved, then the notification to the homeowner includes a confirmation request asking the homeowner to confirm the sales transaction (1020). If the contract engine does not receive confirmation from the homeowner within a certain amount of time, then the contract engine periodically sends through a transmitting unit to the managing entity website accessible to the homeowner further confirmation request messages with confirmation request data that include at least: (i) the percentage and dollar value of the earned equity that the homeowner proposes to sell to the investor; and (ii) the time limits for confirmation and payment by the homeowner along with a request for confirmation and payment receipt instructions from the homeowner.

The contract engine, via a transmitting unit, notifies the homeowner, who may be offline, by email, SMS message, or otherwise of the request for confirmation along with the relevant confirmation request data. If the homeowner declines to confirm or the time period for confirmation lapses, the contract engine sends through a transmitting unit a message to the managing entity website accessible to the homeowner and investor reporting that the homeowner has denied confirmation of the transaction or that the confirmation period has lapsed (1022). The managing entity website reports through a graphical user interface or other accessible display option denial of the confirmation or lapse of the confirmation period. The contract engine via a transmitting unit notifies the homeowner and investor (or an artificial intelligence entity representing the investor), who may be offline, by email, SMS message, or otherwise of the denial of the confirmation or the lapse of the confirmation period.

If the homeowner confirms the transaction on the managing entity website, a transmitting unit associated with the website sends a message indicating confirmation along with the homeowner's payment instructions to a receiving unit associated with the contract engine. The contract engine through a transmitting unit sends payment data that includes at least the amount due and payment receipt instructions from the homeowner to the receiving unit of the cryptocurrency portfolio fund 104. In this embodiment, the cryptocurrency portfolio is designed to hold only real estate positions and not cash. The processing unit of the cryptocurrency portfolio fund determines as per that design that no cash is available for the cryptocurrency portfolio to purchase the equity being offered by the homeowner. Because there is no cash to pay the homeowner in the sales transaction, the processing unit of the cryptocurrency portfolio fund sends a funding request message through a transmitting unit to a cryptocurrency trading engine operated by the managing entity (1024).

An embodiment of the cryptocurrency trading engine **118** can be understood with reference to FIG. 11. The funding request message contains funding request data that includes at least: (i) the cryptocurrency that needs to be issued; (ii) the amount of issuance; (iii) the specified fiat currency for the proceeds; and (iv) payment receipt instructions from the homeowner. The cryptocurrency trading engine includes an embedded payment network and blockchain-based transaction mechanism **(1102, 1104, 1106,** and **1108)** that allows the engine to initiate purchases and sales of the cryptocurrencies it oversees nearly instantaneously on market exchanges, with verified credits or debits in the appropriate fiat currency accruing to a "managing entity bank account" or "MEBA" for short, which is a bank account or other repository controlled by the managing entity. The MEBA is held at a third-party or proprietary bank and is fully authorized and enabled to engage in electronic deposits and transfers.

Various ways to operate such a payment network and blockchain-based transaction mechanism to execute cryptocurrency transactions nearly instantaneously using appropriate verification methods are understood by those skilled in the art. See, e.g. US 9,870,562 B2. The cryptocurrency trading engine through a transmitting unit **1104** sends orders to sell newly issued units of the relevant cryptocurrency to the receiving units of one or more third-party or proprietary exchanges on which the cryptocurrency is traded. After execution (1026), the exchange confirms the sale and transmits funds in the relevant fiat currency, perhaps after one or more intervening transactions that convert intermediate cryptocurrencies used in the transaction into the desired fiat currency, to the MEBA. The exchange generates a trade confirmation message and sends it to a receiving unit **1102** of the cryptocurrency trading engine. The cryptocurrency trading engine through a transmitting unit sends a payment request, which includes the payment receipt instructions submitted by the homeowner and received by the cryptocurrency trading engine from the contract engine as part of the funding request, to the MEBA requesting issuance of funds to the homeowner. After issuance of funds (1028) and any required banking system confirmations, the MEBA sends a payment completion message to a receiving unit of the cryptocurrency trading engine. Data for cryptocurrency transactions are recorded on a cryptocurrency transaction blockchain **1108.** After securing the required permissions from the cryptocurrency blockchain system, the cryptocurrency trading engine through a transmitting unit writes the data for the sale transaction onto the cryptocurrency transaction blockchain (1030).

The methods of operating a cryptocurrency through one or more such blockchain systems will be clear to one skilled in the art. The cryptocurrency trading engine through a processing unit **1106** computes completion data (1032) and, through a transmitting unit, sends a transaction completion message to a receiving unit of the contract engine. The transaction completion message contains completion data that includes at least (i) confirmation that the transaction is complete and payment has been made; (ii) the percentage and dollar value of the earned equity that the homeowner sold to the investor; (iii) the home valuation used to set the terms of the sale; and (iv) the date and time that the sale was completed. The contract engine transmits through a transmitting unit a query of the housing instrument data blockchain system along with access authorization data to secure permission to write the completion data onto the blockchain. The housing instrument data blockchain system implements its access protocol to verify that the contract engine has the requisite permissions. After verification, the contract engine, through a transmitting unit writes the completion data onto the blockchain, creating a record on the blockchain of the sale of earned equity by the homeowner to the investor (1034). The contract engine generates a transaction confirmation message (1036), and, through a transmitting unit, sends the transaction confirmation message containing at least the completion data to the managing entity webpage (1038), and the managing entity webpage, which is visible to the homeowner and investor, reports confirmation of the transaction along with the relevant completion data. The contract engine simultaneously alerts the homeowner and investor, who may be offline, via email or via an SMS message accessible by mobile phone or other receiving device that the transaction is complete along with the relevant completion data.

This configuration results in an almost instantaneous, low-cost increase in the financed amount via the same website that allows the homeowner to track payments made and earned equity accumulated. In future iterations of earned equity accumulation, the balancing engine takes into account the reduction in the homeowner's earned equity as a result of selling a portion of it to the investor. The instantaneous execution and low cost stands in stark contrast to increasing the amount financed through a conventional mortgage arrangement which would require refinance of the existing mortgage or fresh borrowing subordinate to the existing mortgage, steps that typically take weeks, if not months, and often involve offline interactions along with accessing disparate websites.

Data for the cryptocurrency portfolio resides on a cryptocurrency portfolio blockchain. An embodiment can be understood with reference to FIG. 12, a flow diagram (1200) illustrating the process of updating the cryptocurrency portfolio blockchain system **1108** and transmitting a transaction message relating to valuation of the portfolio in accordance with exemplary embodiments.

A portfolio engine 118 is embodied in a processing unit **1106,** at least one receiving unit **1102,** and at least one transmitting unit **1104** operated on a processing server by the cryptocurrency portfolio fund. Periodically, the cryptocurrency portfolio fund, which in this embodiment is affiliated with the managing entity, or an artificial intelligence entity representing the cryptocurrency portfolio fund, sends a query through a transmitting unit of the portfolio engine to the housing instrument data blockchain system along with access authorization data to extract relevant data on its equity position and the most current valuation data with respect to the homes in its portfolio as well as other information (1202). The housing instrument data blockchain system 120 implements its access protocol to determine if the portfolio engine has access to the requested data. After verifying that access is permitted, the portfolio engine 110 receives the relevant data via a receiving unit. A processing unit associated with the portfolio engine updates information about the cryptocurrency portfolio (1204), and the portfolio engine, after securing the required permissions from the cryptocurrency blockchain system, writes through a transmitting unit the updated information onto the cryptocurrency portfolio blockchain (1206). The portfolio engine generates a portfolio update message (1208) and sends via a transmitting unit, the updated portfolio information to a website accessible to investors in the cryptocurrency portfolio where the updated information is reported (1210). This information includes at least the valuation of the portfolio under one or more specific valuation approaches along with the corresponding value per unit of the cryptocurrency.

In one or more embodiments, other features such as an investor approval step may be added to the process for sale of earned equity to the investor by the homeowner and an analogous process can be applied for cases in which the homeowner buys equity from the investor instead of selling equity to the investor.

An embodiment can be understood with reference to FIG. 13, a flow diagram (1300) illustrating the process for extracting and organizing a data ensemble from the housing instrument data blockchain system of FIG. 1, recording this data ensemble on the housing instrument data blockchain system, and issuing a data report message in accordance with exemplary embodiments. Periodically, the managing entity or an artificial intelligence entity representing it, sends a message to a receiving unit of the contract engine initiating a data ensemble update entry onto the housing instrument data blockchain. The contract engine transmits through a transmitting unit a query of the housing instrument data blockchain system along with access authorization data to extract relevant data that characterizes the current state of each housing instrument including at least payment rates and terms, the next payment date and amount, the current level of homeowner earned equity, current levels of key parameters including at least implicit rent and home value, and other data that characterizes the current state of the housing instrument (1302). The housing instrument data blockchain system implements its access protocol to determine if the contract engine has access to the requested data. After verification that access is permitted, the contact engine receives this data via a receiving unit, and the processing unit associated with the contract engine updates the data ensemble for the housing instruments (1304). The contract engine sends this updated data ensemble to a transmitting unit, which writes it onto the housing instrument data blockchain (1306). The contract engine generates a report message containing the updated data ensemble (1308) and sends the report message via a transmitting unit to a website accessible to the homeowner and the investor where the updated data values are reported (1310).

At any time, the homeowner or investor may access the managing entity website and observe payment rates and terms including the next payment date and amount, the current level of homeowner earned equity, current levels of key parameters, including at least implicit rent and home value, and other data that characterizes the current state of the housing instrument. Behind this capability is continuous updating by the website network of the website information through reading the housing instrument data blockchain which is itself continuously being updated by various data and process engines including at least the valuation engine and contract engine maintained by the managing entity.

The embodiments so far describe a system in which the homeowner can access a single website and various GUI-based pages in order to engage in a large number of functions at low cost and nearly instantaneously including at least: monitoring earned equity levels and current data about the governing housing instrument, making payments to the investor, refinancing by changing the level of payments or paying down the equity held by the investor, and increasing the level of financing on current market terms by selling earned equity back to the investor. The fragmentation, high cost, and lack of coordination that characterizes current technology applicable to housing finance is cured by this system. Central to the system is a particular balancing mechanism.

*Balancing Mechanisms Underlying DOOR Housing Instruments*

Each DOOR balancing engine is characterized by a particular balancing mechanism. The examples of DOOR instruments presented above involve situations in which:

(i) there is a single homeowner;

(ii) there is a single investor;

(iii) the homeowner is making a positive net contribution when the housing arrangement is analyzed as if it is a joint venture; and

(iv) the homeowner receives earned equity, an unleveraged share of the home at sale or termination of the DOOR contract, in exchange for net contributions made during the life of the instrument.

DOOR arrangements may involve multiple homeowners, multiple investors, positive net contributions by investors instead of homeowners, and the use of residual accounts other than earned equity to compensate for net contributions. It is expeditious to explain the DOOR balancing mechanism by beginning with the base case in which the restrictions (i)-(iv) above hold. After showing how the DOOR balancing mechanism operates in this case, it will be clear to one skilled in the art how the innovation applies more generally, and subsequent sections indicate that breadth through some additional discussion and illustrative examples, according to one or more embodiments.

This section begins by describing a class of accumulation algorithms for earned equity that are disclosed for the base case, specifies a particularly interesting "purchase parity" variant in that class, and then discusses the theoretical basis for both the class of algorithms and the purchase parity variant. The purchase parity accumulation algorithm underlies the balancing mechanism for the MM-0 embodiment explicated in the previous section. That embodiment is a direct arrangement because the associated balancing mechanism implements the MM-0 housing arrangement itself. As will be clear from embodiments of the invention described later, the same balancing mechanism built around the purchase parity accumulation algorithm is useful in many cases in which the embodiments are not direct arrangements. Other accumulation algorithms in the class underlie other balancing mechanisms applicable to other embodiments of the invention.

We start with the net contribution of the homeowner. As discussed above, major positive elements include mortgage payments or other payments to the investor, property tax payments, and maintenance expenses. The major negative element is the implicit rental value of living in the home. All of these elements are continuous flows, accruing over time. The flow nature is evident from the standard practice of pro-rating mortgage payments and property tax liability on a daily basis when a property is purchased or sold.

We define the flow rate of net rent, $n_r$, in terms of: r, the flow rate of gross rent, which is the value of occupancy for the homeowner; *d*, the depreciation rate of the structure; p, the rate at which property tax liability accrues; and *f*, the flow rate of other non-financial expenses. For simplicity, it is assumed that the homeowner's maintenance obligation includes all depreciation charges. Net rent does not include the cost of servicing any mortgages or other debt-like elements. Net rent therefore is the flow of returns that would accrue to an unleveraged owner of the property:

$$n_r(t) = r(t) - p(t) - d(t) - f(t)$$

where *t* represents time in years, indicating that each of the flow elements in the equation may vary over time. Dividing by *H(t),* the home value at time *t,* results in rate of net rent accrual as a proportion of home value:

$$\nu(t) = \frac{n_r(t)}{H(t)} \qquad (1)$$

Turning to the financing elements, the homeowner is making mortgage contributions and/or scheduled payments at rate:

$$m(t) = m_p(t) + m_i(t) + s_p(t)$$

where, in the case of mortgage payments, $m_p(t)$ is the rate of principal contributions while $m_i(t)$ is the rate of interest contributions. $s_p(t)$ is the rate of scheduled payments, if any. We use the word contributions rather than payments because part of the financing may be provided by the homeowner implicitly, e.g. as committed equity, discussed below, for which interest contributions are imputed rather than paid. Normalizing these financial contributions by home value results in a rate of financial expense accrual as a proportion of home value:

$$\mu(t) = \frac{m(t)}{H(t)}$$

Now the net contribution rate per year of the homeowner as a proportion of home value is:

$$\gamma(t) = \mu(t) - \nu(t) \qquad (2)$$

Suppose that the earned equity proportion at time *t* is *E(t).* Then define the grossed-up net contribution rate of the homeowner as:

$$\gamma^*(t) = \frac{\gamma(t)}{1-E(t)} \qquad (3)$$

Now the class of accumulation algorithms for earned equity in the claim may be defined. Suppose that the instrument is held for a period of time *T.* Divide this period of time, *T,* into n equal sub-periods of length $\frac{T}{n}$. Consider the following discrete approximation for the earned equity proportion:

$$E_n(t) = 1 - e^{-\sum_{i=1}^{n} \gamma^*(t_{i-1})\omega(t_{i-1})\frac{T}{n}} \qquad (4)$$

where $t_{i-1}$ is the time at which period *i* begins, $t_i$ is the time at which period *i* ends, and $\omega(t)$ is a weighting function. Removing the approximation results in the exact, continuous-time earned equity proportion:

$$E(T) = \lim_{n\to\infty} E_n(T) \qquad (5)$$

Equations (4) and (5) define a class of accumulation algorithms with the different members of the class defined by different weighting functions, $\omega(t)$.[1] For instance, ANZIE-DOOR, one of the examples of a DOOR variant is defined by the

following weighting function:

$$\omega(t) = \frac{i_f(t)}{\alpha(t) + \nu(t)}$$

where $i_f(t)$ is a suitable long-term riskless rate, $\alpha(t)$ is the expected appreciation rate for the house, and v(t) is defined as in equation (1) above.

[1] The limit does not result in simply shifting the sum in the exponent of equation (4) to an equivalent integral because *y*(t)* is a function of *E(t)* itself. For the discrete approximation, it is possible for each time period i to use the value of $E_n(t_{i-1})$ from the end of the previous time period to compute $E_n(t_i)$ and thus to calculate $E_n(T)$ recursively.

Imposing one particular weighting function, $\omega(t) = 1$, results in the purchase parity DOOR variant, defined by the following earned equity accumulation algorithm:

$$E^{pp}(T) = \lim_{n \to \infty} E_n^{pp}(T) \tag{6}$$

where

$$E_n^{pp}(T) = 1 - e^{-\sum_{i=1}^{n} \gamma^*(t_{i-1})\frac{T}{n}} \tag{7}$$

This variant has the trait that the accumulation of earned equity is the same as if the net contribution flow at each instant of time is used to purchase additional house value at the house price existing at that instant. To see this point, note that for an instant of time, *dt:*

$$\begin{aligned} E^{pp}(t+dt) - E^{pp}(t) &= 1 - e^{-\gamma^*(t)dt}\big(1 - E^{pp}(t)\big) - E^{pp}(t) \\ &= 1 - (1 - \gamma^*(t)dt)\big(1 - E^{pp}(t)\big) - E^{pp}(t) \\ &= \gamma^*(t)\big(1 - E^{pp}(t)\big)dt = \gamma(t)dt \end{aligned} \tag{8}$$

ignoring the insignificant terms in higher powers of *dt.* Equation (8) indicates that the increase in the earned equity portion over a small instant of time *dt* years is just the annualized net contribution rate as a proportion of house value multiplied by *dt.* The homeowner effectively purchases additional home equity in the exact dollar amount of the homeowner's net contribution. Thus the name "purchase parity" for this variant.

This variant has appealing properties. Because the homeowner effectively purchases home equity from the investor at the market value of that equity, both earn exactly the economic return on the home for their unleveraged positions. If either is leveraged, then that party earns the equivalent leveraged return. In the case of "unitary" DOOR instruments, all of the financing is provided by the investor and, as a consequence, the investor is effectively unleveraged and earns exactly the economic return on the home on the investor's combined position. Combining unitary DOOR investments into a portfolio therefore results in a vehicle that earns the combined exact economic return on the underlying homes. That property makes unitary DOOR instruments ideal for creating portfolios that replicate housing returns across regions, nations, or the world, portfolios that effectively replicate the returns on housing indices approximated or created by the set of homes underlying the instruments in the portfolio.

Although the purchase parity variant has strong appeal and is a central aspect of the invention, other variants defined by different weighting functions also are relevant for commercial applications. Weighting functions greater than 1 create higher amounts of earned equity compared to purchase parity, and weighting functions less than 1 create lower amounts of earned equity compared to purchase parity. These weighting functions are a means of creating subsidies or adjusting for risk or other aspects that are not reflected in the calculation of contributions made or positions accumulated by the party making the contributions. Under the purchase parity variant, after purchase of a particular position, the purchasing party earns the economic return inherent to that position. Up to this point, the only position considered has been earned equity, an unleveraged stake in the home. However, as indicated in the next section, under the claimed approach many other positions or adjustments are possible as residual accounts in addition to or instead of earned equity.

So far, the claimed class of DOOR variants has been described in terms of continuous flows of quantities including at least implicit rent, depreciation, property taxes, and mortgage payments. When a particular payment at time *t, P,* is discrete rather than part of a flow, then ΔE, the increase in earned equity is:

$$\Delta E = \frac{P}{H(t)}\omega(t). \tag{9}$$

Discrete elements may be added to flow elements by adding discrete elements governed by equation (9) to continuous elements described by equations (4) and (5). In the purchase parity case, both the discrete and flow portions may be calculated as direct purchases of earned equity at the prevailing house price.

Approximations may be used. For example, one might use $E_n(t)$ instead of $\lim_{n\to\infty} E_n(t)$ for some value of n. Or, in the purchase parity case, one might compute total net contribution by summing the contributions during each period using values halfway through the period for flows and then dividing by the house price halfway through the period. Use of approximations is encompassed by the invention. However, it is important to note that in some instances, approximations are inadequate unless they are very close to the exact answer. For example, the purchase parity variant has the property that both the investor and the homeowner earn precisely the *ex post* house return for each increment of investment if the calculation is exact. This property is critical for creating portfolios of DOOR instruments that amount to housing return indices or that precisely capture housing returns. Even cogent approximation methods, such as using the values at the midpoint of each period, may produce cumulative returns that diverge significantly from the actual ones, especially for short holding periods.

There is an analogy between the problem of strategic trading with respect to the taxation of capital gains and the problem of balancing the housing arrangement between an investor and a homeowner. In the capital gains situation, an ideal accrual tax would tax gains and allow losses as they occur. An equivalent approach is to assess the taxes on the gains and losses as they occur and then cumulate them with interest, to be paid when the asset is sold. If, instead, tax is assessed and paid only on the total gain or loss at sale without taking into account the history of the gains and losses during the holding period, there is a problem. Taxpayers have an incentive to defer gains by not selling the asset ("lock in") or to sell the asset to realize losses (strategic loss taking). In both cases, the government loses revenue and investor behavior is distorted in that investors hold or sell assets based on the tax implications rather than on the expected pre-tax returns of the assets. Alan Auerbach (see, A.J. Auerbach, Retrospective Capital Gains Taxation, American Economic Review, vol. 81, pp. 167-178 (March 1991)) shows that there is a unique solution for the tax treatment at sale which eliminates the distorting incentives and restores economic balance in the sense that investors hold or sell an asset based only on its economic returns relative to other assets. For an asset purchased at time 0 and sold at time s, the tax, a proportion of the asset value, $A_s$, at that time is:

$$T_s = (1 - e^{-\tau r_f s})A_s \tag{10}$$

where $\tau$ is the tax rate and $r_f$ is a suitable riskless interest rate.

The housing arrangement issue is precisely analogous. The party making net contributions can be compensated by a tax imposed on the other party at sale. Without loss of generality, take the homeowner to be the party making net contributions in an arrangement in which the other party is an investor. Then the investor is in the position of the asset owner in the tax situation, and the homeowner is in the position of the government. The homeowner's net contribution gives rise to a tax liability for the investor. Analogously to the tax setting, there are at least three ways to liquidate the tax liability:

(1) By an immediate offsetting payment from the investor to the homeowner, paying the tax on the spot;

(2) By noting the tax due, allowing it to accumulate at a suitable rate of interest, and then having the investor pay the cumulated amount to the homeowner at sale; and

(3) Taxing the asset at sale by reserving a proportion of the asset for the homeowner.

The third solution is analogous to the earned equity approach discussed above, and the unique solution that does not disturb incentives in the case of housing arrangements has the same form as the solution expressed by equation (10). The problematic incentives arise if the housing arrangement becomes more or less favorable to the homeowner versus a market deal, motivating the homeowner unduly to hold onto a deal when it becomes unfavorable to the investor or to refinance when it goes in the other direction and becomes unfavorable for the homeowner. This problem requires making the terms available to the homeowner in the market for homes more favorable to the investor to offset the instances in which market conditions cause the homeowner to refinance to the detriment of the investor. This problem with static housing arrangements is the same one noted earlier in this application.

To translate equation (10) into a unique solution for accumulating earned equity in the housing arrangement, one element is missing: the tax rate. Clearly, one factor that will be part of the tax rate is the positive net contribution of the taxing party, expressed as a rate in the context of equation (10). However, the net contribution rate needs to be normalized by a rate of return, the ratio reflecting the proportion of that rate of return that is contributed by the taxing party. That is, after also allowing for grossing up, an element discussed subsequently, the tax rate would take the form:

$$\tau(t) = \frac{\gamma^*(t)}{\rho(t)}$$

where $\rho(t)$ is a rate of return. Now equation (10) translates into equations (4) and (5) with the following weighting function:

$$\omega(t) = \frac{i_f(t)}{\rho(t)}$$

where $i_f$ is equivalent to $r_f$, different notations for the same suitable riskless rate. As discussed above, the choice of *p(t)* and thus of $\omega(t)$ is open, depending on the goals of the housing arrangement. Absent a need to adjust for risk or other factors not otherwise captured in the calculations and absent a need to create a subsidy using $\omega(t)$, choosing $\omega(t) = 1$ is compelling: The purchase parity property of that choice creates market returns for both parties for the interests they receive or retain.

The rationale for grossing up the net contribution, that is, for using $\gamma^*(t)$ instead of *y(t),* is both clear in Auerbach's arrangement and obvious from the mathematics of equation (8) above. In Auerbach's arrangement the proportion *E(t)* of any distribution to the asset holder at time t properly belongs to the government because that is the proportion that would be taxed if the asset were sold at time t. Similarly, a contribution of amount C by the government to the asset holder is equivalent to a contribution to the joint venture of $\frac{C}{1-E(t)}$ followed by a distribution of amount $C\frac{E(t)}{1-E(t)}$ immediately back to the government. Thus, the contribution to the joint venture should be grossed up when crediting the government in Auerbach's arrangement or when crediting the party making a net contribution in the housing arrangement.

*Extent of the Disclosed Class*

The sections above detailed the treatment of DOOR housing arrangements in which earned equity is the residual account that maintains economic balance. Net contributions by a party to the arrangement result in accrual of earned equity in favor of that party. The previous section describes the appropriate rate of accrual for a class of accumulation algorithms, each of which define a balancing mechanism.

There are a plethora of other possible residual accounts, and any given arrangement may have more than one account. The extension of the analysis in the previous sections to arrangements that involve residual accounts different from or in addition to earned equity is particularly simple for purchase parity variants. The innovation includes the extension from purchase parity variants to variants with other accrual arrangements, but we take the purchase parity property to be normative in what follows to make the presentation simple and clear.

**Committed equity.** Committed equity is a position similar to a second mortgage except that the holder accrues interest as credits in a net contribution arrangement instead of receiving interest payments. The ANZIE-DOOR variant included committed equity. In that variant, the homeowner's net contributions based on all items other than a down payment or mortgage principal payments translated to earned equity. In contrast, any down payment or mortgage principal payments made by the homeowner became dollar-for-dollar committed equity. For example, assume that an ANZIE-DOOR arrangement applies, a home is purchased for $200,000, the DOOR investor puts in $40,000 of equity, the homeowner makes no down payment, and there is a $160,000 amortizing mortgage for which the homeowner makes both the interest and the principal payments. Suppose that after a few years, the homeowner has made $10,000 in total principal payments so that the mortgage balance is $150,000. Now the homeowner has $10,000 of committed equity, and this $10,000 position accrues interest at an appropriate imputed rate, which counts as part of the homeowner's ongoing net contribution.[2] Under ANZIE-DOOR, the down payment and mortgage payments translate dollar for dollar into committed equity, a treatment for committed equity accumulation equivalent to the purchase parity approach above, and the homeowner accrues earned equity separately to compensate for net contributions stemming from mortgage interest payments, property tax payments, home maintenance, and other sources. Thus, ANZIE-DOOR is an example of a DOOR instrument for which there is more than one residual account: both committed equity and earned equity.

[2] If the house is sold at this point, the proceeds first go to pay the $150,000 first mortgage balance, second to pay the $10,000 in committed equity due the homeowner, and third to the investor as conventional equity proceeds. The investor separately is obligated to pay the homeowner the homeowner's earned equity share, an obligation that binds even if the required earned equity payment exceeds the conventional equity received by the investor at sale.

**Stochastic payments.** In some applications, it is desirable to fix or limit the accumulation of earned equity. One obvious way to do so is to vary the payments made by the homeowner, the investor, or both. If the payments vary with economic conditions such that the rate of net contribution is maintained at zero, the earned equity proportion will remain fixed. In this case, stochastic payments are the residual account.

**Leveraged equity.** In MM-0 arrangements described above and MM-1 arrangements described below, the homeowner accumulates earned equity, which is an unleveraged interest in the home. Rather than use earned equity as the residual account, some form of leveraged equity may be employed. This leveraged equity may play off of the existing mortgage, in which case, the investor and homeowner are sharing the conventional equity in the home. As the homeowner position accrues, it is necessary to know what happens to the mortgage obligation, and it matters whether the obligation is to the investor as mortgagee or to a third party. In one embodiment, the investor is the mortgagee, and the investor transfers responsibility for a corresponding part of the mortgage along with the conventional equity slice as part of the accrual in favor of the homeowner. The transferred mortgage slice is recourse versus the homeowner. In another embodiment, the homeowner essentially buys conventional equity from the investor with a suitable interest rate adjustment on the mortgage if it is held by the investor to reflect the non-recourse nature of the mortgage versus the homeowner. In yet another embodiment, the homeowner accrues an American call option position in exchange for net contributions. Other embodiments for creating accrual of leveraged equity are contemplated, along with associated accrual algorithms for the claimed class of instruments when leveraged equity rather than earned equity is the residual account.

**Separate accumulation accounts.** Instead of earning a debt or equity stake in the home, net contributions may accumulate in a separate account. This account may earn a predetermined interest rate, may earn an interest rate derived from market rates, or may be invested in securities, index funds, or other assets, including cryptocurrencies backed by real estate portfolios. Rules about distributions determine whether and to what extent the party making net contributions may make withdrawals from or liquidate part of the account prior to sale of the home. Limitations on the ability to do so may be desirable for reasons such as ensuring that the party holding the account fulfills their maintenance obligations with respect to the property. SAVING-DOOR is an instance of using a separate accumulation account as the residual account.

**Many other residual accounts.** The innovation includes a plethora of other residual accounts that might be used to balance the housing arrangement. These include but are not limited to almost any kind of debt or equity position in the home as well as to arrangements such as allocating time shares for habitation among the parties. The invention covers all possible residual accounts aimed at achieving economic balance.

It is worth noting again the important role of the dynamic element of the instruments. For example, if the earned equity position of the homeowner is fixed at a particular value and payments by the homeowner are the other element in the arrangement, then the homeowner's payments must vary to hold the net contribution rate at zero. Otherwise, the arrangement begins to favor either the homeowner or the investor and no longer is neutral, and it is not possible to ensure that both parties earn the market rate of return on their positions.

Aside from the use of residual accounts other than earned equity, it is worth noting other ways in which the claimed class is broader than the various examples described above and below. Among other aspects, two dimensions that are particularly important are arrangements in which a party other than the homeowner makes positive net contributions and arrangements in which there are more parties than a single homeowner, a single investor, or a single mortgagee.

In many implementations, the investor rather than the homeowner accrues earned equity or additions to some other residual account. A prominent example is COZIE-DOOR, a class of instruments in which a homeowner receives payments on an ongoing basis or in lump sum from an investor in exchange for an earned equity or committed equity position in the home. In one version of COZIE-DOOR, the investor pays an annuity to a homeowner and then accrues earned equity as the annuity payments accrue. Property tax, home insurance, or other payments might be added to the arrangement in compensation for a greater amount or faster accrual of earned equity.

In other implementations, there may be multiple investors, multiple homeowners, or multiple mortgagees. In some cases, these situations create the need to facilitate accruals of earned equity or other residual accounts to more than one party. Each such party may be making distinct contributions different in type or amount from the contributions made by other parties. Relative contributions of the parties may shift as economic variables change in value.

A further feature of neutral DOOR instruments is that it is possible to shift seamlessly between them by freezing final values for one instrument and then immediately inserting the balances into a new, different one. For example, the homeowner might move from an instrument such as MM-0, which involves earned equity, to a variant that involves a leveraged equity position. If the investor and/or potential mortgagee agree to an arrangement permitting such flexibility, this change in either direction may be accomplished nearly instantaneously online. An arrangement of this sort is IS-A-DOOR.

*MM-1 Housing Finance Arrangements*

MM-0 housing finance arrangements are embodied in a unitary instrument. There is no third party who provides mortgage or any other kind of finance. In contrast, MM-1 housing finance arrangements require a multilateral instrument. A third party provides mortgage finance, and the DOOR investor provides the conventional equity finance. As a consequence, MM-1 introduces the need to coordinate the mortgage with the equity instrument and the homeowner, not only because of traditional aspects such as the right of the homeowner or investor to make extra principal payments, but also because MM-1 ties the mortgage tightly to the equity instrument.

The MM-1 variant adds several features to MM-0:

(1) **Mortgage Guarantee by DOOR Investor.** The third-party mortgage is recourse versus the DOOR investor, creating an insurance-like guarantee with respect to the mortgage balance in favor of the mortgagee. The DOOR investor is compensated in an ongoing manner via a slower accrual of earned equity by the homeowner.

(2) **Mortgage Paydown to Limit the LTV Ratio.** The DOOR investor is obligated to pay down the mortgage in low-value situations, creating a ceiling on the LTV ratio. The ceiling is set to guarantee that the DOOR investor's equity at sale exceeds the earned equity payout that the DOOR investor is required to make to the homeowner, thus ensuring performance of that obligation. The DOOR mechanism provides the DOOR investor exact economic compensation for any paydowns, creating investor motivation to remain in the arrangement when paydowns become necessary. This compensation is in the form of an enhanced conventional equity position and lower total mortgage payments, which translate to less accrual of earned equity that the investor must pay the homeowner at sale.

(3) **Mortgage/Equity Insurance Protection.** Except for the most creditworthy DOOR investors, an insurer stands behind the DOOR investor's mortgage guarantee, mortgage paydown, and earned equity obligations. Failure of the DOOR investor to make required mortgage paydowns triggers forfeiture of the DOOR instrument to the insurer, and the insurer receives compensatory value for making the paydowns, creating motivation at the time such measures are required.

MM-1 arrangements have considerable commercial potential. Homeowners are able to secure a home with little or no down payment and the unleveraged nature of their stake, which is a substantial percentage of home value after a few years of accumulation if the terms are set appropriately, means that they are solidly in the market even if prices decline. Investors obtain a superior alternative to renting because the financial returns are enhanced by the fact that an owner with a stake in the condition of the home is occupying it.

MM-1 arrangements substantially reduce business risk for mortgage creditors, mortgage originators, GSEs providing mortgage guarantees, and buyers of securitized mortgage obligations by creating a powerful set of layered mortgage credit enhancements:

(i) In low-value settings, the homeowner's incentive to maintain the home is robust because the homeowner's unleveraged equity stake is on the line dollar-for-dollar;

(ii) Similarly, homeowner incentives to continue making mortgage payments remain robust in low-value situations because the payments result in a compensatory accrual of earned equity;

(iii) The mortgage is guaranteed by the DOOR investor;

(iv) The DOOR investor is obligated to pay the mortgage down to maintain a ceiling on the LTV ratio, eliminating the problems that arise from "underwater" homes that are worth less than the underlying mortgage obligation; and

(v) An insurer stands behind the DOOR investor's mortgage guarantee and paydown obligations.

These layered credit enhancements, the last three of which are added by MM-1, substantially reduce the risk of default and foreclosure. The approach maintains an LTV level substantially below 100% and creates powerful homeowner incentives to continue maintaining the home and making mortgage payments even when home value drops substantially. Mortgage creditors are much less dependent on homeowner solvency because of the DOOR investor mortgage guarantees, themselves backed by mortgage insurance.

MM-1 is a game changer for mortgage insurers. A condition of the insurance contract is that failure of the DOOR investor to pay down the mortgage as required results in the DOOR investor forfeiting the DOOR investment in favor of the insurer. The insurer steps in, replaces the DOOR investor as a party to the DOOR contract, and makes the required mortgage payment under the contract. This payment is superficially similar to paying off a mortgage insurance claim. But there is a major difference: Instead of simply being stuck with a loss, the insurer now has an asset, and making the required mortgage paydown results in a precisely compensatory increase in the value of the asset. The balance sheet impact is positive because the asset had value before the paydown, and the paydown is fully compensated. Furthermore, an insurer faced with a plethora of paydown obligation failures due to a general decline in housing values across the country accumulates assets that sharply rebound when there is a recovery because the insurer holds the leveraged equity position in a broad portfolio of homes. If the insurer does not want to take on this portfolio investment role and the associated volatility, it can sell the DOOR instruments to a third party who is willing to do so, and the insurer can simultaneously write an insurance contract on the instrument. The net effect is to shift the instrument from a non-performing party to a performing one while retaining the associated insurance business.

These features of MM-1 arrangements that tie the mortgage in to the equity instrument require intensive and time-sensitive communications to implement the required interlocking decisions among the homeowner, DOOR investor, mortgagee, and mortgage insurer. For example, a drop in the home price can trigger the paydown feature requiring notice to the investor, a request for investor action, and a transfer of the instrument in the face of failure of the investor to act. The paydown may result in choices for the homeowner among payment alternatives for the reduced mortgage, which introduces the homeowner into the loop. And time is of the essence to maintain credibility that the homeowner's earned equity payment is assured. The invention provides all of these capabilities.

*Implementation of an MM-1 Housing Finance Arrangement*

To describe how the invention implements an embodiment of an MM-1 housing finance arrangement, we focus on the ownership period and begin with the simple case of a homeowner, a single investor, a single mortgage with a single mortgagee, and a single mortgage/equity insurer. Thus, the mortgage is third-party housing finance provided by the mortgagee who is a third-party financing entity, and the mortgage/equity insurer is a third-party service provider. In this embodiment, the mortgagee also services the mortgage, collecting payments and providing information to the mortgagor.

At the core of the implementation of the invention is a balancing engine embodied in a processing unit, at least one receiving unit, and at least one transmitting unit operated on a processing server by the managing entity. The balancing engine assesses over time the ongoing contributions of the homeowner and investor, considering the housing arrangement between them as a joint venture. In one embodiment, the investor and a mortgagee initially finance the entire home with conventional leveraged equity and a mortgage respectively, the homeowner makes the mortgage principal and interest payments to the mortgagee, the homeowner makes property tax payments, the homeowner maintains the home, and the homeowner lives in the home. In this embodiment, the homeowner's net contribution equals (i) the mortgage principal and interest payments to the mortgagee, (ii) the property tax payments, (iii) the maintenance, and (iv) other obligations such as insurance, less (v) what would be charged as rent (the "implicit rent"), which is the value of living in the home. The balancing mechanism requires a residual account to reconcile the interests of the homeowner and investor. In this embodiment, the residual account consists of earned equity, an unleveraged interest in the home, which the investor must pay the homeowner upon sale of the home or termination of the financing arrangement, and the payments are set so that the homeowner's net contribution is positive.

In the embodiment, the data for input into the balancing engine resides in a housing instrument data blockchain. The data includes a time series of all the contribution elements including at least homeowner mortgage payments to the investor. Referring to FIG. 5, periodically, the managing entity or an artificial intelligence entity representing it, sends a message to a receiving unit of the balancing engine initiating a balancing entry onto the housing instrument data blockchain (502). The balancing engine transmits through a transmitting unit a query of the housing instrument data blockchain system along with access authorization data to extract relevant data on contributions and other elements, including the governing algorithm for computing earned equity under the contract covering the home finance arrangement, itself encoded on the housing instrument data blockchain (504). The housing instrument data blockchain system implements its access protocol to determine if the balancing engine has access to the requested data. After permission for access is verified, the balancing engine receives this data via a receiving unit, and the processing unit associated with the balancing engine updates the earned equity balance of the homeowner (506). The balancing engine sends this updated balance along with details of the computation to a transmitting unit, which writes it to the housing instrument data blockchain along with details of the computation itself (508). The balancing engine sends via a transmitting unit, the updated earned equity value to a website accessible to the homeowner and the investor where the new value is reported (510). The balancing engine via a transmitting unit alerts the homeowner and the investor (or an artificial intelligence entity representing the investor), who may be offline, of the updated earned equity value via email or an SMS message through a mobile phone or other receiving device (512).

An embodiment can be understood with reference to FIG. 14, a flow diagram (1400) illustrating the process for writing payment data to and extracting updated data from the blockchain system in accordance with exemplary embodiments.

The input data for the balancing operation resides on the housing instrument data blockchain and is generated and updated by multiple data engines residing on one or more servers controlled by the managing entity, each data engine including at least one processing unit, at least one receiving unit, at least one transmitting unit, and at least one database. Each data engine operates for the purposes of creating, gathering, updating, processing, storing, and communicating at least one time series of at least one data parameter. In implementing an MM-1 housing finance arrangement, the data engines include at least one third-party data engine: a mortgage data engine residing on one or more servers controlled by the managing entity, embodied in at least one processing unit, at least one receiving unit, at least one transmitting unit, and at least one database, the mortgage data engine operating for the purposes of gathering, storing, processing and communicating data with respect to the third-party mortgage. When the homeowner makes a mortgage payment, a transmitting unit of a processing server of the mortgagee sends a payment message to a receiving unit of a mortgage data engine operating on a processing server controlled by the managing entity (1402). The payment message contains payment data including at least: (i) the amount of the payment; (ii) the breakdown between principal and interest; and (iii) the time and date of the payment. A processing unit of the mortgage data engine changes this data into a form suitable for the housing instrument data blockchain (1404) and transmits through a transmitting unit a query of the housing instrument data blockchain system along with access authorization data to secure permission to write the payment data onto the blockchain. The housing instrument data blockchain system implements its access protocol to verify that the mortgage data engine has the requisite permissions. After receiving confirmation of the verification through a receiving unit, the mortgage data engine, through a transmitting unit writes the payment data onto the housing instrument data blockchain (1406). The mortgage data engine transmits, through a transmitting unit, a query of the housing instrument data blockchain system along with access authorization data to extract data adequate to update the status of the mortgage including at least the payment history, the current principal balance following the most recent payment, and the loan-to-value ratio based on the most recent operative valuation of the home residing on the housing instrument data blockchain (1408).

The housing instrument data blockchain system implements its access protocol to determine if the mortgage data engine has access to the requested data. After permission for access is verified, the mortgage data engine receives the relevant data via a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device.

Referring to FIG. 7, a valuation engine, which is a data engine operating on a processing server controlled by the managing entity, creates and updates a time series of house values for the home that is subject to financing by writing to the housing instrument data blockchain. The valuation engine receives a data request corresponding to a home valuation request (702). The valuation engine through one or more receiving units collects third-party valuations via query (704). The valuation engine through a transmitting unit encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine and the contract engine. The valuation engine transmits through a transmitting unit a query of the housing instrument data blockchain system along with access authorization data to secure permission to write the valuation data onto the blockchain. The housing instrument data blockchain system implements its access protocol to verify that the valuation engine has the requisite permissions. After receiving confirmation of the verification through a receiving unit, the valuation engine, through a transmitting unit writes the operative valuation to the housing instrument data blockchain along with a timestamp and a record of the calculation (714) including at least the third-party and non-third-party valuations, the methodology used to compute the non-third-party valuations, and the methodology used to compute the operative valuation (716).

The valuation engine generates a data message (718) and sends via a transmitting unit (720), at least the new operative valuation along with the third-party and non-third-party valuations to a website accessible to the homeowner and the investor where these valuations are reported. The valuation engine via a transmitting unit alerts the homeowner and investor (or an artificial intelligence entity representing the investor), who may be offline, via email or an SMS message through a mobile phone or other receiving device of the new operative valuation if they have requested updates of the operative valuation generally or upon certain values being realized.

Other data elements including at least implicit rent, depreciation, and property tax liability are governed by other data engines operating in a manner similar to the valuation engine.

The managing entity maintains, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor. Input data for the contract engine resides in a housing instrument data blockchain.

An embodiment can be understood with reference to FIG. 15, a flow diagram (1500) illustrating the process for requesting a valuation from the blockchain system and recording to the blockchain a paydown amount in accordance with exemplary embodiments. The valuation engine sends a message through a transmitting unit to a receiving unit of the contract engine, the message indicating that the operative valuation has been updated along with data including at least the new operative valuation (1502). The contract engine transmits through a transmitting unit a query of the housing instrument data blockchain system along with access authorization data to extract relevant data on the current mortgage principal balance and other elements, including the governing algorithm for determining whether a mortgage paydown by the investor is required and the amount of the required paydown (1504). The housing instrument data blockchain system implements its access protocol to determine if the contract engine has access to the requested data. After permission for access is verified, the contract engine receives this data through a receiving unit, and the processing unit associated with the contract engine determines whether a mortgage paydown by the investor is required (1506), and, if so, the required amount (1508). If the processing unit determines that a paydown is required, the contract engine transmits through a transmitting unit a query of the housing instrument data blockchain system along with access authorization data to secure permission to write paydown data onto the blockchain. The housing instrument data blockchain system implements its access protocol to verify that the contract engine has the requisite permissions. After receiving confirmation of the verification through a receiving unit, the contract engine, through a transmitting unit records its determination of whether an investor paydown is required along with information about the associated calculations on the housing instrument data blockchain (1510). The contract engine sends mortgage paydown data including at least the amount of paydown required and the deadline for payment to a receiving unit of a processing server of the investor (1512, 1514). The processing server of the investor through a transmitting unit sends a query of the housing instrument data blockchain system along with access authorization data to extract relevant data to verify the need for a paydown and the amount.

The housing instrument data blockchain system implements its access protocol to determine if the investor has access to the requested data. After permission for access is verified, the processing server of the investor receives the requested data through a receiving unit and through a processing unit verifies that a paydown is due. After verification, then in one embodiment, the processing server of the investor through a transmitting unit sends a payment request message to a receiving unit of a processing server of the mortgagee, the message including at least payment instructions specifying a source of investor funds, the amount of the payment, and the mortgage to which it is to be applied as an additional payment of principal. In a second embodiment, there is an intermediate step, approval by the investor. The processing server of the investor accesses a database to determine the appropriate person or artificial intelligence representative of the investor with the authority to grant or refuse approval. The processing server of the investor sends through a transmitting unit a request for approval or denial to a receiving unit of a specified processing server associated with such person or artificial intelligence representative and, in the case in which a person has decision authority, simultaneously via a transmitting unit sends the request for approval or denial to such person, who may be offline with respect to the specified processing server, by email, SMS message, or otherwise. The request for approval or denial includes at least: (i) the amount of the requested paydown; and (ii) in the case where a person has decision authority, a link to a website secured by password or other protections and operated by the specified processing server on which such person can indicate approval or denial. The specified processing server through a transmitting unit sends a message to a receiving unit of the processing server of the investor indicating approval or denial. In the case of approval, the processing server of the investor through a transmitting unit sends a payment request message to a receiving unit of a processing server of the mortgagee, the message including at least payment instructions specifying a source of investor funds, the amount of the payment, and the mortgage to which it is to be applied as an additional payment of principal. In the case of denial, the processing server of the investor through a transmitting unit sends a denial notice message to a receiving unit of the contract engine.

An embodiment can be understood with reference to FIG. 16, a flow diagram (1600) illustrating the process for recording payment data to the blockchain system or using the blockchain system to identify contract terms in accordance with exemplary embodiments. In the case of the first embodiment or the second embodiment when approval of the paydown has been indicated by the person or artificial intelligence representative who has authority to so approve, the processing server of the mortgagee will have received the payment request message (1602) and through methods that will be clear to those skilled in the art attempts to collect payment from the bank account of the investor specified in the payment instructions (1604). If funds are adequate (1606) to cover full payment and full payment is collected, after a processing unit of the processing server of the mortgagee appropriately updates the mortgagee’s records held in a database or, after receiving the requisite permissions, written on a blockchain, a transmitting unit of a processing server of the mortgagee sends a paydown message to a receiving unit of a mortgage data engine operating on a processing server controlled by the managing entity. The paydown message contains paydown execution data including at least: (i) the amount of the paydown; (ii) the time and date of the payment; and (iii) the monthly payment amount after the paydown. A processing unit of the mortgage data engine changes this paydown execution data into a form suitable for the housing instrument data blockchain, and the mortgage data engine transmits through a transmitting unit a query of the housing instrument data blockchain system along with access authorization data to secure permission to write the paydown execution data onto the blockchain (1608).

The housing instrument data blockchain system implements its access protocol to verify that the contract engine has the requisite permissions. After receiving confirmation of the verification through a receiving unit, the mortgage data engine, through a transmitting unit writes the paydown execution data onto the housing instrument data blockchain (1610).

The mortgage data engine transmits through a transmitting unit a query of the housing instrument data blockchain system along with access authorization data to extract data adequate to update the status of the mortgage including at least the payment history, the current principal balance and monthly payment amount following the paydown, and the loan-to-value ratio based on the most recent operative valuation of the home residing on the housing instrument data blockchain. The housing instrument data blockchain system implements its access protocol to determine if the mortgage data engine has access to the requested data. After permission for access is verified, the mortgage data engine receives this mortgage-related data through a receiving unit, and a processing unit of the mortgage data engine organizes this mortgage-related data into a form suitable for website display, resulting in a package of displayable mortgage-related data (1612). Through a transmitting unit, the mortgage data engine sends the displayable mortgage-related data to a website accessible to the homeowner, the investor, and the mortgage/equity insurer where the mortgage-related data is updated using the displayable mortgage-related data received (1614). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device. The balancing mechanism embodied in the balancing engine ensures that the investor receives full economic compensation for the paydown on a risk-adjusted basis, and, in addition, the investor avoids loss of the position, which would occur if the investor failed to make the paydown. These two aspects facilitate the paydown transaction by creating strong incentives for the investor to make the paydown.

If the processing server of the mortgagee is unable to collect the paydown amount from the bank account of the investor specified in the paydown instructions because funds in the account are not adequate to cover the paydown fully or for any other reason (1606), the processing server of the mortgagee sends through a transmitting unit a notice of inadequate funds to a receiving unit of the contract engine. The contract engine transmits through a transmitting unit a query of the housing instrument data blockchain system along with access authorization data to extract relevant data on the contractual provisions that cover an inadequate funds situation, including time limits for investors to correct the situation (1616).

The housing instrument data blockchain system implements its access protocol to determine if the contract engine has access to the requested data. After permission for access is verified, the contract engine receives this data via a receiving unit, and the processing unit associated with the contract engine accesses a database to determine the personnel of the investor specified by the investor to receive a notice of inadequate funds (1618). The contract engine generates a notice of inadequate funds (1620) and sends the notice of inadequate funds through a transmitting unit to a receiving unit of the processing server of the investor and simultaneously via a transmitting unit sends a notice of inadequate funds to the specified personnel of the investor, who may be offline with respect to the processing server of the investor, by email, SMS message, or otherwise (1622). The notice of inadequate funds includes at least: (i) the amount due; (ii) the amount of available funds; (iii) any other issue that prevented collection of the paydown amount; and (iv) time limits for increasing the balance or specifying another source of funds. The contract engine periodically sends the same notice to the same parties, including the processing server of the investor, at periods set by the contractual provisions encoded on and accessed from the housing instrument data blockchain until either: (i) the contract engine receives a paydown notice; or (ii) the time limit for correcting the inadequate funds problem lapses (1624, 1626).

An embodiment can be understood with reference to FIG. 17, a flow diagram (1700) processing a received default notice (1702) using data obtained by the blockchain and determining and recording in the blockchain system a change in investor in accordance with exemplary embodiments. If the investor denied approval for the paydown or the time limit for rectifying an inadequate funds situation was reached, then the contract engine transmits through a transmitting unit a query of the housing instrument data blockchain system along with access authorization data to extract relevant contract data on steps to take when the investor has defaulted on its paydown obligations (1704).

The housing instrument data blockchain system implements its access protocol to determine if the contract engine has access to the requested data. After permission for access is verified, the contract engine receives this data via a receiving unit, and the contract engine sends via a transmitting unit a default notice to a receiving unit of a processing server operated by the mortgage/equity insurer (1706). The default notice contains default data including at least: (i) the identity of the defaulting investor; (ii) the amount of the required paydown; (iii) notice that the paydown is now the obligation of the mortgage/equity insurer; (iv) a request for such payment along with instructions on how to make a payment; (v) notice that the investor's DOOR instrument position will be transferred to the mortgage/equity insurer; (vi) access authorization data for the mortgage/equity insurer to gain access to appropriate data on the housing instrument data blockchain with respect to this position; and (vii) access to the managing entity website that displays information for investors. The contract engine enables a payment engine (1708), using methods that will be apparent to one skilled in the art, that monitors the status of the paydown obligation of the mortgage/equity insurer, sending the insurer appropriate periodic notices until the insurer makes the payment, verifying payment after it is made (1710), and then generating (1712) and sending (1714) through a transmitting unit a payment completion message to a receiving unit of the contract engine. The payment message contains data including at least: (i) the fact of payment; (ii) any relevant verification data; (iii) the amount of payment; (iv) the date and time of payment; (v) the change in the level of monthly mortgage payments, if any: and (vi) identifying information for the mortgage/equity insurer required for entering the insurer as an investor on the housing instrument data blockchain. After receiving the payment message, the contract engine transmits through a transmitting unit a query of the housing instrument data blockchain system along with access authorization data for permission to change investors for an instrument covered by the blockchain. The housing instrument data blockchain system implements its access protocol to verify that the contract engine has the required level of permission to make such a change. After verification, the contract engine writes on the blockchain, substituting the mortgage/equity insurer for the defaulting investor as owner of the applicable investment interest in the applicable instrument (1716). The contract engine generates a substitution message (1718) and sends the substitution message through a transmitting unit to a receiving unit of the processing server of the mortgage/equity insurer indicating the ownership replacement has been completed (1720).

Referring now to FIG. 14, through a transmitting unit, the contract engine sends a paydown message to a receiving unit of a mortgage data engine (1402). The paydown message contains paydown execution data including at least: (i) the amount of the paydown; (ii) the time and date of the payment; and (iii) the monthly payment amount after the paydown. A processing unit of the mortgage data engine changes this paydown execution data into a form suitable for the housing instrument data blockchain (1404), and a mortgage data engine transmits through a transmitting unit a query of the housing instrument data blockchain system along with access authorization data to secure permission to write the paydown execution data onto the blockchain.

The housing instrument data blockchain system implements its access protocol to verify that the contract engine has the requisite permissions. After receiving confirmation of the verification through a receiving unit, the mortgage data engine, through a transmitting unit writes the paydown execution data onto the housing instrument data blockchain (1406). The mortgage data engine transmits through a transmitting unit a query of the housing instrument data blockchain system along with access authorization data to extract data adequate to update the status of the mortgage including at least the payment history, the current principal balance and monthly payment amount following the paydown, and the loan-to-value ratio based on the most recent operative valuation of the home residing on the housing instrument data blockchain (1408). The housing instrument data blockchain system implements its access protocol to determine if the mortgage data engine has access to the requested data. After permission for access is verified, the mortgage data engine receives this mortgage-related data through a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device. The balancing mechanism embodied in the balancing engine ensures that the mortgage/equity insurer receives full economic compensation for the paydown on a risk-adjusted basis in place of the defaulting investor, and, in addition, the mortgage/equity insurer receives the defaulting investor's entire investment interest as a bonus. These two elements facilitate the paydown transaction by creating strong incentives for the mortgage/equity insurer to make the paydown.

Referring to FIG. 18, a flow diagram (1800) illustrating the process for extracting contract provisions data from the blockchain system and for causing activation of a payment engine to generate and write payment data to the blockchain system. In one embodiment, failure of the homeowner to make a mortgage payment obligates the investor to make the payment instead if certain conditions including at least adequacy of the homeowner's earned equity position to provide surety for the homeowner's maintenance obligations are met. When a mortgage payment is overdue, the processing server of the mortgagee, through a transmitting unit, sends an overdue payment notice to a receiving unit of a processing server operated by the managing entity on which the contract engine resides (1802). Upon receiving the notice, the contract engine transmits through a transmitting unit a query of the housing instrument data blockchain system along with access authorization data to extract relevant data on the contractual provisions that cover investor obligations in an overdue payment situation, including time limits for investors to correct the situation (1804).

The housing instrument data blockchain system implements its access protocol to determine if the contract engine has access to the requested data. After verification that access is permitted, the contract engine receives this data via a receiving unit (1806). The contract engine uses this data to verify that the investor has an obligation to make the mortgage payment and the terms, conditions, and timing of that obligation (1808). The contract engine transmits through a transmitting unit a query of the housing instrument data blockchain system along with access authorization data to extract relevant data on the reduction in the homeowner's earned equity position that will result if the investor immediately makes the mortgage payment instead of the homeowner (1810). The housing instrument data blockchain system implements its access protocol to determine if the contract engine has access to the requested data. After verification that access is permitted, the contract engine receives this data via a receiving unit. A processing unit of the contract engine computes the earned equity impact if the investor made the payment immediately instead of the homeowner (1812) and then formulates an overdue payment procedure message (1814) that contains overdue payment procedure data including at least the following: (i) the amount of the mortgage payment; (ii) the fact that it is overdue; (iii) the obligation of the investor to make the payment if the homeowner fails to do so; (iv) the reduction in the homeowner's earned equity position that would result if the investor made the payment immediately instead of the homeowner; (v) the time limit for the homeowner to make the payment before the investor must do so; (vi) the fact that the homeowner may make future additional payments that offset the reduction in earned equity from missing this payment; (vii) the fact that such future additional payments most likely will be on different terms so that the amount needed to restore the homeowner's earned equity position to the level it would have had if the homeowner made the mortgage payment may be more or less than the omitted mortgage payment; (viii) a request that the homeowner inform the managing entity and the investor if the homeowner intends not to make the payment by the time limit, which will obviate any future communications; and (ix) an invitation to the homeowner to discuss with the managing entity whether the homeowner's financial situation will make it difficult to make mortgage payments following the overdue one, enabling the managing entity, investor, and homeowner to come up with a plan to address the situation, a plan that might include the investor making the mortgage payments instead of the homeowner for an extended period of time.

The processing unit further formulates three web displayable versions of the overdue payment procedure data, suitable for the homeowner, the investor, and the mortgage/equity insurer respectively (1814). Through a transmitting unit, the contract engine sends the three displayable versions to a website operated by the managing entity, making each version accessible to the corresponding party: the homeowner, the investor, and the mortgage/equity insurer (1816). The contract engine via a transmitting unit alerts the homeowner, the investor (or an artificial intelligence entity representing the investor), and the mortgage/equity insurer (or an artificial intelligence entity representing the mortgage/equity insurer), who may be offline, of the data in the version appropriate to each party via email or an SMS message through a mobile phone or other receiving device.

The contract engine enables a payment engine (1818), using methods that will be apparent to one skilled in the art, that monitors the status of the overdue mortgage payment, informs the investor if the homeowner indicates an intention not to make the payment by the time limit, sends the homeowner and investor appropriate periodic notices until one of them makes the payment (1820), and then generates a payment completion message (1822) which it sends through a transmitting unit to a receiving unit of the contract engine. The payment completion message contains payment data including at least: (i) the fact of payment; (ii) any relevant verification data; (iii) the amount of payment; (iv) the date and time of payment; and (v) the identity of the payer. After receiving the payment message, the contract engine transmits through a transmitting unit a query of the housing instrument data blockchain system along with access authorization data for permission to write the payment data on the blockchain.

The housing instrument data blockchain system implements its access protocol to verify that the contract engine has the required level of permission to write such data on the blockchain. After verification, a processing unit of the contract engine reformulates the relevant payment data and through a transmitting unit writes it on the housing instrument data blockchain (1824). The contract engine transmits through a transmitting unit a query of the housing instrument data blockchain system along with access authorization data to extract relevant data on the impact on the earned equity position of the homeowner arising from the investor versus the homeowner making the mortgage payment (1826). The housing instrument data blockchain system implements its access protocol to determine if the contract engine has access to the requested data. After verifying that access is permitted, the contract engine receives this data via a receiving unit, and the processing unit associated with the contract engine computes the impact on the homeowner's earned equity position of the investor versus the homeowner making the payment (1828). After completing that computation, the contract engine, through a processing unit, formulates payment completion data that includes at least: (i) the amount of the mortgage payment; (ii) the identity of the payer; (iii) the impact on the homeowner's earned equity payment from the homeowner making or forgoing the payment; (iv) if the homeowner did not make the payment, the fact that the homeowner may make future additional payments that offset the reduction in earned equity from missing this payment; and (v) the fact that such future additional payments most likely will be on different terms so that the amount needed to restore the homeowner's earned equity position to the level it would have had if the homeowner made the mortgage payment may be more or less than the omitted mortgage payment (1830). The processing unit further formulates three web displayable versions of the payment completion data, suitable for the homeowner, the investor, and the mortgage/equity insurer respectively. Through a transmitting unit, the contract engine sends the three displayable versions to a website operated by the managing entity, making each version accessible to the corresponding party: the homeowner, the investor, and the mortgage/equity insurer (1832). The contract engine via a transmitting unit alerts the homeowner, the investor (or an artificial intelligence entity representing the investor), and the mortgage/equity insurer (or an artificial intelligence entity representing the mortgage/equity insurer), who may be offline, of the data in the version appropriate to each party via email or an SMS message through a mobile phone or other receiving device.

Referring now to FIG. 14, through a transmitting unit, the contract engine sends a payment completion message to a receiving unit of a mortgage data engine, the message including the fact that the contract engine already wrote the mortgage payment data onto the housing instrument data blockchain. The mortgage data engine transmits through a transmitting unit a query of the housing instrument data blockchain system along with access authorization data to extract data adequate to update the status of the mortgage including at least the payment history, the current principal balance and monthly payment amount following the mortgage payment, and the loan-to-value ratio based on the most recent operative valuation of the home residing on the housing instrument data blockchain (1408).

The housing instrument data blockchain system implements its access protocol to determine if the mortgage data engine has access to the requested data. After verifying that access is permitted, the mortgage data engine receives this data via a receiving unit (1410), and a processing unit of the mortgage data engine organizes this mortgage-related data into a form suitable for website display, resulting in a package of displayable mortgage-related data (1412). Through a transmitting unit, the mortgage data engine sends the displayable mortgage-related data to a website accessible to the homeowner, the investor, and the mortgage/equity insurer where the mortgage-related data is updated using the displayable mortgage-related data received (1414). The mortgage data engine via a transmitting unit alerts the homeowner, the investor (or an artificial intelligence entity representing the investor), and the mortgage/equity insurer (or an artificial intelligence entity representing the mortgage/equity insurer), who may be offline, of the updated mortgage-related information via email or an SMS message through a mobile phone or other receiving device. The balancing mechanism embodied in the balancing engine ensures that the investor receives full economic compensation if the investor is obligated to make the mortgage payment omitted by the homeowner because the homeowner's earned equity position, itself a future obligation of the investor, will be reduced by the appropriate amount. This element facilitates the mortgage payment by creating appropriate incentives for the investor to make the payment.

The embodiments of MM-1 housing arrangements just described illustrate that even in an environment with multiple third parties (versus the homeowner and investor) engaged in complex transactions, the computer technology comprising the invention enables the homeowner to access a single website and various GUI-based pages in order to engage in a large number of functions at low cost and nearly instantaneously: monitoring earned equity levels and current data about the governing housing instrument, monitoring the status of an underlying mortgage, addressing a missed payment, and more generally obtaining relief from payments during a stretch of financial difficulty. The embodiments illustrate how the computer technology comprising the invention facilitates the complex interactions involving the third-parties (in the specific example above, a mortgage/equity insurer and a mortgagee) as well as the homeowner and investor in a way that at the same time enables a low-cost integrated presentation on a single website. The invention enables the web presentation for homeownership that parallels the scope of the presentation on investment services websites in which complex auxiliary functions involving third parties operate effectively but invisibly.

It should be appreciated that the invention enables many other tasks for MM-1 arrangements and other arrangements involving third parties that go beyond the ones presented in the examples above. For instance, according to one or more embodiments, in the case of MM-1 arrangements the computer technology that comprises the invention can ensure a low-cost, integrated website presentation while at the same time enabling the tasks described above with respect to MM-0 including at least: (i) "refinancing" by changing the level of payments; (ii) reducing the level of financing by paying down the equity held by the investor; and (iii) increasing the level of financing on current market terms by selling earned equity back to the investor. The fragmentation, high cost, and lack of coordination that characterizes current technology applicable to housing finance is cured by this system in the case of MM-1 housing arrangements and similar arrangements involving third parties as well as in the case of MM-0. Both MM-0 and MM-1 arrangements are direct arrangements that can be implemented directly from the output of a balancing engine that incorporates a balancing mechanism which achieves neutrality. But the invention is more general as indicated by the next two sections.

*A Scheduled Earned Equity Housing Finance Arrangement*

MM-0 and MM-1 arrangements both leave the earned equity outcome for the homeowner uncertain. For example, as is evident from equations (1), (2), (4) and (5), if the implicit rent for the home increases relative to the home price, then the homeowner will accrue a lower amount of earned equity in percentage terms. An alternative approach is to fix the schedule for the accrual of earned equity in advance. However, unless another residual account such as payments picks up the uncertainty, e.g. by varying payments from the homeowner to the investor to produce the desired schedule of accrual of earned equity, then the housing finance arrangement will be non-neutral. Suppose, for example, that the fixed accrual schedule for earned equity is based on assumed values for the net contribution elements and that all of the elements except for the rent-price ratio meet the assumptions over time. If the rent-price ratio rises above the assumed ratio, then the arrangement favors the homeowner. If the rent-price ratio falls below the assumed ratio, then the arrangement favors the investor. In the first case, the homeowner has an incentive to stay in the home and keep the now better-than-market deal. In the second case, the homeowner has an incentive to refinance, obtaining, for example, a new fixed earned equity accrual schedule that is more favorable.

This asymmetry problem, caused by the homeowner's prepayment option, means that the investor must charge a premium up front or an exit fee to take into account that the homeowner has an incentive to dump the arrangement if it favors the investor but to retain it if it favors the homeowner. The homeowner must monitor the situation and refinance when conditions swing in favor of the investor. Neutrality is lost because market fluctuations cause the arrangement to favor either the homeowner or the investor with the ensuing consequence that the option to prepay becomes an important factor. Nonetheless, for some risk-averse homeowners, the benefits of lowering risk by fixing the earned equity accrual schedule will outweigh the added complexities and any associated restrictions or charges that are required to address the asymmetry problem.

Because this arrangement is not neutral, it cannot be implemented as a direct arrangement using a neutral balancing engine that generates the outcomes of the arrangement as is the case with direct arrangements such as those in the MM-0 or MM-1 class. Nonetheless the computer technology comprising the invention can use a suitable neutral balancing mechanism to create the same low-cost, integrated website presentation as it can for MM-0 and MM-1 housing finance arrangements.

Consider a particular housing finance arrangement that meets all the criteria of an MM-0 housing finance arrangement except that the accrual of earned equity received by the homeowner is scheduled, fixed in advance. When the house is sold and the arrangement terminates, this scheduled outcome almost always deviates from what would have been the unscheduled outcome for the homeowner under MM-0. Suppose that the arrangement includes a third party that agrees to take on a position that has a payoff equal to what the homeowner would have received as the unscheduled amount minus the scheduled amount that the homeowner actually received. In general this position might be called a "residual balancing position" or "RBP" for short because it covers the gap between the unscheduled residual amount and the scheduled fixed amount for the homeowner. Here we call it an "equity balancing position" or "EBP" for short since the residual account in this arrangement is earned equity, which is unleveraged equity in the home. The third-party holding the EBP absorbs the risk in the residual earned equity account that otherwise would be borne by the homeowner. We therefore refer to this arrangement as an "EBP arrangement."

To illustrate the EBP arrangement, suppose that the homeowner sells the home for $100,000 after seven years at which time the scheduled amount of earned equity accrued by the homeowner is 25% versus the unscheduled amount that would have been 30%. The EBP is credited with the 5% difference. The homeowner emerges with $25,000, the investor with $70,000, and the third party that holds the EBP with $5,000. If the unscheduled amount is 23% instead of 30%, then the homeowner emerges with $25,000, the investor receives $75,000 from the sales proceeds, and the third party that holds the EBP pays the investor an additional $2,000, bring the investor up to $77,000. In this case, the third party holding the EBP suffers a $2,000 loss.

The EBP arrangement is defined by the following properties:

(1) **Unscheduled Earned Equity Outcomes are MM-0 Outcomes.** The unscheduled earned equity outcomes are those that would have occurred under an MM-0 housing finance arrangement.

(2) **The Homeowner's Earned Equity Outcome is Scheduled.** The homeowner receives a percentage of earned equity according to a schedule based on the holding period. The schedule determines the outcome absent any changes such as changing the level of payments between the homeowner and investor, a purchase by the homeowner of additional equity from the investor, or a sale by the homeowner of earned equity to the investor.

(3) **The EBP Outcome is the Hypothetical Unscheduled Earned Equity Outcome for the Homeowner minus the Actual Scheduled Outcome.** If the unscheduled outcome would have been *U* and the scheduled outcome was S in percentage points, then the outcome for the third party holding the EBP is *U* - S in percentage points. If the outcome is a negative, the third party holding the EBP pays the corresponding percentage of home value to the investor at sale. If the outcome is positive, the third party holding the EBP receives the corresponding percentage of the sales proceeds.

(4) **The Investor Always Receives an Amount Equal to the MM-0 (Unscheduled) Outcome.** If the EBP is positive at sale, the investor receives a share of the sale proceeds equal to what the investor would have received under an MM-0 arrangement, and the third party holding the EBP splits with the homeowner what would have been the homeowner's share under the MM-0 arrangement. If the EBP is negative at sale, the homeowner receives more than what would have been the unscheduled amount of earned equity, and the rest of the sales proceeds go to the investor. The EBP pays the investor an amount equal to the excess received by the homeowner over the unscheduled amount the homeowner would have received under the MM-0 arrangement. This payment when combined with the investor's share of the sales proceeds results in the investor receiving in total exactly what the investor would have received under the MM-0 arrangement. This property is very important if the investor's goal is a portfolio of raw owner-occupied real estate returns, home appreciation plus net rent, because that is what the investor's position yields in the MM-0 arrangement.

Because the EBP arrangement is not neutral, embodiments of the arrangement typically will work best with some restrictions or charges that mitigate the asymmetry problem, the fact that the homeowner has an incentive to refinance out of situations in which market fluctuations make the arrangement more favorable to the investor and to hold onto the arrangement, perhaps longer than otherwise, if it favors the homeowner. The third party holding the EBP is taking on two risks. First, there is the "prepayment risk" that arises from the asymmetry problem: The homeowner may prepay and refinance the arrangement if market conditions result in the fixed earned equity accrual favoring the EBP holder. Second, even assuming no prepayments, the EBP shifts the risk associated with fluctuations in the rate of earned equity accrual from the homeowner to the third-party holder of the EBP. Under the arrangement, the homeowner secures a fixed schedule of earned equity accumulation and the EBP precisely absorbs what otherwise would have been the fluctuations of the accrual rate, an "investment risk." This investment risk may require a premium in some form for the EBP to be viable if the shifted risk is positively correlated with systematic risk in the economy, but the direction and size of the correlation is unclear.

The asymmetry problem creates several issues with respect to various actions that the homeowner might take. Refinancing is an obvious one. In the EBP arrangement refinancing is equivalent to buying out the investor's equity position and then financing the buyout amount with a new EBP arrangement, a conventional mortgage, or otherwise. The low-cost, nearly instantaneous refinance of the EBP made possible by the computer technology that comprises the invention worsens the asymmetry problem by making refinance so easy and cheap that the homeowner can avoid continuing in EBP arrangements that favor the investor even slightly while hanging onto EBP arrangements that favor the homeowner. The homeowner also may choose to replace an unfavorable EBP arrangement with a financing method other than another EBP arrangement. For example, the homeowner may shift to an MM-0 arrangement or even simply hold all the equity in the home after buying out the investor's equity, in effect, self-financing.

Refinancing is not the only transaction that is impacted by the asymmetry problem. Any action that alters the original envisioned pattern of homeowner contributions undermines the original EBP arrangement because the fixed schedule of earned equity accrual assumes the envisioned pattern. For example, if the homeowner elects to reduce the level of the payments to the investor, there needs to be a downward adjustment in the accrual rate of earned equity. The existing fixed schedule must be replaced. One approach would be to simply close the existing EBP arrangement and create an entirely new one based on current market conditions. However, if market parameters have caused the old arrangement to favor the investor, the shift is equivalent to refinancing strategically to get out of the old arrangement. A second example is purchase by the homeowner of additional equity from the investor. This action both negates the applicability of the existing fixed schedule of earned equity accrual and amounts to a partial replacement of the EBP arrangement with self-financing, which permits a partial escape for the homeowner from an EBP that becomes favorable to the investor.

There are many ways to address the asymmetry problem and adjust the EBP arrangement terms to compensate the EBP holder for prepayment risk and investment risk that will be clear to a person skilled in the art. One embodiment, detailed in the next section, uses two methods that may be employed separately or in conjunction. First, some actions by the homeowner result in an adjustment charge, which can be in the form of a certain amount of earned equity or cash. For example, cashing out, refinancing, or adjusting the EBP position before sale of the home might result in an adjustment charge in the form of transferring some of the homeowner's earned equity to the EBP holder as part of completing the action. The amount of the charge may depend on factors such as the particular homeowner action, the time since the EBP was originated, and the degree to which the EBP is favorable to the EBP holder. With respect to the third factor, the adjustment fee may be set so that the homeowner compensates the EBP holder for part or all of the benefit that the EBP holder loses when the homeowner action results in termination of an EBP arrangement that has become favorable to the investor. Setting the adjustment fee in this way may eliminate much of the asymmetry problem along with the corresponding prepayment risk for the EBP holder.

A second method is to adjust the fixed schedule for accrual of earned equity itself. This method has particular value in addressing the investment risk that the EBP holder faces from taking on the uncertainty with respect to the accrual rate of earned equity that the homeowner would have faced without a fixed schedule. If the investment risk is positively correlated with systematic risks in the economy, it is priced in the market and requires a premium for the EBP investor. One way to create a premium is to reduce the scheduled rate of earned equity accrual. This reduction increases the EBP holder's expected return because the EBP holder realizes amounts equal to the unscheduled outcome minus the scheduled outcome, and now the scheduled outcomes are lower. The reduction in the scheduled rate may be set so that the increase in expected return exactly covers the market price of the investment risk.

Best practice, even when it is not required by regulation, is to disclose the potential adjustment charges along with how they are calculated and the method of setting the fixed schedule for homeowner accrual of earned equity as part of the initial contractual provisions that establish the EBP arrangement. In the embodiment detailed below, data for these elements are recorded on a blockchain to facilitate the operation of the computer technology that comprises the invention.

*Implementation of an EBP Housing Finance Arrangement with Scheduled Earned Equity Accrual*

To describe how the invention implements an embodiment of an EBP housing finance arrangement, we focus on the simple case of a homeowner, a single investor, and a single third-party that holds the EBP. At the core of the implementation of the invention is a balancing engine embodied in a processing unit, at least one receiving unit, and at least one transmitting unit operated on a processing server by the managing entity. The balancing engine assesses over time the ongoing contributions of the homeowner and investor, considering the housing arrangement between them as a joint venture. In one embodiment, the investor initially finances the entire home, the homeowner makes payments to the investor, the homeowner makes property tax payments, the homeowner maintains the home, and the homeowner lives in the home.

In this embodiment, the homeowner's net contribution equals (i) the homeowner's payments to the investor, (ii) the property tax payments, (iii) the maintenance, and (iv) other obligations such as insurance, less (v) what would be charged as rent (the "implicit rent"), which is the value of living in the home. The balancing mechanism requires a residual account to reconcile the interests of the homeowner, investor, and EBP holder. This embodiment employs a balancing mechanism appropriate for an MM-0 housing finance arrangement in which the residual account consists of earned equity, an unleveraged interest in the home, which the investor in an MM-0 arrangement would pay the homeowner upon sale of the home or termination of the financing arrangement, and the payments are set so that the homeowner's net contribution is positive. This embodiment, however, is not an MM-0 housing finance arrangement. Instead, the homeowner accrues earned equity under a schedule that is fixed in advance. The outcome for the homeowner is the "scheduled outcome," a certain number of percentage points representing the homeowner's share of the home sale proceeds. The balancing engine result is an "unscheduled outcome" in percentage points that would be the actual outcome for the homeowner in an MM-0 housing finance arrangement. Unlike the scheduled outcome, the unscheduled outcome is not known in advance but depends on the values of various economic parameters during the period of the arrangement. In this embodiment the unscheduled outcome is an accounting quantity used to compute returns for the EBP holder. At sale, the EBP holder receives proceeds from the housing sale equal in percentage points to the unscheduled outcome minus the scheduled outcome if it is greater than or equal to zero. If, instead, the scheduled outcome is greater than the unscheduled outcome, then the EBP pays the investor in cash a percentage of the sales proceeds equal in percentage points to the scheduled outcome minus the unscheduled outcome.

The embodiment includes a transition agreement between the three parties: homeowner, investor, and EBP holder. The transition agreement goes into effect when the homeowner initiates certain changes including at least: (i) changing the level of payments made by the homeowner to the investor; (ii) buying equity from the investor; (iii) selling equity to the investor; (iv) refinancing the EBP arrangement by terminating the old arrangement and associated fixed schedule of homeowner earned equity accruals in favor of a new EBP arrangement on market terms that includes a new and different fixed schedule of homeowner earned equity accruals; or (v) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under an EBP arrangement. These changes typically require terminating the existing EBP arrangement, adjusting equity shares as if the home were sold, and then a cash transaction that closes equity credits or debits held by the EBP holder, creating corresponding equity adjustments for the investor and homeowner. If the EBP holder has an equity credit, the EBP holder sells the corresponding equity position to the investor at the operative valuation for the home. If the EBP holder has an equity debit, then the EBP holder owes equity to the homeowner. In that case, the EBP holder buys the requisite equity share from the investor at the operative valuation of the home for purposes of the transition agreement and then transfers that requisite equity share to the homeowner. The equity shares that emerge from this process for the homeowner and investor become the baseline equity shares for the new EBP or MM-0 arrangement that replaces the existing EBP arrangement. The transition agreement obligates the parties to engage in the required transitional cash and equity transfers. The embodiment includes computer technology that facilitates the cash and equity transfers with the goal that they will be nearly instantaneous.

Referring to FIG. 19, a flow diagram (1900) illustrating the process for updating the blockchain system in relation to an initiated EBP arrangement. In the embodiment, a contract engine operating on a processing server controlled by the managing entity initiates, implements, enforces, and updates the housing finance arrangement between at least a homeowner, an investor, and an EBP holder, functions that include creating, updating, and accessing contractual information that governs the EBP housing finance arrangement. The contract engine is embodied in at least one processing unit, at least one receiving unit, and at least one transmitting unit. Input data for the contract engine resides in a housing instrument data blockchain including at least the data that encodes the contractual provisions that govern the EBP housing finance arrangement. When the EBP housing arrangement is initiated (1902), the managing entity causes initial contract data to be sent to a receiving unit of the contract engine processing server. This initial contract data includes at least: (i) the names, addresses, and contact information for the initial parties to the contract; (ii) all of the contractual terms; and (iii) information about purchase or ownership of the house including at least the title and evidence of title insurance.

The contractual terms include at least: (i) the initial fixed schedule of earned equity accruals in favor of the homeowner; (ii) the initial equity holdings of the homeowner and investor; and (iii) any adjustment charges that apply if the homeowner takes actions that include at least refinancing the arrangement, changing the level of payments to the investor, or buying some of the investor's equity. The contract engine through a processing unit formats the initial contract data into a form suitable for writing onto the housing instrument data blockchain (1904). The contract engine transmits through a transmitting unit a query of the housing instrument data blockchain system along with access authorization data to secure permission to write the formatted contract data onto the blockchain. The housing instrument data blockchain system implements its access protocol to verify that the contract engine has the requisite permissions. After receiving confirmation of the verification through a receiving unit, the contract engine, through a transmitting unit writes the initial contract data onto the blockchain, creating a record of the new housing finance arrangement on the blockchain (1906).

Referring to FIG. 20, a flow diagram (2000) illustrating the process for adding balance entry data to the blockchain system in relation to unscheduled outcomes. In the embodiment, a balancing engine residing on a processing unit controlled by the managing entity creates and updates a time series of hypothetical unscheduled outcomes, the earned equity accumulation of the homeowner under an MM-0 housing arrangement. The data for input into the balancing engine resides in a housing instrument data blockchain. The data includes a time series of all the contribution elements including at least homeowner payments to the investor. Periodically, the managing entity or an artificial intelligence entity representing it, sends a message to a receiving unit of the balancing engine initiating a balancing entry of the current hypothetical unscheduled outcome onto the housing instrument data blockchain (2002). The balancing engine transmits through a transmitting unit a query of the housing instrument data blockchain system along with access authorization data to extract relevant data on contributions and other elements, including the governing algorithm for computing earned equity under the hypothetical MM-0 housing finance arrangement, itself encoded on the housing instrument data blockchain (2004).

The housing instrument data blockchain system implements its access protocol to verify that the balancing engine has access to the requested data. After verification, the balancing engine receives the requested data via a receiving unit, and the processing unit associated with the balancing engine updates the unscheduled outcome, a hypothetical earned equity balance for the homeowner, along with associated quantities that use the unscheduled outcome as inputs including at least the percentage shares and amounts that the homeowner, investor, and EBP holder would realize or pay if the home were sold at the current operative valuation recorded on the housing instrument data blockchain (2006). The balancing engine transmits through a transmitting unit a query of the housing instrument data blockchain system along with access authorization data to secure permission to write the updated unscheduled outcome and associated quantities on the blockchain.

The housing instrument data blockchain system implements its access protocol to verify that the balancing engine has the requisite permissions. After verification, the balancing engine through a transmitting unit writes the updated unscheduled outcome and associated quantities on the housing instrument data blockchain (2008). The balancing engine sends via a transmitting unit, the updated unscheduled outcome and associated quantities to a website controlled by the managing entity and accessible to the homeowner, the investor, and the EBP holder where the updated value along with the associated quantities are reported (2010). The balancing engine via a transmitting unit alerts the homeowner, the investor (or an artificial intelligence entity representing the investor), and the EBP holder (or an artificial intelligence entity representing the EBP holder), who may be offline, of the updated unscheduled outcome and associated quantities via email or an SMS message through a mobile phone or other receiving device.

An embodiment can be understood with reference to FIG. 7. The input data for the balancing operation that underlies creation of the time series of unscheduled outcomes resides on the housing instrument data blockchain and is generated and updated by multiple data engines residing on one or more servers controlled by the managing entity, each data engine including at least one processing unit, at least one receiving unit, at least one transmitting unit, and at least one database. Each data engine operates for the purposes of creating, gathering, updating, processing, storing, and communicating at least one time series of at least one data parameter. A valuation engine, a data engine operating on a processing server controlled by the managing entity, creates and updates a time series of house values for the home that is subject to financing by writing to the housing instrument data blockchain. The valuation engine receives a data request corresponding to a home valuation request (702). The valuation engine through one or more receiving units collects third-party valuations via a query (704). The valuation engine through a transmitting unit encodes these valuations in a database (706). Through a processing unit, the valuation engine generates, when applicable (708), one or more non-third-party valuations (710) and combines both the third-party valuations and the non-third-party valuations (712) using one or more statistical procedures into an operative valuation for use by the balancing engine and the contract engine. Through a transmitting unit, the valuation engine transmits a query of the housing instrument data blockchain system along with access authorization data to secure permission to write the updated operative valuation, the calculation methodology, and other updated valuation data on the blockchain.

The housing instrument data blockchain system implements its access protocol to verify that the balancing engine has the requisite permissions. After verification, the valuation engine through a transmitting unit writes the updated operative valuation along with a timestamp and a record of the calculation (714) including at least the third-party and non-third-party valuations, the methodology used to compute the non-third-party valuations, and the methodology used to compute the updated operative valuation and other valuations on the housing instrument data blockchain (716). The valuation engine generates a data message (718) and sends via a transmitting unit (720), at least the new operative valuation along with the third-party and non-third-party valuations to a website controlled by the managing entity and accessible to the homeowner, the investor, and the EBP holder where these valuations are reported. The valuation engine via a transmitting unit alerts the homeowner, the investor (or an artificial intelligence entity representing the investor), and the EBP holder (or an artificial intelligence entity representing the EBP holder), who may be offline, via email or an SMS message through a mobile phone or other receiving device of the new operative valuation if they have requested updates of the operative valuation generally or upon certain values being realized.

Other data elements including at least implicit rent, depreciation, and property tax liability are governed by other data engines operating in a manner similar to the valuation engine.

An embodiment can be understood with reference to FIG. 21, a flow diagram (2100) illustrating the process for extracting contract data from the blockchain system, computing an offer data ensemble, and writing the offer data ensemble to the blockchain system in relation to a payment change request in accordance with exemplary embodiments. The homeowner may want to change the level of payments to the investor, effectively refinancing the home finance arrangement. The homeowner accesses the website operated by the managing entity and requests a change in the level of the payment, specifying one or more potential new payment levels, generating a message, comprising at least the request and the potential new levels, sent through a transmitting unit to the receiving unit of a contract engine controlled by the managing entity (2102). The contract engine processing unit sends through a transmitting unit a query of the housing instrument data blockchain system along with access authorization data to extract relevant underlying data for generating offers to the homeowner associated with each new payment level of interest to the homeowner (2104). The relevant underlying data includes at least the necessary contract information and the most up-to-date values of the unscheduled outcome, of the scheduled outcome, of the operative valuation of the home, and of the parameters that go into the balancing calculation to update the unscheduled outcome. The necessary contract information includes at least the rules and algorithms needed to compute a new fixed schedule of homeowner earned equity accrual and the value of any adjustment charges associated with each potential new payment level submitted by the homeowner.

The housing instrument data blockchain system implements its access protocol to verify that the contract engine has access to the requested data. After verification, the contract engine receives this data via a receiving unit (2106), and the processing unit associated with the contract engine uses the contract rules and algorithms to compute offer data consisting of: for each proposed new payment level, at least the new fixed schedule of homeowner earned equity accrual and any adjustment charges and also any adjustment charge for a shift from the current EBP arrangement to an MM-0 arrangement along with the change in payment level (2108). The contract engine generates an offer message (2110) containing at least the offer data and a request for a homeowner response (2110) and through a transmitting unit sends the offer message to a website controlled by the managing entity and accessible to the homeowner where the offer data is displayed (2112). The request for a response indicates the deadline for the homeowner to respond to the offered terms. The contract engine via a transmitting unit alerts the homeowner, who may be offline, of the offers and request for response, including the deadline for responding, via email or an SMS message through a mobile phone or other receiving device. The contract engine, through a processing unit, computes an offer data ensemble (2114) suitable for writing on the housing instrument data blockchain consisting of at least: (i) the offer data; (ii) the underlying data extracted from the housing instrument data blockchain as a first step in the process of generating offers; (iii) a date and time indicating when the offers were first promulgated; and (iv) an indication of the stated deadline for responding to the offers. Through a transmitting unit, the contract engine transmits a query of the housing instrument data blockchain system along with access authorization data to secure permission to write the offer data ensemble on the blockchain. The housing instrument data blockchain system implements its access protocol to verify that the contract engine has the requisite permissions. After verification, the contract engine through a transmitting unit writes the offer data ensemble on the housing instrument data blockchain (2116).

An embodiment can be understood with reference to FIG. 22, a flow diagram (2200) illustrating the process for computing a required allocation, causing a bank transfer to execute, and updating the blockchain system in relation to an accepted payment offer in accordance with exemplary embodiments. If the homeowner wishes to accept one of the offers, the homeowner accesses the website operated by the managing entity and indicates the homeowner's choice of the desired offer and goes through a security protocol that verifies the identity of the homeowner, generating a message, comprising at least an indication of acceptance of the desired choice, confirmation of the verification of identity, and the terms of the accepted offer, sent through a transmitting unit to the receiving unit of the contract engine (2202). The contract engine through a processing unit initiates a termination process for the existing EBP arrangement (2204). As a first step, the contract engine processing unit sends through a transmitting unit a query of the housing instrument data blockchain system along with access authorization data to extract the offer data ensemble from the blockchain (2206).

The housing instrument data blockchain system implements its access protocol to verify that the contract engine has access to the requested data. After verification, the contract engine receives the offer data ensemble via a receiving unit. The offer data ensemble includes the most up-to-date values of variables as of the time of the offer, and in this embodiment these values determine the implementation of the accepted offer.

In the embodiment, the termination process closes the EBP arrangement, with the contract engine, through a processing unit, computing allocations as if the home were sold (2208). The contract engine computes the equity credits or debits of the EBP holder through several steps based on an imaginary sale using parameter values from the offer data ensemble. First, the contract engine compares the values of the scheduled outcome and the unscheduled outcome from the offer data ensemble. If the unscheduled outcome is greater than the scheduled outcome, the difference is the "EBP excess," the number of percentage points that represents the EBP holder's share of the proceeds if the home were sold. If the scheduled outcome is greater than the unscheduled outcome, then the difference, a positive number, is the "EBP deficit," the number of percentage points that represents the EBP holder's equity obligation to the homeowner. There also possibly is an adjustment charge, a number of percentage points that represents an equity share owed by the homeowner to the EBP holder. If there is an EBP excess, then the EBP excess plus the adjustment charge is equal to the "EBP equity credit." If there is an EBP deficit but it is less than the adjustment charge, then the adjustment charge minus the EBP deficit equals the EBP equity credit. If there is an EBP deficit that exceeds the adjustment charge, then the EBP deficit minus the adjustment charge equals the "EBP equity debit," a positive number.

The new starting equity positions that emerge from the termination process are: (i) for the homeowner, a number of percentage points equal to the scheduled outcome from the offer data ensemble minus the adjustment charge from the offer data ensemble; and (ii) for the investor, a number of percentage points equal to 100 minus the homeowner's percentage point share. To reach this allocation it is necessary to settle any EBP equity credit or EBP equity debit in cash.

If there is an EBP equity credit, then the contract engine through a processing unit computes the buyout amount the investor will need to pay the EBP holder to close out the EBP equity credit by buying the associated equity at the operative home valuation recorded in the offer data ensemble (2210). The contract engine creates an investor buyout demand message that contains buyout demand data including at least: (i) the percentage share of home equity that the investor is buying; (ii) the operative valuation at which the home is valued; (iii) the buyout amount; and (iv) instructions for making payment to the EBP holder. The contract engine, through a transmitting unit, sends the investor buyout demand message to a receiving unit of a payment engine specified in advance by the investor (2212). The payment engine creates a bank transfer from the investor to the account of the EBP equity holder (2214) and, through a transmitting unit, generates a payment confirmation message (2218) and sends the payment confirmation message to a receiving unit of the contract engine (2220), the payment confirmation message including at least data sufficient for the contract engine to confirm that payment has been made through procedures familiar to those skilled in the art. The contract engine through a processing unit prepares a package of transition data (2216) which contains at least: (i) the EBP equity credit amount along with the data and methodology used to compute it; (ii) the fact and confirmation of payment by the investor to the EBP holder; (iii) the new starting equity positions for the investor and homeowner emerging from the termination process; (iv) the fact that the existing EBP arrangement is terminated and a new EBP arrangement or new MM-0 arrangement is initiated; (v) the date and time of the transition; and (vi) the specifications of the new arrangement, including a new fixed schedule of homeowner earned equity accruals if the new arrangement is an EBP arrangement, with the specifications of the new arrangement matching the corresponding offer as described in the offer data ensemble. The contract engine, through a transmitting unit, transmits a query to the housing instrument data blockchain system along with access authorization data to secure permission to effect the arrangement shift and write the transition data on the blockchain.

The housing instrument data blockchain system implements its access protocol to verify that the contract engine has the requisite permissions. After verification, the contract engine through a transmitting unit writes the transition data on the housing instrument data blockchain (2222), effecting the shift to the new arrangement. The contract engine formulates three web displayable versions of the transition data, suitable for the homeowner, the investor, and the EBP holder respectively (2224). Through a transmitting unit, the contract engine sends the three displayable versions to a website operated by the managing entity, making each version accessible to the corresponding party: the homeowner, the investor, and the EBP holder (2226). The contract engine via a transmitting unit alerts the homeowner, the investor (or an artificial intelligence entity representing the investor), and the EBP holder (or an artificial intelligence entity representing the EBP holder), who may be offline, of the data in the version appropriate to each party via email or an SMS message through a mobile phone or other receiving device. The contract engine, through a transmitting unit, sends the transition data to a website controlled by the managing entity and accessible to the homeowner, the investor, and the EBP holder along with instructions causing the website to update both the commonly accessible areas and limited access areas of the website to display the new arrangement based on the details of the new arrangement encoded in the transition data.

If there is an EBP equity debit, then the contract engine through a processing unit computes the buyout amount the EBP holder will need to pay the investor to close out the EBP equity debit by buying the associated equity from the investor at the operative home valuation recorded in the offer data ensemble and transferring it to the homeowner (2210). The contract engine creates an EBP buyout demand message that contains buyout demand data including at least: (i) the percentage share of home equity that the EBP holder is buying; (ii) the operative valuation at which the home is valued; (iii) the buyout amount; and (iv) instructions for making payment to the investor. The contract engine, through a transmitting unit, sends the EBP buyout demand message to a receiving unit of a payment engine specified in advance by the EBP holder (2212). The payment engine creates a bank transfer from the EBP holder to the account of the investor (2214), generates a payment confirmation message (2218), and then sends the payment confirmation message through a transmitting unit to a receiving unit of the contract engine (2220), the payment confirmation message including at least data sufficient for the contract engine to confirm that payment has been made through procedures familiar to those skilled in the art. The contract engine through a processing unit prepares a package of transition data (2216) which contains at least: (i) the EBP equity debit amount along with the data and methodology used to compute it; (ii) the fact and confirmation of payment by the EBP holder to the investor; (iii) the new starting equity positions for the investor and homeowner emerging from the termination process; (iv) the fact that the existing EBP arrangement is terminated and a new EBP arrangement or new MM-0 arrangement is initiated; (v) the date and time of the transition; and (vi) the specifications of the new arrangement, including a new fixed schedule of homeowner earned equity accruals if the new arrangement is an EBP arrangement, with the specifications of the new arrangement matching the corresponding offer as described in the offer data ensemble. The contract engine, through a transmitting unit, transmits a query to the housing instrument data blockchain system along with access authorization data to secure permission to effect the arrangement shift and write the transition data on the blockchain.

The housing instrument data blockchain system implements its access protocol to verify that the contract engine has the requisite permissions. After verification, the contract engine through a transmitting unit writes the transition data on the housing instrument data blockchain (2222), effecting the shift to the new arrangement. The contract engine formulates three web displayable versions of the transition data, suitable for the homeowner, the investor, and the EBP holder respectively (2224). Through a transmitting unit, the contract engine sends the three displayable versions to a website operated by the managing entity, making each version accessible to the corresponding party: the homeowner, the investor, and the EBP holder (2226). The contract engine via a transmitting unit alerts the homeowner, the investor (or an artificial intelligence entity representing the investor), and the EBP holder (or an artificial intelligence entity representing the EBP holder), who may be offline, of the data in the version appropriate to each party via email or an SMS message through a mobile phone or other receiving device. The contract engine, through a transmitting unit, sends the transition data to a website controlled by the managing entity and accessible to the homeowner, the investor, and the EBP holder along with instructions causing the website to update both the commonly accessible areas and limited access areas of the website to display the new arrangement based on the details of the new arrangement encoded in the transition data.

In one or more embodiments, a similar process involving termination of an existing EBP arrangement and a suitable transition agreement between the three parties (homeowner, investor, and EBP holder) may be used to effect homeowner initiated changes other than modifying the level of payments made by the homeowner to the investor including at least: (i) buying equity from the investor; (ii) selling equity to the investor; (iii) refinancing the EBP arrangement by terminating the old arrangement and associated fixed schedule of homeowner earned equity accruals in favor of a new EBP arrangement on market terms that includes a new and different fixed schedule of homeowner earned equity accruals; or (iv) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under EBP arrangements. In an embodiment, these changes will require the same steps of terminating the existing EBP arrangement, adjusting equity shares as if the home were sold, and then cash transactions that close equity credits or debits held by the EBP holder, creating corresponding equity adjustments for the investor and homeowner, with the equity shares that emerge from this process for the homeowner and investor becoming the baseline equity shares for the new EBP or MM-0 arrangement that replaces the existing EBP arrangement.

The embodiments of EBP housing arrangements just described illustrate that even in the case of a housing finance that is not neutral, the computer technology comprising the invention enables the homeowner to access a single website and various GUI-based pages in order to engage in a large number of functions at low cost and nearly instantaneously including at least: (i) monitoring earned equity levels and viewing the fixed schedule that governs future accruals of earned equity; (ii) monitoring parameters such as home valuation in real time; (iii) inquiring about and viewing the terms and outcomes of changing the level of payments to the investor; (iv) effecting such a change if desired; (v) inquiring about and viewing the terms and outcomes of making other changes including at least: (a) buying equity from the investor; (b) selling equity to the investor; (c) refinancing the EBP arrangement by terminating the old arrangement and associated fixed schedule of homeowner earned equity accruals in favor of a new EBP arrangement on market terms that includes a new and different fixed schedule of homeowner earned equity accruals; or (d) refinancing the EBP agreement by terminating the old arrangement and the associated fixed schedule of homeowner earned equity accruals in favor of an MM-0 housing finance arrangement in which the schedule of homeowner earned equity accruals is not fixed but equals what would be the unscheduled outcome under EBP arrangements; and (vi) effecting any such change if desired. The embodiments illustrate how the computer technology comprising the invention facilitates the complex interactions involving at least one third party (in the specific example above, an EBP holder) as well as the homeowner and investor in a way that at the same time enables a low-cost integrated presentation on a single website. The invention enables the web presentation for homeownership that parallels the scope of the presentation on investment services websites in which complex auxiliary functions involving third parties operate "under the hood." The invention does so in a way that is similar to its implementation for MM-0 and MM-1 arrangements even though the EBP arrangements are not neutral and are not direct arrangements in which the balancing mechanism directly creates the allocation between homeowners, investors, and third parties participating in the housing arrangement. It will be clear to one skilled in the art that the computer technology that comprises the invention can achieve the same result for a wide variety of other housing arrangements that are not direct arrangements and may not be neutral.

*Transactions Between Investors*

In one embodiment, the title to the underlying homes is held by homeowners, by a partnership, or in another form in which investors are not on title but have a contractual position. In this embodiment the contractual rights can be set up so that investors can buy, sell, and exchange their positions with each other without necessitating a transfer of the property itself. In addition to simple transfers of investor interests, this ability allows certain portfolio balancing transactions between portfolio funds as investors to take place more easily. Whether or not the investors are portfolio funds, the computer technology comprising the invention can enable low-cost and efficient transfers between investors without requiring substantial involvement by homeowners who experience no interruption in the access provided by the computer technology comprising the invention to a single website and various GUI-based pages that enable the homeowner to engage in a large number of monitoring and action functions at low cost and nearly instantaneously.

*Investor Transaction Platform*

To describe how the invention implements an embodiment of an investor transaction platform, we limit the possible housing finance arrangements for each home to MM-0 housing finance arrangements in which there is a single homeowner and a single investor, each holding unleveraged equity interests, and no third-party participation in the form of a mortgage or otherwise. The innovation includes one or more embodiments where the investor transaction platform operates for housing finance arrangements other than MM-0 arrangements and for which there are multiple homeowners for a single home, multiple investors in a single home, or third parties who hold interests such as a mortgage or an EBP.

In one embodiment, the data describing homes and the applicable DOOR instrument housing arrangements resides in a housing instrument data blockchain. The data includes at least: (i) the characteristics of each home including at least the address and a systematic description of the physical properties of the home suitable for a real estate listing; (ii) the current contractual terms of the DOOR instrument housing finance arrangement along with the current values of quantitative elements that govern the arrangement including at least the level of payments from the homeowner to the investor; (iii) the current operative valuation of the home, the current operative imputed rental rate, and the current operative value of all other parameters that serve as inputs for the balancing mechanism that implements the DOOR instrument housing finance arrangement applicable to the home; (iv) the current equity stake of the investor in the home; (v) the complete history of the evolution of values and stakes for the DOOR instrument housing finance arrangement; (vi) whether the investor is currently offering part or all of the investor's stake for sale, in which case there is an "active sale offer"; and (vii) whether, in the absence of an active sale offer, the investor is open to unsolicited offers to buy part or all of the investor's equity stake, in which case, the investor's stake is "open to offers to buy."

In this embodiment, the title to the underlying homes is held by homeowners, by a partnership, or in another form in which investors are not on title but have a contractual position, the contractual rights in the DOOR instrument housing finance arrangements are set up so that investors can buy, sell, and exchange their positions with each other without necessitating a transfer of the property itself, and all of the DOOR instrument housing finance arrangements are MM-0 investment compatible.

An investor transaction website operated by the managing entity allows approved existing investors and pre-approved potential investors, collectively "approved investors," to engage in offers for purchase or sale of investor stakes in DOOR instrument housing finance arrangements through a transaction platform and to consummate the purchases or sales if the offers are accepted. The transaction platform portion of the website and the ability to transact on it is only accessible to approved investors who have been accepted as such and whose approved status is current under procedures that will be clear to one skilled in the art, that may involve both online and offline steps, and the outcomes and current status of which will be written on the housing instrument data blockchain. An approved investor accesses the transaction platform on the website through a password or other protocol that will be familiar to one skilled in the art. The transaction platform allows access to a listing portion of the website that presents active sales offers of investor stakes and the details of investor stakes for which the investor interest is open to offers to buy. The listing portion is organized and presented in a manner similar to real estate listing websites. If the approved investor is interested in a particular investor stake, the transaction platform facilitates both online and offline communication between the approved investor and the investor who is actively offering an investment stake or is open to offers to buy.

An embodiment can be understood with reference to FIG. 24, a flow diagram (2400) illustrating a buy offer process and an update to the blockchain system in relation to an accepted buy offer in accordance with exemplary embodiments. If the approved investor and an investor holding an investor stake in a DOOR instrument (the "target investor" for the offer) reach an agreement in principle to consummate a transaction, then the approved investor accesses the transaction platform website, identifies the investor stake of interest, and states the offering terms using electronic forms provided by the website on one or more GUI-based pages. The website, through a transmitting unit sends a buy offer message to a receiving unit of a transaction engine **118** operated by the managing entity (2402). An embodiment of the transaction engine can be understood with reference to FIG. 23, as it is a trading engine of FIG. 1. One exemplary embodiment of a transaction engine **118** has a receiving unit **2302** that receives data over one or more networks, a transmitting unit **2304** that transmits over one or more networks, a processing unit **2306** with the computer architecture to execute the exemplary embodiments, and a database **2308** for storing data. The buy offer message at least: (i) identifies the investor stake of interest; (ii) specifies the terms of the buy offer and the deadline for accepting the offer; and (iii) includes security information suitable to identify the approved investor as the sender of the message. The transaction engine sends through a transmitting unit a query of the housing instrument data blockchain system along with access authorization data to extract relevant data related to the buy offer message including at least data with respect to the identity of the investor holding the investor stake of interest, whether the stake is subject to an active sell offer or is open to offers to buy, and the identity and approval status of the approved investor sending the buy offer message (2404).

The housing instrument data blockchain system implements its access protocol to determine if the transaction engine has access to the requested data. After verifying permission for access, the transaction engine receives the relevant data from the housing instrument data blockchain via a receiving unit, and the processing unit associated with the transaction engine checks the approval status of the approved investor and matches the target investor with the investor stake of interest. If the approved status is current, the transaction engine through a transmitting unit sends a buy offer notice to a receiving unit of the target investor (2406) containing buy offer data including at least: (i) the identity and approved status of the approved investor making the offer; (ii) the terms of the offer; (iii) a deadline for accepting the offer after which it will expire; and (iv) a method of accepting or refusing the offer by conveying the offer or refusal to a receiving unit of the transaction engine. The transaction engine via a transmitting unit alerts the target investor (or an artificial intelligence entity representing the investor), who may be offline, via email or an SMS message through a mobile phone or other receiving device of the buy offer and the buy offer data. If the transaction engine, through a receiving unit, receives a message from the target investor refusing the offer (2414), then the transaction engine generates a refusal notice (2416), and, through a transmitting unit, sends the refusal notice to a receiving unit of the approved investor making the offer (2418) and alerts the approved investor, who may be offline, via email or an SMS message through a mobile phone or other receiving device of the refusal. If the offer expires because the target investor did not accept it by the deadline (2408), then the transaction engine generates an offer expiration notice (2410), and, through a transmitting unit sends the offer expiration notice both to a receiving unit of the approved investor making the offer and to a receiving unit of the target investor (2412) and also alerts the parties, one or both of whom may be offline, via email or an SMS message through a mobile phone or other receiving device of the expiration of the offer.

If the transaction engine, through a receiving unit, receives a message from the target investor accepting the offer (2414), then the transaction engine, through a transmitting unit sends an acceptance notice to a receiving unit of the approved investor making the offer and alerts the approved investor, who may be offline, via email or an SMS message through a mobile phone or other receiving device of the acceptance. The transaction engine through a processing unit prepares a set of requisite closing documents (2420), tailored to the particular approved investor, the particular target investor, and the particular investor stake. The transaction engine, through a transmitting unit, makes these forms accessible on the transaction platform website with access limited to the purchasing and selling investors through password protocols or other devices familiar to one skilled in the art. The transaction engine through a transmission engine sends an execution procedure notice to receiving units of the purchasing and selling investors and also alerts both investors, one or both of whom may be offline, via email or an SMS message through a mobile phone or other receiving device of the need to complete the closing documents online and make the required payment arrangements. After the documents are completed by both parties online and verified as complete in all respects by the transaction engine through its processing unit and payment is verified (2422), the transaction engine creates and organizes a transaction data package (2424) in a form suitable for writing on the housing instrument data blockchain. The transaction data package contains at least: (i) the parties to the transaction; (ii) the terms of the transaction; (iii) the date and time the transaction became effective; and (iv) a complete set of closing documents. The transaction engine transmits through a transmitting unit a query of the housing instrument data blockchain system along with access authorization data to secure permission to write the transaction data package onto the blockchain.

The housing instrument data blockchain system implements its access protocol to verify that the contract engine has the requisite permissions. After receiving confirmation of the verification through a receiving unit, the transaction engine, through a transmitting unit writes the transaction data package onto the blockchain (2426), creating a record of the transaction on the blockchain, and effectuating the transfer. The transaction engine generates a transaction message (2428) and sends, via a transmitting unit, the relevant portions of the transaction data package as well as notice that the transaction is complete to the portion of the transaction platform website accessible only to the purchasing and selling investors (2430). The transaction engine via a transmitting unit alerts the purchasing and selling investors, who may be offline, via email or an SMS message through a mobile phone or other receiving device that the transaction is completed and that the relevant completion data is available on the transaction platform website along with instructions to access the part of the website where that data resides.

The embodiment of the investor trading platform just described illustrates that the computer technology created by the invention allows investor transactions with respect to investor stakes in DOOR instrument housing finance arrangements to take place entirely in the background as far as homeowners are concerned. The homeowner's ability to access a single website and various GUI-based pages in order to engage in a large number of monitoring and action functions at low cost and nearly instantaneously created by the computer technology that comprises the invention is not affected. The homeowner does not even have to switch websites for purposes of making payments or receiving information, as is the case, for example, in some instances when mortgagee interests are transferred from one mortgagee to another under existing technology.

*Coordination of Investor Transactions with Portfolio Balancing*

In one embodiment, the managing entity operates one or more real estate portfolios as investor, and these portfolios have goals or targets including at least replicating municipal, regional, or national housing indices as closely as possible. Balancing such portfolios requires purchase and sales activity by the managing entity as investor to keep the portfolios on track versus the target in face of portfolio turnover including at least: home sales, homeowner accrual of earned equity, homeowner purchase of investor equity, or homeowner sale of earned equity to the investor under the terms of the governing housing finance arrangement.

Several of the DOOR instruments embodying housing finance arrangements described so far create a position for the investor equivalent to an MM-0 housing finance arrangement in which the position consists of unleveraged equity that earns the raw return on owner-occupied housing, which equals home appreciation plus imputed rent net of expenses. Although these "MM-0 investment compatible instruments" may differ with respect to the treatment of third parties or the homeowner, all of them are suitable for inclusion in portfolios designed to track or create housing indices. As a result, these portfolios have the full class of MM-0 investment compatible instruments available for inclusion, not just instruments that implement MM-0 arrangements directly. For example, the class of DOOR instrument implementations of the EBP arrangements described above consists of MM-0 investment compatible instruments because of the property that investor outcomes are the same as under MM-0 arrangements.

In an embodiment, a straightforward modification of the investor trading platform to at least restrict the scope to MM-0 housing finance arrangements and simplify the trading steps based on common management of the different portfolio funds can facilitate portfolio balancing purchases and sales between housing index portfolio funds in a way that requires no substantial participation by homeowners, who, as a consequence, will experience no interruption in the access provided by the computer technology comprising the invention to a single website and various GUI-based pages that enable homeowners to engage in a large number of monitoring and action functions at low cost and nearly instantaneously. The facilitation of portfolio balancing purchases and sales will be particularly valuable for portfolio funds that are embodied in cryptocurrencies as discussed above.

*Integration of Purchase, Origination, and Sales Elements*

The embodiments above describe how the computer technology comprising the invention makes it possible for homeowners and other interested parties to access a single website and various GUI-based pages in order to engage in a large number of functions at low cost and nearly instantaneously. Several of the embodiments indicate how the computer technology comprising the invention facilitates the complex interactions involving third-parties either among themselves or with the homeowner and investor in ways that at the same time continue to support a low-cost integrated presentation on a single website. The invention enables a web presentation for homeownership that parallels the broad scope of the presentation and functionality on investment services websites in which many complex auxiliary tasks involving third parties operate in a way that is not visible and that does not interrupt the functionality of the website for users.

Most of the embodiments above involved functions during the period of ownership such as changing the terms of the underlying housing finance agreement or the positions of the parties. In one or more embodiments, many purchase, origination, and sales elements may be integrated into the single website as well. The elements that can be integrated include at least: (i) online application by the homeowner for a DOOR instrument housing finance arrangement; (ii) underwriting and credit analysis with respect to that application; (iii) consumer education and disclosures with respect to the housing finance arrangement; (iv) the promulgation of documents, including closing documents; (v) escrow services; (vi) closing functions; (vii) the management of functions that cannot be performed online through communication with the relevant parties; and (viii) recording the transaction and archiving the relevant documents on one or more blockchains including at least a housing instrument data blockchain. Certain investors including at least one or more cryptocurrency-based housing portfolios operated by the managing entity may offer homes on the market in conjunction with DOOR instrument housing finance or may offer to buy out homeowners currently in DOOR instrument housing finance arrangements who wish to sell their homes. These "in system" sales and purchases through the single website create further scope for economizing on sale and purchase costs and for streamlining the required tasks.

*An Exemplary Embodiment*

In accordance with an embodiment, a computer technology system for real time, dynamic management of a real estate finance, services, and reporting comprises:

maintaining, on a website controlled by a managing entity and accessible to at least a homeowner and an investor, a display of the terms, parameter values, and upcoming required actions under a housing finance arrangement;

storing, in at least one blockchain system containing at least a housing instrument data blockchain, the system containing at least: contractual information specifying at least one housing finance arrangement between at least one homeowner and at least one investor financing a particular home, a time series of economic parameters relevant to dynamic management of at least one housing finance arrangement, a record of current and past ownership of the financing debt or equity, a record of transactions including at least payments by the homeowner to investors, a record of any adjustments to or changes in the housing finance arrangement, specification of at least one balancing mechanism designed to track at least the homeowner's and investor's net contributions considering the housing finance arrangement between them as a joint venture and to adjust at least one residual account to reflect the net contributions of the parties, a record of the data and calculations of a balancing engine operating continuously based on one or more balancing mechanisms along with the resulting adjustments of at least one residual account, an access protocol defining various levels of access to data in the blockchain system as well as levels of permission to write new data onto the blockchain system, and data describing the homes that are the subject of the housing finance arrangements;

maintaining, on at least one processing server controlled by a managing entity, a balancing engine embodied in at least one processing unit, at least one receiving unit, and at least one transmitting unit for purposes of implementing adjustments under a balancing mechanism;

receiving, periodically through a receiving unit of the balancing engine, a message from the managing entity or an artificial intelligence entity representing it, initiating a balancing entry onto the housing instrument data blockchain; transmitting, through a transmitting unit of the balancing engine, a query of the blockchain system for data relevant to a balancing calculation; receiving said data through a receiving unit of the balancing engine;

in a direct arrangement, determining through a processing unit of the balancing engine an updated balance in at least one residual account; writing, through a transmitting unit of the balancing engine, the updated residual account balance along with details of the computation on the housing instrument data blockchain; modifying, through a processing unit and a transmitting unit of the balancing engine, a website accessible at least to a homeowner and an investor to display the updated residual account balance and then, through a transmitting unit of the balancing engine, alerting at least a homeowner and an investor, who may be offline, of the updated residual account balance through a mobile phone or other receiving device;

or in an arrangement that is not a direct arrangement, determining through a processing unit of the balancing engine an updated unscheduled outcome and associated quantities that use the unscheduled outcome as an input; writing, through a transmitting unit of the balancing engine, the updated unscheduled outcome and associated quantities along with details of the computation on the housing instrument data blockchain; modifying, through a processing unit and a transmitting unit of the balancing engine, a website accessible to at least a homeowner, an investor, and a residual balancing position holder to display the updated unscheduled outcome and associated quantities and then, through a transmitting unit of the balancing engine, alerting at least a homeowner, an investor, and a residual balancing position holder, who may be offline, of the updated unscheduled outcome and associated quantities through a mobile phone or other receiving device;

maintaining, on at least one processing server controlled by a managing entity, at least one data engine embodied in at least one processing unit, at least one receiving unit, at least one transmitting unit, and at least one database for purposes of creating, gathering, updating, processing, storing, and communicating at least one time series of at least one data parameter;

receiving, on a receiving unit of at least one data engine, third-party data comprising input data for computing at least one data parameter generated by the data engine; formatting, through a processing unit of the data engine, the added data and then modifying, through the same processing unit of the data engine, a database to incorporate the added data; computing, through a processing unit of the data engine, at least one non-third-party version of the data parameter if desired; computing, through a processing unit of the data engine, a single operative value of the data parameter using the third-party and non-third-party valuations; writing, through a transmitting unit of the data engine, the updated operative value of the data parameter along with a record of the calculation including at least a time and date stamp of the calculation, the third-party and non-third-party values, and the methodology used to compute the operative value onto a housing instrument data blockchain; modifying, through a processing unit and a transmitting unit of the data engine, a website accessible at least to a homeowner and an investor to display the updated operative value of the data parameter and then, through a transmitting unit of the data engine, alerting at least a homeowner and an investor, who may be offline, of the updated operative value through a mobile phone or other receiving device if either party requested updates of the operative value generally or upon certain values of the data parameter being realized;

maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement;

receiving, on a receiving unit of at least one third-party data engine operating on a processing server controlled by the managing entity, data with respect to at least one third-party finance arrangement; identifying, through a processing unit of the third-party data engine, the elements of the data that need to be recorded on a housing instrument data blockchain and modifying the data that needs to be recorded into a suitable format; writing, through a transmitting unit of the third-party data engine, the necessary data elements along with a record of any associated calculations on a housing instrument data blockchain; extracting from the housing instrument data blockchain, through a receiving unit of the third-party data engine, data adequate to describe the current status and relevant history of the third-party finance arrangement; organizing, through a processing unit of the third-party data engine, this data into a form suitable for website display; modifying, through a processing unit and a transmitting unit of the third-party data engine, a website accessible at least to a homeowner and an investor to display the updated data for the third-party finance arrangement, and then, through a transmitting unit of the third-party data engine, alerting at least a homeowner and an investor, who may be offline, of the updated data through a mobile phone or other receiving device if either party requested such updated data generally or upon certain values of the certain data parameters being realized;

maintaining, on a least one processing server controlled by a managing entity, a contract engine embodied in at least one processing unit, at least one receiving unit, and at least one transmitting unit for purposes of initiating, implementing, enforcing, and updating the housing finance arrangement between at least a homeowner and an investor;

receiving, through a receiving unit of a contract engine operating on a processing server controlled by a managing entity, initial contract data describing a housing finance arrangement; identifying, through a processing unit, the elements of the initial contract data that need to be recorded on a housing instrument data blockchain; organizing and modifying, through a processing unit of the contract engine, the data that needs to be recorded into a suitable format; writing through a transmitting unit of the contract engine the necessary data elements on a housing instrument data blockchain;

receiving, on a website or other input device controlled by a managing entity, a request from the homeowner to alter at least one term in a housing finance arrangement specifying at least one option for a new term; transmitting, through a transmitting unit of a server controlled by the managing entity, the request to a receiving unit of a contract engine operating through a processing unit controlled by the managing entity;

in the case of a direct arrangement, extracting, from the housing instrument data blockchain through a receiving unit of the contract engine, necessary contract provisions governing the requested change in terms for each option along with other relevant data; determining, through a processing unit of the contract engine, if the requested change in terms for each option is permitted under the housing finance arrangement contract and, if so, whether any approvals by parties other than the homeowner are required; if the change in terms under at least one option is otherwise permissible, seeking, through a transmitting unit of the contract engine, any required approvals for each option by alerting at least one relevant party through at least one receiving device of said party of the need to approve or deny approval of each option that requires approval; after receiving a response or after the deadline for a response lapses, determining, through a processing unit of the contract engine, whether each option proposed by the homeowner is approved or denied; modifying, through a transmitting unit of the contract engine, a website accessible to the homeowner to inform the homeowner of whether each option is authorized or denied, and, in the case that at least one option is authorized, requesting the homeowner to confirm acceptance of one of the options or to reject all of them, and then via a transmitting unit of the data engine alerting at least the homeowner, who may be offline, through a mobile phone or other receiving device of the authorized or denied options, and, if at least one option is authorized, the need to confirm one option or reject them all; if the homeowner confirms an option, writing, through a transmitting unit of the contract engine, the change in terms along with associated data comprising the accepted option including at least the effective date and time of the change in terms onto the housing instrument data blockchain; modifying, through a processing unit and a transmitting unit of the contract engine, a website accessible at least to a homeowner and an investor to confirm that the change is in effect, to display the effective time and date of the change, and to display the new housing finance arrangement terms, and then, through a transmitting unit of the contract engine alerting at least a homeowner and an investor, who may be offline, that the change is in effect along with the effective time and date of the change through a mobile phone or other receiving device;

or in an arrangement that is not a direct arrangement, extracting, from the housing instrument data blockchain, through a receiving unit of the third-party data engine, necessary contract provisions governing the requested change in terms along with other relevant data including at least data sufficient to generate offers to the homeowner with respect to each option, the offers containing changes in terms of the housing finance arrangement other than the terms that are the subject of the request; computing, through a processing unit of the contract engine, at least one offer for each change-in-terms option specified by the homeowner; modifying, through a transmitting unit of the contract engine, a website accessible to the homeowner to inform the homeowner of the offers and requesting the homeowner to confirm acceptance of one of the offers or to confirm rejection of all of the offers, and then, through a transmitting unit of the contract engine alerting at least the homeowner, who may be offline, through a mobile phone or other receiving device of the offers and the need to accept one or turn them all down; creating, through a processing unit of the contract engine, an offer data ensemble including at least the content of the offers and the values of the governing data parameters at the time of the offers, values that govern the offer terms; writing, through a transmitting unit of the contract engine, the offer data ensemble onto the housing instrument data blockchain; if the homeowner accepts an offer, extracting, through a receiving unit of the contract engine, the offer data ensemble from the housing instrument data blockchain; computing, through a processing unit of the contract engine using the offer data ensemble , the adjustments between at least a homeowner, an investor, and a residual balancing position holder required to close out the existing housing finance arrangement and replace it with a new one embodying the terms specified in the accepted offer; transmitting through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the new housing finance arrangement along with the starting residual account positions of the parties, and the date and time the new arrangement went into effect; writing, through a transmitting unit of the contract engine, the transition data onto the housing instrument data blockchain, thereby effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and, through a transmitting unit of the contract engine, alerting each of the relevant parties, who may be offline, of the transition data relevant to that party as well as of the common data describing the new housing finance arrangement;

receiving, on a website or other input device controlled by a managing entity, a request from a homeowner to sell a residual account position to at least one investor or to buy a residual account position from at least one investor; transmitting, through a transmitting unit of a server controlled by the managing entity, the sell or buy request to a receiving unit of a contract engine operating through a processing unit controlled by the managing entity;

in the case of a direct arrangement, extracting, from the housing instrument data blockchain through a receiving unit of the contract engine, necessary contract provisions governing the requested sale or purchase along with other relevant data including at least the data required to determine the terms of the sale or purchase; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale; and if the sale or purchase is otherwise permissible, seeking, through a transmitting unit of the contract engine, investor approvals, if required, based on the computed terms by alerting the investors through at least one receiving device of each said investor of the terms and the need to approve or deny approval; after receiving a response or after the deadline for a response lapses, determining, through a processing unit of the contract engine, whether the sale or purchase on the computed terms is authorized or denied; modifying, through a transmitting unit of the contract engine, a website accessible to the homeowner to inform the homeowner of authorization or denial, and, in the case of authorization, requesting the homeowner to confirm acceptance or rejection on the basis of the computed terms, and then, through a transmitting unit of the contract engine, alerting the homeowner, who may be offline, through a mobile phone or other receiving device of the authorization or denial, and, in the case of authorization, requesting the homeowner to confirm acceptance or rejection of the transaction on the basis of the computed terms; if the homeowner confirms the transaction, transmitting, through a transmitting unit of the contract engine, a message informing the relevant party or parties of the required steps; receiving, through a receiving unit of the contract engine, verification that the required steps, including any required payments between the parties, have been completed; compiling, through a processing unit of the contract engine, a transaction data package including at least the confirmation of the transaction, the terms of the transaction, the date and time the transaction was effective, and the new residual account positions of the parties as of that date and time; writing, through a transmitting unit of the contract engine, after suitable formatting through a processing unit of the contract engine, the transaction data onto the housing instrument data blockchain; modifying, through a processing unit and a transmitting unit of the contract engine, a website accessible at least to a homeowner and an investor to display the relevant portions of the transaction data, and then, through a transmitting unit of the contract engine alerting at least a homeowner and an investor, who may be offline, of the relevant portions of the transaction data through a mobile phone or other receiving device;

or in an arrangement that is not a direct arrangement, extracting from the housing instrument data blockchain, through a receiving unit of the third-party data engine, necessary contract provisions governing the requested sale or purchase along with other relevant data including at least data sufficient to generate offers to the homeowner with respect to the proposed sale or purchase, each offer containing changes in the terms of the housing finance arrangement accompanying the proposed sale or purchase;

computing, through a processing unit of the contract engine, at least one offer with respect to the sale or purchase proposed by the homeowner; determining, through a processing unit of the contract engine, if the requested sale or purchase is permitted under the housing finance arrangement contract and, if so, whether approval by the investors on the other side of the transaction is required; determining, through a processing unit of the contract engine, the applicable terms of the purchase or sale and the terms of each offer; and if the sale or purchase is otherwise permissible, seeking, through a transmitting unit, investor approvals with respect to each offer, if required, based on the computed terms by alerting the investors through at least one receiving device of each said investor of the offers, and the need to approve or deny approval of each offer; after receiving a response or after the deadline for a response lapses, determining, through a processing unit of the contract engine, whether each offer is authorized or denied; modifying, through a transmitting unit of the contract engine, a website accessible to the homeowner to inform the homeowner of authorization or denial of each offer, and, in the case of authorization of at least one offer, requesting the homeowner to confirm acceptance of one offer along with the sale or purchase terms or to reject them all, and then, through a transmitting unit of the contract engine, alerting the homeowner, who may be offline, through a mobile phone or other receiving device of the authorization or denial of each offer, and, in the case of authorization of at least one offer, requesting the homeowner to confirm acceptance of one offer along with the sale or purchase terms or to reject them all; creating, through a processing unit of the contract engine, an offer data ensemble including at least the content of the offers, the sale or purchase terms, and the values of the governing data parameters at the time of the offers, values that govern the offer terms; writing, through a transmitting unit of the contract engine, the offer data ensemble onto the housing instrument data blockchain; if the homeowner accepts an offer along with the sale or purchase terms, extracting, through a receiving unit of the contract engine, the offer data ensemble from the housing instrument data blockchain; computing, through a processing unit of the contract engine using the offer data ensemble, the adjustments between at least a homeowner, an investor, and a residual balancing position holder required to close out the existing housing finance arrangement and replace it with a new one embodying the terms specified in the accepted offer; transmitting, through a transmitting unit of the contract engine, a message informing the relevant parties of the required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect; writing, through a transmitting unit of the contract engine, the transition data onto the housing instrument data blockchain, effecting the shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party as well as to display the new arrangement in commonly accessible areas of the website, and then, through a transmitting unit of the contract engine, alerting each of the relevant parties, who may be offline, of the transition data relevant to that party as well as the common data describing the new housing finance arrangement.

*Computer System*

FIG. 25 is a block diagram of a computer system as may be used to implement certain features of some of the embodiments. The computer system may be a server computer, a client computer, a personal computer (PC), a user device, a tablet PC, a laptop computer, a personal digital assistant (PDA), a cellular telephone, an iPhone, an iPad, a Blackberry, a processor, a telephone, a web appliance, a network router, switch or bridge, a console, a hand-held console, a (hand-held) gaming device, a music player, any portable, mobile, hand-held device, wearable device, or any machine capable of executing a set of instructions (sequential or otherwise) that specify actions to be taken by that machine.

The computing system (2500) may include one or more central processing units ("processors") (2505), memory (2510), input/output devices (2525), e.g. keyboard and pointing devices, touch devices, or display devices, storage devices (2520), e.g. disk drives, and network adapters (2530), e.g. network interfaces, that are connected to an interconnect (2515). The interconnect (2515) is illustrated as an abstraction that represents any one or more separate physical buses, point to point connections, or both, connected by appropriate bridges, adapters, or controllers. The interconnect (2515), therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (12C) bus, or an Institute of Electrical and Electronics Engineers (IEEE) standard 1394 bus, also called Firewire.

The memory (2510) and storage devices (2520) are computer-readable storage media that may store instructions that implement at least portions of the various embodiments. In addition, the data structures and message structures may be stored or transmitted via a data transmission medium, e.g. a signal on a communications link. Various communications links may be used, e.g. the Internet, a local area network, a wide area network, or a point-to-point dial-up connection. Thus, computer-readable media can include computer-readable storage media, e.g. non-transitory media, and computer-readable transmission media.

The instructions stored in memory (2510) can be implemented as software and/or firmware to program the processor (2505) to carry out actions described above. In some embodiments, such software or firmware may be initially provided to the processing system (2500) by downloading it from a remote system through the computing system (2500), e.g. via network adapter (2530).

The various embodiments introduced herein can be implemented by, for example, programmable circuitry, e.g. one or more microprocessors, programmed with software and/or firmware, or entirely in special-purpose hardwired (non-programmable) circuitry, or in a combination of such forms. Special-purpose hardwired circuitry may be in the form of, for example, one or more ASICs, PLDs, FPGAs, *etc.*

Additional embodiments and aspects are described which may be used alone or in combination with the features and functionalities described herein.

According to a first embodiment, a computer implemented method for real time, dynamic management of a real estate finance, services, and reporting, comprises: maintaining, by a processor, on a website controlled by a managing entity and accessible to at least a homeowner and an investor, a display of the terms, parameter values, and upcoming required actions under a housing finance arrangement; storing, by said processor, in at least one blockchain system containing at least a housing instrument data blockchain; maintaining, by said processor, on at least one server controlled by a managing entity, a balancing engine embodied in at least one processing unit, at least one receiving unit, and at least one transmitting unit for purposes of implementing adjustments under a balancing mechanism; receiving, periodically through a receiving unit of the balancing engine, a message from the managing entity or an artificial intelligence entity representing it, initiating a balancing entry onto the housing instrument data blockchain; transmitting, thorough a transmitting unit of the balancing engine, a query of the blockchain system for data relevant to a balancing calculation; receiving said data through a receiving unit of the balancing engine; when in a direct arrangement, determining through a processing unit of the balancing engine an updated balance in at least one residual account; writing, through a transmitting unit of the balancing engine, the updated residual account balance along with details of the computation on the housing instrument data blockchain; modifying, through a processing unit and a transmitting unit of the balancing engine, a website accessible at least to a homeowner and an investor to display the updated residual account balance; and through a transmitting unit of the balancing engine, alerting at least a homeowner and an investor, who may be offline, of the updated residual account balance through a mobile phone or other receiving device; and when in an arrangement that is not a direct arrangement, determining through a processing unit of the balancing engine an updated unscheduled outcome and associated quantities that use the unscheduled outcome as an input; writing, through a transmitting unit of the balancing engine, the updated unscheduled outcome and associated quantities along with details of the computation on the housing instrument data blockchain; modifying, through a processing unit and a transmitting unit of the balancing engine, a website accessible to at least to a homeowner, an investor, and a residual balancing position holder to display the updated unscheduled outcome and associated quantities; and through a transmitting unit of the balancing engine, alerting at least a homeowner, an investor, and a residual balancing position holder, who may be offline, of the updated unscheduled outcome and associated quantities through a mobile phone or other receiving device.

According to a second embodiment, the method further comprises: maintaining, on at least one processing server controlled by a managing entity, at least one data engine embodied in at least one processing unit, at least one receiving unit, at least one transmitting unit, and at least one database, said processing server creating, gathering, updating, processing, storing, and communicating at least one time series of at least one data parameter.

According to a third embodiment, the method further comprises: receiving, on a receiving unit of at least one data engine, third-party data comprising input data for computing at least one data parameter generated by the data engine; formatting, through a processing unit of the data engine, the added data and then modifying, through the same processing unit of the data engine, a database to incorporate the added data; computing, through a processing unit of the data engine, at least one non-third party version of the data parameter; computing, through a processing unit of the data engine, a single operative value of the data parameter using the third-party and non-third party valuations; writing, through a transmitting unit of the data engine, the updated operative value of the data parameter along with a record of a the calculation including at least a time and date stamp of the calculation, the third-party and non-third party values, and the methodology used to compute the operative value onto a housing instrument data blockchain; and modifying, through a processing unit and a transmitting unit of the data engine, a website accessible at least to a homeowner and an investor to display the updated operative value of the data parameter and then, through a transmitting unit of the data engine, alerting at least a homeowner and an investor, who may be offline, of the updated operative value through a mobile phone or other receiving device when either party requested updates of the operative value generally or upon certain values of the data parameter being realized.

According to a fourth embodiment, the method further comprises: maintaining, on at least one processing server controlled by a managing entity, at least one third-party data engine embodied in at least one processing unit, at least one receiving unit, at least one transmitting unit, and at least one database for the purposes of creating, gathering, updating, processing, storing, and communicating at least one time series of at least one data parameter that emerges from at least one third-party finance arrangement.

According to a fifth embodiment, the method further comprises: receiving, on a receiving unit of at least one third-party data engine operating on a processing server controlled by the managing entity, data with respect to at least one third-party finance arrangement; identifying, through a processing unit of the third-party data engine, elements of data to be recorded on a housing instrument data blockchain; modifying the data to be recorded into a suitable format; writing, through a transmitting unit of the third-party data engine, data elements along with a record of any associated calculations on a housing instrument data blockchain; extracting from the housing instrument data blockchain, through a receiving unit of the third-party data engine, data to describe the current status and relevant history of the third-party finance arrangement; organizing, through a processing unit of the third-party data engine, said data for website display; modifying, through a processing unit and a transmitting unit of the third-party data engine, a website accessible at least to a homeowner and an investor to display the updated data for the third-party finance arrangement; and through a transmitting unit of the third-party data engine, alerting at least a homeowner and an investor, who may be offline, of the updated data through a mobile phone or other receiving device if either party requested such updated data generally or upon certain values of the certain data parameters being realized.

According to a sixth embodiment, the method further comprises: maintaining, on a least one processing server controlled by a managing entity, a contract engine embodied in at least one processing unit, at least one receiving unit, and at least one transmitting unit to initiate, implement, enforce, and update the housing finance arrangement between at least one homeowner and an investor.

According to a seventh embodiment, the method further comprises: receiving, through a receiving unit of a contract engine operating on a processing server controlled by a managing entity, initial contract data describing a housing finance arrangement; identifying through a processing unit elements of the initial contract data to be recorded on a housing instrument data blockchain; organizing and modifying, through a processing unit of the contract engine, the data to be recorded into a suitable format; and writing through a transmitting unit of the contract engine the necessary data elements on a housing instrument data blockchain.

According to an eighth embodiment, the method further comprises: receiving, on a website or other input device controlled by a managing entity, a request from the homeowner to alter at least one term in a housing finance arrangement specifying at least one option for a new term; and transmitting, through a transmitting unit of a server controlled by the managing entity, the request to a receiving unit of a contract engine operating through a processing unit controlled by the managing entity.

According to a ninth embodiment, the method further comprises: in a direct arrangement, extracting, from the housing instrument data blockchain through a receiving unit of the contract engine, necessary contract provisions governing the requested change in terms for each option along with other relevant data; determining, through a processing unit of the contract engine, if the requested change in terms for each option is permitted under the housing finance arrangement contract; when a change of terms is permitted, determining whether any approvals by parties other than the homeowner are required; when the change in terms under at least one option is otherwise permissible, seeking, through a transmitting unit of the contract engine, any required approvals for each option by alerting at least one relevant party through at least one receiving device of said party of the need to approve or deny approval of each option that requires approval; after receiving a response or after a deadline for a response lapses, determining, through a processing unit of the contract engine, whether each option proposed by the homeowner is approved or denied; modifying, through at transmitting unit of the contract engine, a website accessible to the homeowner to inform the homeowner of whether each option is authorized or denied and, when at least one option is authorized, requesting the homeowner to confirm acceptance of one of the options or to reject all of them; via a transmitting unit of the data engine alerting at least the homeowner, who may be offline, through a mobile phone or other receiving device of the authorized or denied options and, when at least one option is authorized, requesting the homeowner to confirm one option or reject them all; when the homeowner confirms an option, writing, through a transmitting unit of the contract engine, a change in terms along with associated data comprising the accepted option, including at least an effective date and time of the change in terms onto the housing instrument data blockchain; modifying, through a processing unit and a transmitting unit of the contract engine, a website accessible at least to a homeowner and an investor to confirm that the change is in effect, to display the effective time and date of the change, and to display the new housing finance arrangement terms; and through a transmitting unit of the contract engine alerting at least a homeowner and an investor, who may be offline, that the change is in effect along with the effective time and date of the change through a mobile phone or other receiving device.

According to a tenth embodiment, the method further comprises: in an arrangement that is not a direct arrangement, extracting from the housing instrument data blockchain, through a receiving unit of the third-party data engine, necessary contract provisions governing a requested change in terms along with other relevant data including, at least, data to generate offers to the homeowner with respect to each option, the offers containing changes in terms of the housing finance arrangement other than the terms that are the subject of the request; computing, through a processing unit of the contract engine, at least one offer for each change in terms option specified by the homeowner; modifying, through at transmitting unit of the contract engine, a website accessible to the homeowner to inform the homeowner of the offers; requesting the homeowner to confirm acceptance of one of the offers or to confirm rejection of all of the offers; through a transmitting unit of the contract engine alerting at least the homeowner, who may be offline, through a mobile phone or other receiving device of the offers and the need to accept one offer or to turn all of the offers down; creating, through a processing unit of the contract engine, an offer data ensemble including at least the content of the offers and the values of the governing data parameters at the time of the offers, values that govern the offer terms; writing, through a transmitting unit of the contract engine, the offer data ensemble onto the housing instrument data blockchain; when the homeowner accepts an offer, extracting, through a receiving unit of the contract engine, the offer data ensemble from the housing instrument data blockchain; computing, through a processing unit of the contract engine using the offer ensemble data, the adjustments between at least a homeowner, the investor, and a residual balancing position holder required to close out the existing housing finance arrangement and replace it with a new housing finance arrangement embodying the terms specified in the accepted offer; transmitting through a transmitting unit of the contract engine, a message informing the relevant parties of required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the new housing finance arrangement along with the starting residual account positions of the parties, and the date and time the new arrangement goes into effect; writing, through a transmitting unit of the contract engine, the transition data onto the housing instrument data blockchain to effect a shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party, as well as to display in commonly accessible areas of the website the new arrangement; and through a transmitting unit of the contract engine, alerting each of the relevant parties, who may be offline, of the transition data relevant to that party as well as of the common data describing the new housing finance arrangement.

According to an eleventh embodiment, the method further comprises: receiving, on a website or other input device controlled by a managing entity, a request from a homeowner to sell a residual account position to at least one investor or to buy a residual account position from at least one investor; and transmitting, through a transmitting unit of a server controlled by the managing entity, the sell or buy request to a receiving unit of a contract engine operating through a processing unit controlled by the managing entity.

According to a twelfth embodiment, the method further comprises: for a direct arrangement, extracting from the housing instrument data blockchain through a receiving unit of the contract engine, necessary contract provisions governing a requested sale or purchase along with other relevant data including, at least, data required to determine the terms of the sale or purchase; determining, through a processing unit of the contract engine, if the requested sale or purchase is permitted under the housing finance arrangement contract; when the requested sale or purchase is permitted under the housing finance arrangement contract determining whether approval by the investors on the other side of the transaction is required; determining, through a processing unit of the contract engine, applicable terms of the purchase or sale; when the sale or purchase is otherwise permissible seeking, through a transmitting unit of the contract engine, investor approvals, as required, based on the computed terms by alerting the investors through at least one receiving device of each said investor of the terms and the need to approve or deny approval; after receiving a response or after a deadline for a response lapses, determining, through a processing unit of the contract engine, whether the sale or purchase on the computed terms is authorized or denied; modifying, through at transmitting unit of the contract engine, a website accessible to the homeowner to inform the homeowner of authorization or denial; for authorization, requesting the homeowner to confirm acceptance or rejection on the basis of the computed terms; through a transmitting unit of the contract engine, alerting the homeowner, who may be offline, through a mobile phone or other receiving device of the authorization or denial; for authorization, requesting the homeowner to confirm acceptance or rejection of the transaction on the basis of the computed terms; when the homeowner confirms the transaction, transmitting, through a transmitting unit of the contract engine, a message informing the relevant party or parties of required steps; receiving, through a receiving unit of the contract engine, verification that the required steps, including any required payments between the parties, have been completed; compiling, through a processing unit of the contract engine, a transaction data package including at least the confirmation of the transaction, the terms of the transaction, the date and time the transaction was effective, and the new residual account positions of the parties as of that date and time; writing, through a transmitting unit of the contract engine, after formatting through a processing unit of the contract engine, the transaction data onto the housing instrument data blockchain; modifying, through a processing unit and a transmitting unit of the contract engine, a website accessible at least to a homeowner and an investor to display the relevant portions of the transaction data; and through a transmitting unit of the contract engine alerting at least a homeowner and an investor, who may be offline, of the relevant portions of the transaction data through a mobile phone or other receiving device.

According to a thirteenth embodiment, the method further comprises: in an arrangement that is not a direct arrangement, extracting from the housing instrument data blockchain, through a receiving unit of the third-party data engine, necessary contract provisions governing a requested sale or purchase along with other relevant data including, at least, data sufficient to generate offers to the homeowner with respect to the proposed sale or purchase, each offer containing changes in the terms of the housing finance arrangement accompanying the proposed sale or purchase; computing, through a processing unit of the contract engine, at least one offer with respect to the sale or purchase proposed by the homeowner; determining, through a processing unit of the contract engine, if the requested sale or purchase is permitted under the housing finance arrangement contract; when the requested sale or purchase is permitted under the housing finance arrangement contract determining whether approval by the investors on the other side of the transaction is required; determining, through a processing unit of the contract engine, the applicable terms of the purchase or sale and the terms of each offer; when the sale or purchase is otherwise permissible, seeking, through a transmitting unit, investor approvals with respect to each offer, as required, based on the computed terms by alerting the investors through at least one receiving device of each said investor of the offers, and the need to approve or deny approval each offer; after receiving a response or after the deadline for a response lapses, determining, through a processing unit of the contract engine, whether each offer is authorized or denied; modifying, through a transmitting unit of the contract engine, a website accessible to the homeowner to inform the homeowner of authorization or denial of each offer; for authorization of at least one offer, requesting the homeowner to confirm acceptance of one offer along with the sale or purchase terms or to reject them all; through a transmitting unit of the contract engine, alerting the homeowner, who may be offline, through a mobile phone or other receiving device of the authorization or denial of each offer; for authorization of at least one offer, requesting the homeowner to confirm acceptance of one offer along with the sale or purchase terms or to reject them all; creating, through a processing unit of the contract engine, an offer data ensemble including at least the content of the offers, the sale or purchase terms, and the values of the governing data parameters at the time of the offers, values that govern the offer terms; writing, through a transmitting unit of the contract engine, the offer data ensemble onto the housing instrument data blockchain; when the homeowner accepts an offer along with the sale or purchase terms, extracting, through a receiving unit of the contract engine, the offer data ensemble from the housing instrument data blockchain; computing, through a processing unit of the contract engine using the offer ensemble data, adjustments between at least a homeowner, an investor, and a residual balancing position holder required to close out the existing housing finance arrangement and replace it with a new housing finance arrangement embodying the terms specified in the accepted offer;

transmitting, through a transmitting unit of the contract engine, a message informing the relevant parties of required steps; receiving, through a receiving unit of the contract engine, verification that the required steps, including any required payments between parties, have been completed; compiling, through a processing unit of the contract engine, a transition data package including at least the adjustments made to close the existing housing finance arrangement, the terms of the sale or purchase, the terms of the new housing finance arrangement along with the starting residual account positions of the parties, and the date and time the new arrangement went into effect; writing, through a transmitting unit of the contract engine, the transition data onto the housing instrument data blockchain, effecting a shift to the new housing finance arrangement; creating, through a processing unit of the contract engine, separate displayable versions of the transition data appropriate for each relevant party; modifying, through a processing unit and a transmitting unit of the contract engine, a website accessible to the relevant parties to display the transition data in separate versions on separate portions of the website to each separate party, as well as to display in commonly accessible areas of the website the new arrangement; and through a transmitting unit of the contract engine, alerting each of the relevant parties, who may be offline, of the transition data relevant to that party as well as the common data describing the new housing finance arrangement.

According to a fourteenth embodiment, said blockchain system comprises: contractual information specifying at least one housing finance arrangement between at least one homeowner and at least one investor financing a particular home; a time series of economic parameters relevant to dynamic management of at least one housing finance arrangement; a record of current and past ownership of the financing debt or equity; a record of transactions including at least payments by the homeowner to investors; a record of any adjustments to or changes in the housing finance arrangement; specification of at least one balancing mechanism for tracking at least the homeowner's and investor's net contributions, considering the housing finance arrangement between them as a joint venture and to adjust at least one residual account to reflect the net contributions of the parties; a record of data and calculations of a balancing engine operating continuously based on one or more balancing mechanisms along with resulting adjustments of at least one residual account; an access protocol defining various levels of access to data in the blockchain system, as well as levels of permission to write new data onto the blockchain system; and data describing homes that are the subject of the housing finance arrangements.

According to a fifteenth embodiment, a method for real time, dynamic management of real estate finance, services, and reporting, comprises: maintaining a website accessible to a homeowner and an investor that displays terms, parameters, and upcoming actions under a housing finance arrangement; storing a housing instrument in a blockchain; implementing adjustments under a balancing mechanism; receiving, periodically, a message from a managing entity initiating a balancing entry onto the housing instrument; transmitting a query to the blockchain for data relevant to a balancing calculation; receiving said data; determining an updated balance; writing an updated account balance along with details of the computation on the housing instrument in the blockchain; modifying a website accessible to the homeowner and investor to display the updated account balance; and alerting the homeowner and investor of the updated account balance through a mobile device.

According to a sixteenth embodiment, a system for facilitating transaction data, comprises a computing device of a homeowner, having a user interface, for facilitating a transaction data as a first party to the transaction; a computing device of an investor, having a user interface, for facilitating the transaction data as a second party to the transaction; a managing entity device having a computer interface, the managing entity managing: at least one balancing engine device for implementing adjustments under a balancing mechanism based on the transaction data; at least one data engine device for creating, gathering, updating, processing, storing, and communicating at least one time series based on the transaction data; and at least one contract engine device for initiating, implementing, enforcing, and updating a housing finance arrangement between at least a homeowner and an investor based on the transaction data; a plurality of third party devices having associated computer interfaces providing relevant third party finance data based on the transaction data; a central trading engine database for allowing the computing device of the homeowner or the computing device of the investor to transmit a buy offer message based on the transaction; a distributed blockchain system for securely storing confidential data that used in facilitating the transaction data; and an application layer that receives, processes, and transmits data between the computing device of the homeowner, the computing device of an investor, the central trading engine database, the plurality of third party devices, the distributed blockchain system, and the managing entity device; in response to the transaction, said application layer modifying a website accessible to the homeowner and investor; and said application layer alerting the homeowner and investor of the transaction through a mobile device.

While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope. Accordingly, the invention should only be limited by the claims included below.

## Claims

1. A computer system, comprising:

   a managing entity managing an application layer;
   a first network interface for the managing entity to access the application layer over a computer network, the application layer being accessible over the computer network by (a) two or more parties in a transaction relating to a housing finance instrument, the parties including: (i) at least a homeowner, (ii) a residual balancing position holder, if any, and (iii) an investor, (b) a data storage system that stores one or more data entries relating to the transaction, each data entry including at least one residual account balance or an unscheduled outcome for each party to the transaction, wherein the application layer provides access to a website to each party of the transaction, the website (i) reporting to each party, upon the party's request, the party's residual account balance, or the party's unscheduled outcome, current to the time of the request, and (ii) providing functions that can be invoked by each party to carry out authorized actions under the housing finance instrument;
   a second network interface for accessing a data engine, the data engine creating, gathering, updating and storing into the data storage system data relating to the housing finance instrument, including values of at least one data parameter; and
   a balancing engine configured to carry out a balancing mechanism at predetermined times wherein the balancing mechanism, at each predetermined time, comprises the balancing engine (i) retrieving from the data engine data related to the housing finance instrument; (ii) initiating the data entry in the data storage system; (iii) inquiring from the data engine for, and receiving therefrom, contemporaneous data relevant to the balancing mechanism; (iv) computing the residual account balances or the unscheduled outcomes.

2. The computer system of claim 1, wherein the residual account balances of the homeowner and the investor are equity balances, and wherein the balancing engine (i) assesses a current valuation in a property specified in the housing finance instrument and respective contributions of the homeowner and the investor during a preceding duration; (ii) based on a purchase parity scheme, the current valuation, and the respective contributions, computes the residual account balances or the unscheduled outcome.

3. The computer system of claim 1 or 2, wherein the housing finance instrument pertains to a direct instrument which, at each predetermined time and allocates according to the purchase parity scheme, allocates to the homeowner's residual account balance based on an earned equity portion (E(T)) according to

   either (a)

   $$E(T) = E_n = 1 - e^{-\sum_{i=1}^{n} \gamma^*(t_{i-1})\frac{T}{n}},$$

   or (b)

   $$E(T) = \lim_{n\to\infty} E_n(T),$$

   where (i) T represents a time period over which the housing finance instrument has been in force, T being divided into n equal sub-periods of length $\frac{T}{n}$, (ii) $t_{i-1}$ represents the time at which period i begins, and $t_i$ is the time at which period i ends, i being a dummy index for identifying each sub-period; and (iii) y*(t) represents a grossed-up net contribution rate of the homeowner.

4. The computer system of any of the preceding claims, wherein the homeowner's equity balance at the predetermined time is adjusted as if the homeowner's contributions during the preceding durations purchase from the investor commensurate portions of the property, each portion being determined by the balance engine according to a then-current valuation of the property.

5. The computer system of any of the preceding claims, wherein the housing finance instrument pertains to an instrument in which, at each predetermined time, (i) the homeowner's residual account balance is a scheduled amount; and (ii) the investor's residual account balance and the residual balancing position holder's residual account balance are calculated based on the homeowner's unscheduled outcome according to a purchase parity scheme.

**6.** The computer system of any of the preceding claims, wherein the data engine receives third-party data through the application layer over the second network interface, and wherein (i) a relevant history of the third-party data is used in assessing current values of relevant parameters used in the balancing engine; (ii) the third-party data relates to a third-party finance instrument, and (iii) the computer system further comprises a third network interface to a third-party data engine which stores the received third-party data.

**7.** The computer system of any of the preceding claims, further comprising a third network interface to a contract engine that (i) receives initial contract data in the housing finance instrument; (ii) processes elements of the initial contract data; and (iii) causes the processed elements to be written into the data storage system.

**8.** The computer system of claim 7, wherein the contract engine (i) receives from the homeowner through the application layer one or more requested changes to alter one or more terms in the housing finance instrument; (ii) extracts, from the data engine, provisions governing the requested changes; (iii) determines if the requested changes are each authorized under the housing finance instrument and, when the requested change is authorized, (a) seeks and collects required approvals by another party or parties through the application layer; and (b) causes the requested changes to be recorded in the data storage system.

**9.** The computer system of claim 8, wherein the housing finance instrument is not a direct instrument, the contract engine (i) extracting the terms governing the requested changes to generate an offer with respect to each requested change, and any other changes arising from the requested change; (ii) generating the offers and collecting acceptances or rejections responsive to each offer; and (iii) requesting the homeowner to confirm either acceptance of one of the offers or rejection of all offers; and (iv) with respect to each confirmed offer, (a) creating an offer data ensemble in conjunction with each confirmed offer, including therein current values of governing parameters, and values relevant to the confirmed offer; and (b) causing the data ensemble of the confirmed to be written onto the data storage system.

**10.** The computer system of any of the preceding claims, wherein (i) the transaction is one of a plurality of transactions, each such transaction relating to one or more housing finance instruments, (ii) the website having a investor transaction platform that is accessible by approved investors to engage in transfers of their investor interests in the housing finance instruments, including their respective residual account balances; and (iii) the investor transaction platform allows the approved investors to examine the terms, the residual account balances, and current values of parameters related to the housing finance instruments; and (iv) the investor transaction platform compiles active sale offers of investor interests and expressed interests in purchasing investor interests by the approved investors in the housing finance instruments.

**11.** The computer system of claim 10, further comprising a third network interface to a transaction engine, which is configured for carrying out the transfers of investor interests, wherein, upon receiving a buy offer from an initiating investor of the approved investors on the investor transaction platform for a purchase of the investor interests in an identified investor interests concerned of the active sale offers, the investor transaction platform transmits the buy offer to the transaction engine, whereupon the transaction engine (i) requests and receives from the data engine relevant data related to the identified active sale offer and to the buy offer, including data concerning a target investor of the approved investor or investors holding the investor interests of the identified active sale offer; (ii) determines that the initiating investor and the target investor are qualified to participate in a transfer of investor interests under the active sale offer and the buy offer; (iii) sends the buy offer to the target investor; (iv) receives from the target investor on the investor transaction platform an acceptance or rejection of the buy offer, and (v) sends the acceptance or rejection to the initiating investor on the investor transaction platform.

**12.** The computer system of claim **11** wherein, when the target investor accepts the buy offer, the transaction engine (i) prepares a set of requisite closing documents for a transfer transaction in which the initiating investor and the target investor are parties thereto; (ii) makes the documents accessible on the investor transaction platform by the initiating and the target investors; (iii) providing a set of procedures, including execution of the closing documents and relevant payments, to be carried out by the initiating investor and the target investor; (iv) verifies the procedures have been carried out; (v) recording the closing documents in the data storage system to effectuate the transfer of the investor interests concerned; and (vi) informing the initiating and the target investors on the investor transaction platform that the transfer of the investor interests concerned is complete.

**13.** The computer system of any of the preceding claims, wherein data in the data storage system comprises (i) contractual information specifying the housing finance instrument; (ii) a time series of economic parameters relevant to management of the housing finance instrument; (iii) a record of current and past ownership of any financing debt or equity relating to property pertaining to the housing finance instrument; (iv) a record of any transactions relating to the housing finance instrument, including any payments by the homeowner to the investor; (v) a record of any adjustments to or changes in the housing finance instrument; and (vi) a specification of the balancing mechanism.

**14.** The computer system of claim 13, wherein (i) the balancing mechanism is based on a model of a joint venture between the investor and the homeowner, providing one or more residual accounts to reflect respective net contributions by these parties; and (ii) the data storage system further comprises a record of data and calculations of the balancing engine that result in adjustments of at least one of the residual accounts.

**15.** The computer system of any of the preceding claims, wherein the balancing mechanism is carried out according to a purchase parity scheme comprises a non-linear algorithm that, based on both the housing finance instrument and machine learning, creates a management instrument that maintains on an ongoing basis a balance of economic interests between the homeowner and investor, the economic interests being represented in part by the respective residual account balance of each party, taking into account each party's respective net contribution.

**16.** The computer system of any of the preceding claims, wherein the data storage system comprises a decentralized database system.

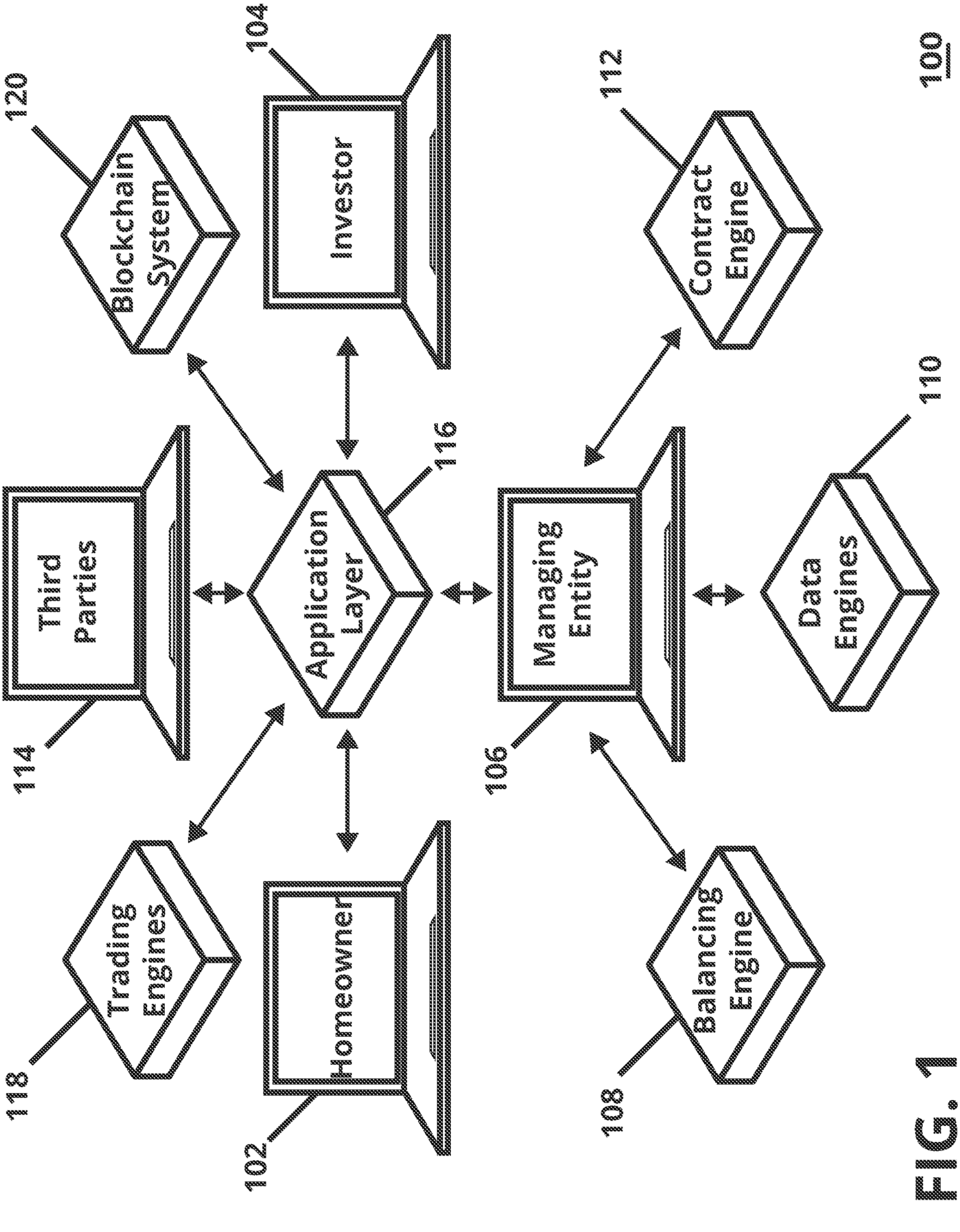
Blockchain System
120
Investor
104
Contract Engine
112
100
Third Parties
114
Application Layer
116
Managing Entity
106
Data Engines
110
Trading Engines
118
Homeowner
102
Balancing Engine
108

FIG. 1

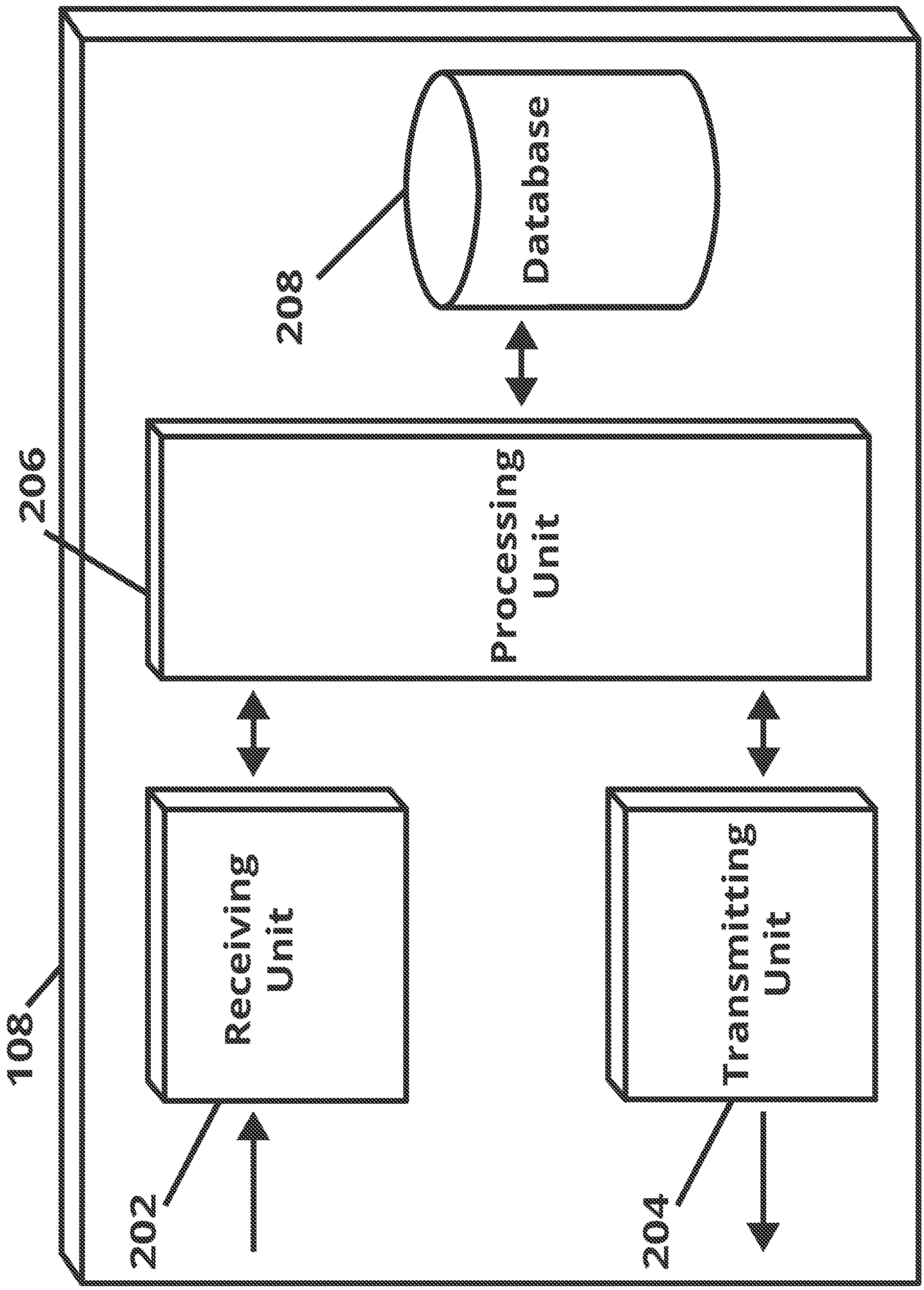
108
202
Receiving Unit
204
Transmitting Unit
206
Processing Unit
208
Database

FIG. 2

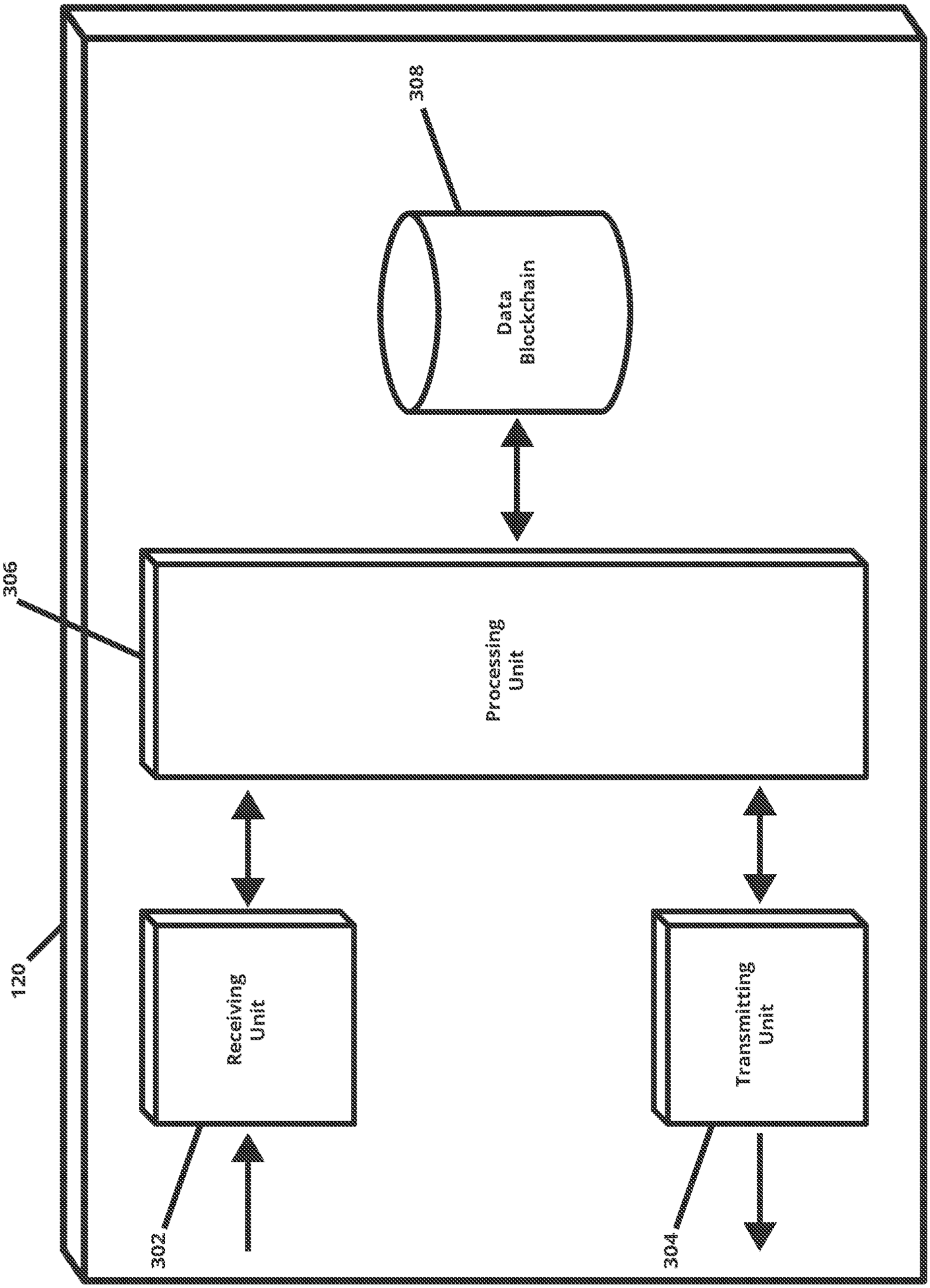
308
Data Blockchain
306
Processing Unit
120
Receiving Unit
302
Transmitting Unit
304

FIG. 3

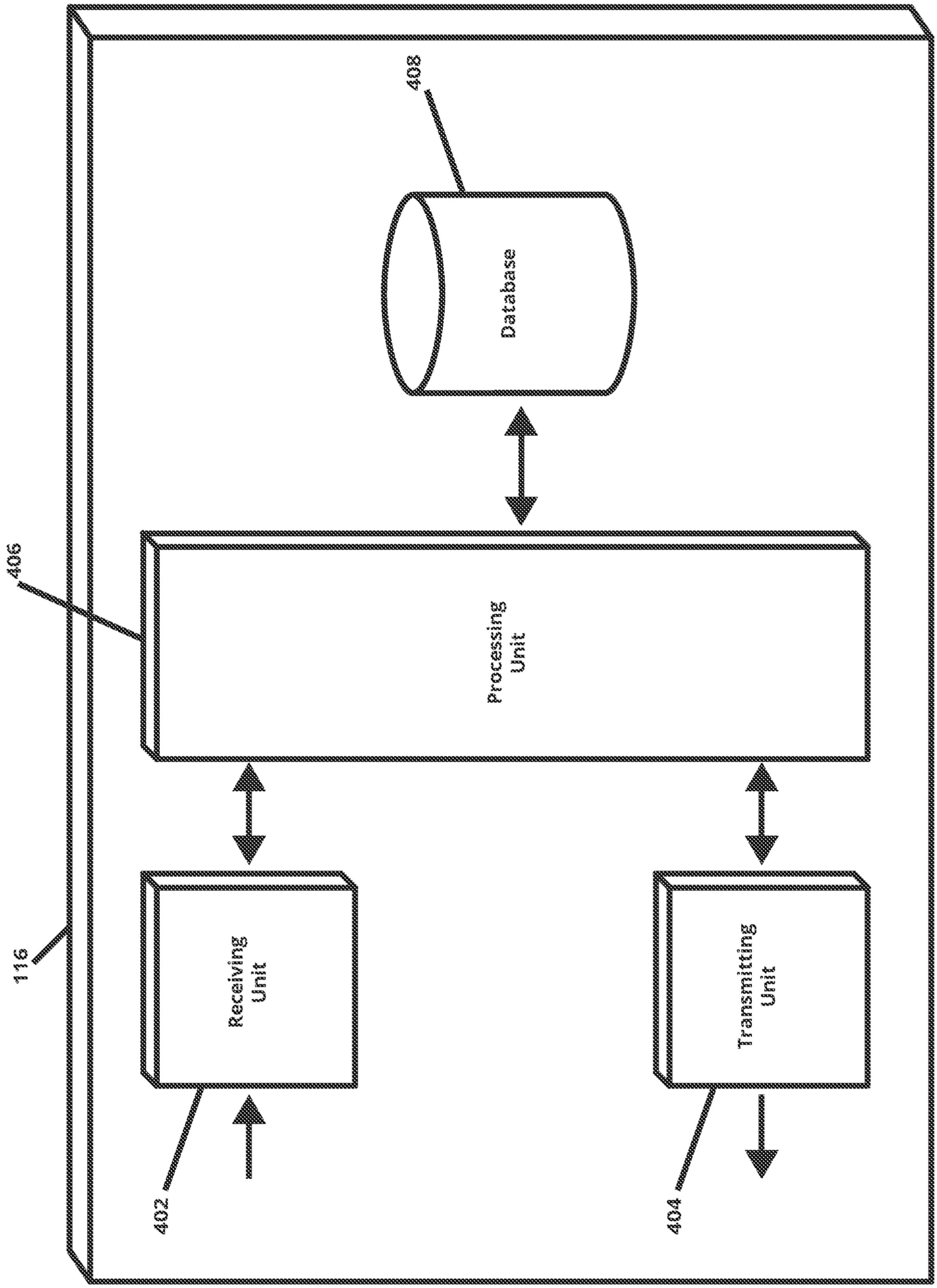
116
406
408
Database
Processing Unit
Receiving Unit
Transmitting Unit
402
404

FIG. 4

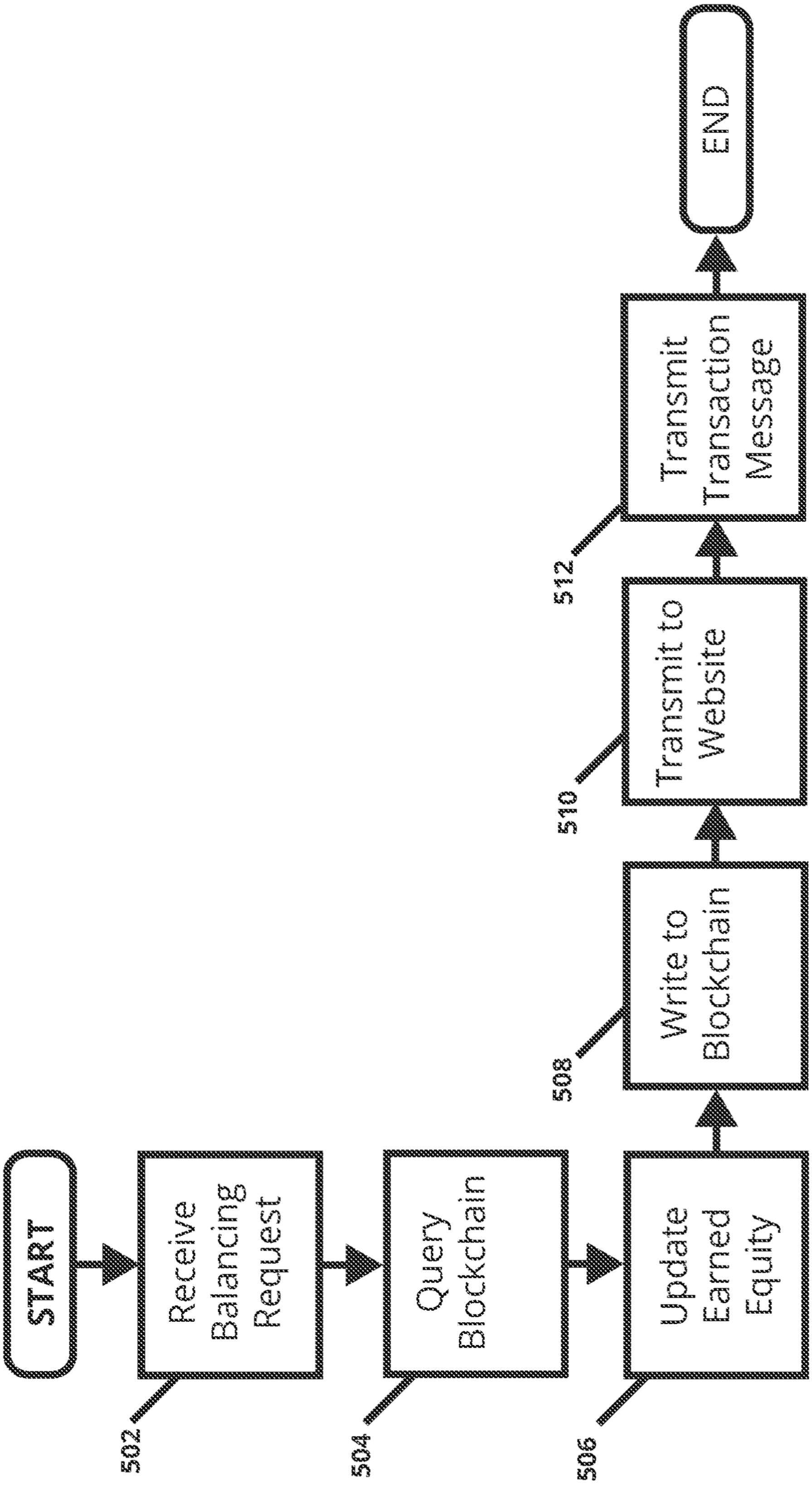
START
Receive Balancing Request
502
Query Blockchain
504
Update Earned Equity
506
Write to Blockchain
508
Transmit to Website
510
Transmit Transaction Message
512
END

FIG. 5

500

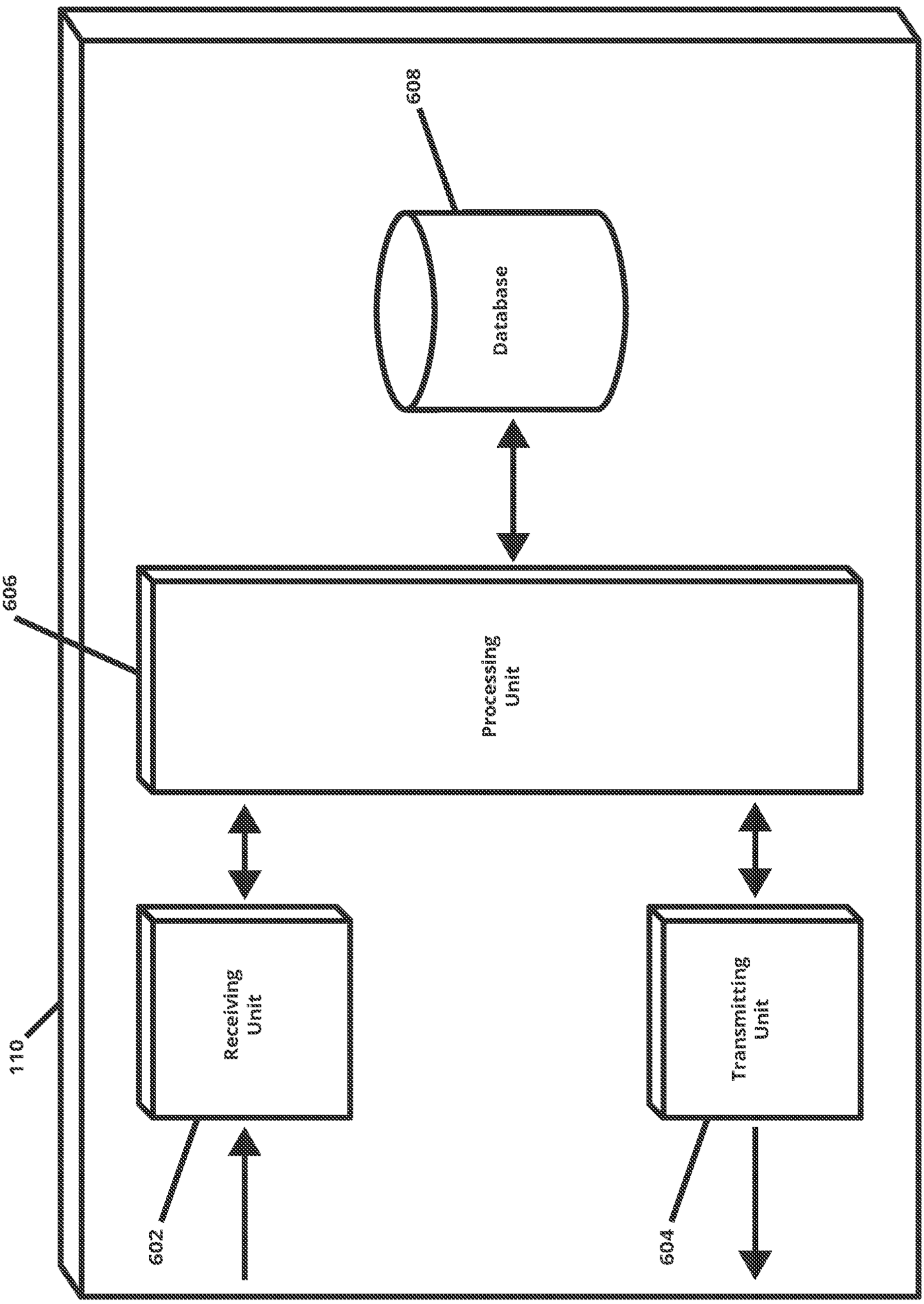
110
606
608
Database
Processing Unit
Receiving Unit
Transmitting Unit
602
604

FIG. 6

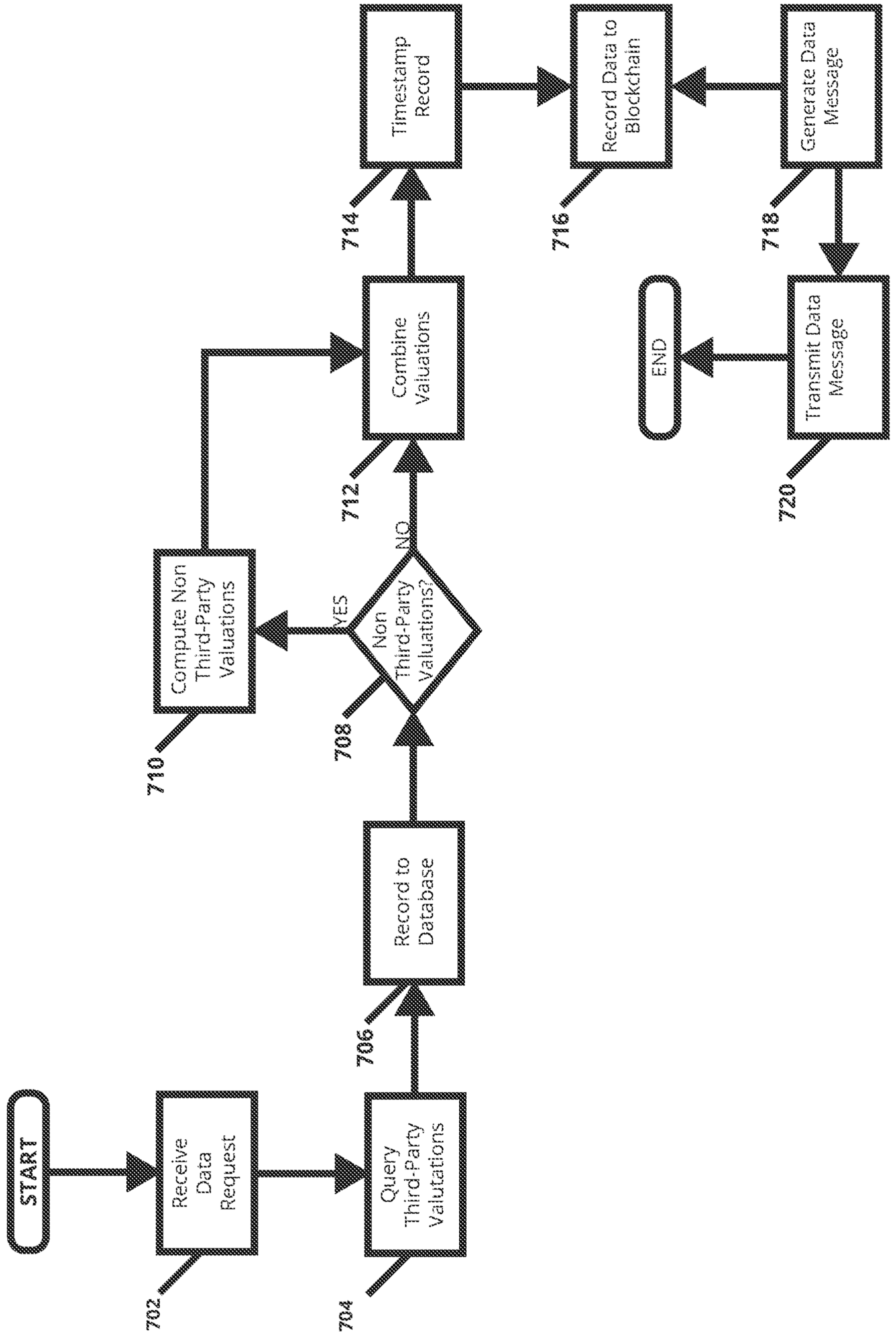
START
702
Receive Data Request
704
Query Third-Party Valutations
706
Record to Database
708
Non Third-Party Valuations?
YES
NO
710
Compute Non Third-Party Valuations
712
Combine Valuations
714
Timestamp Record
716
Record Data to Blockchain
718
Generate Data Message
720
Transmit Data Message
END

FIG. 7

700

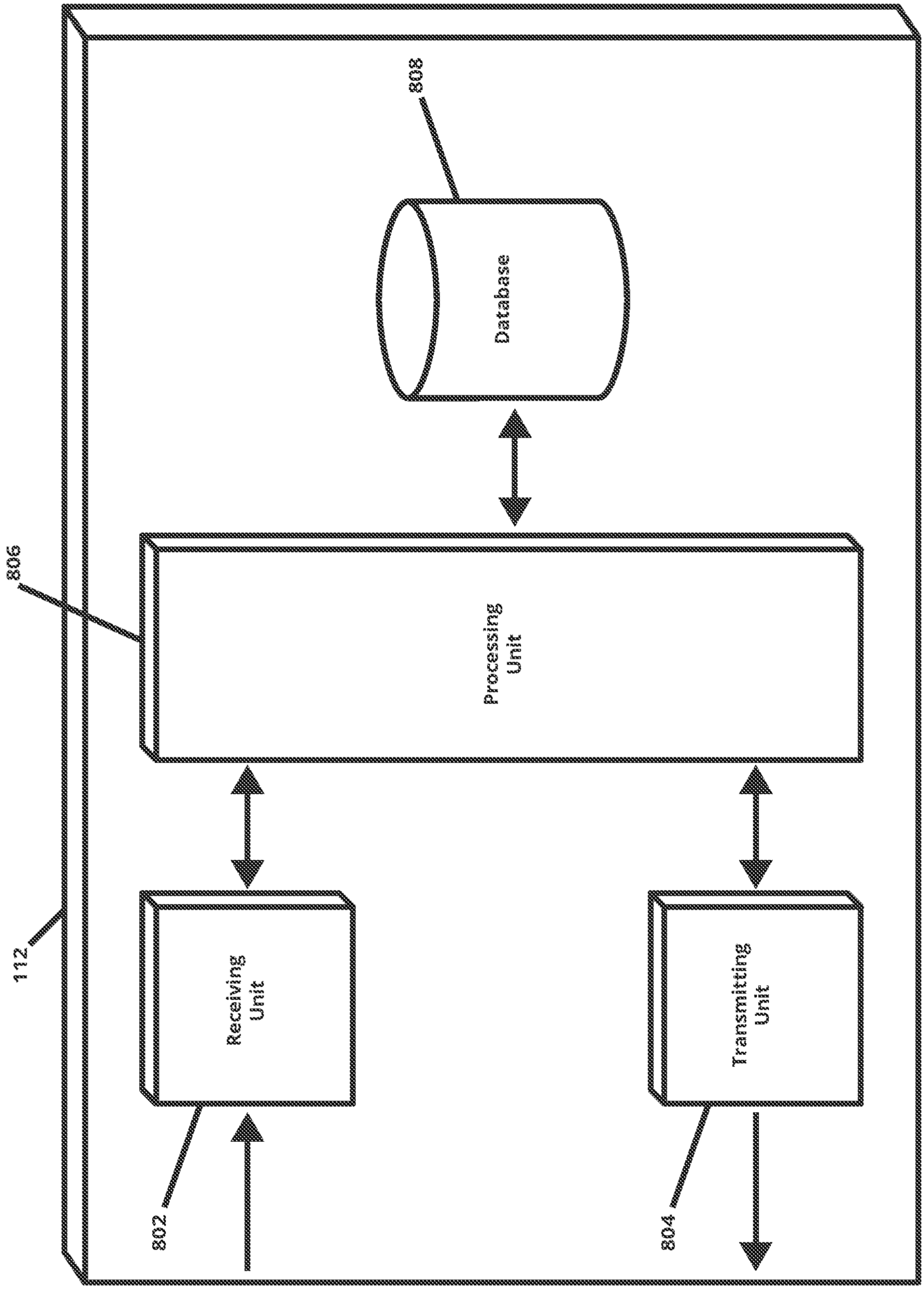
808
Database
806
Processing Unit
112
Receiving Unit
Transmitting Unit
802
804

FIG. 8

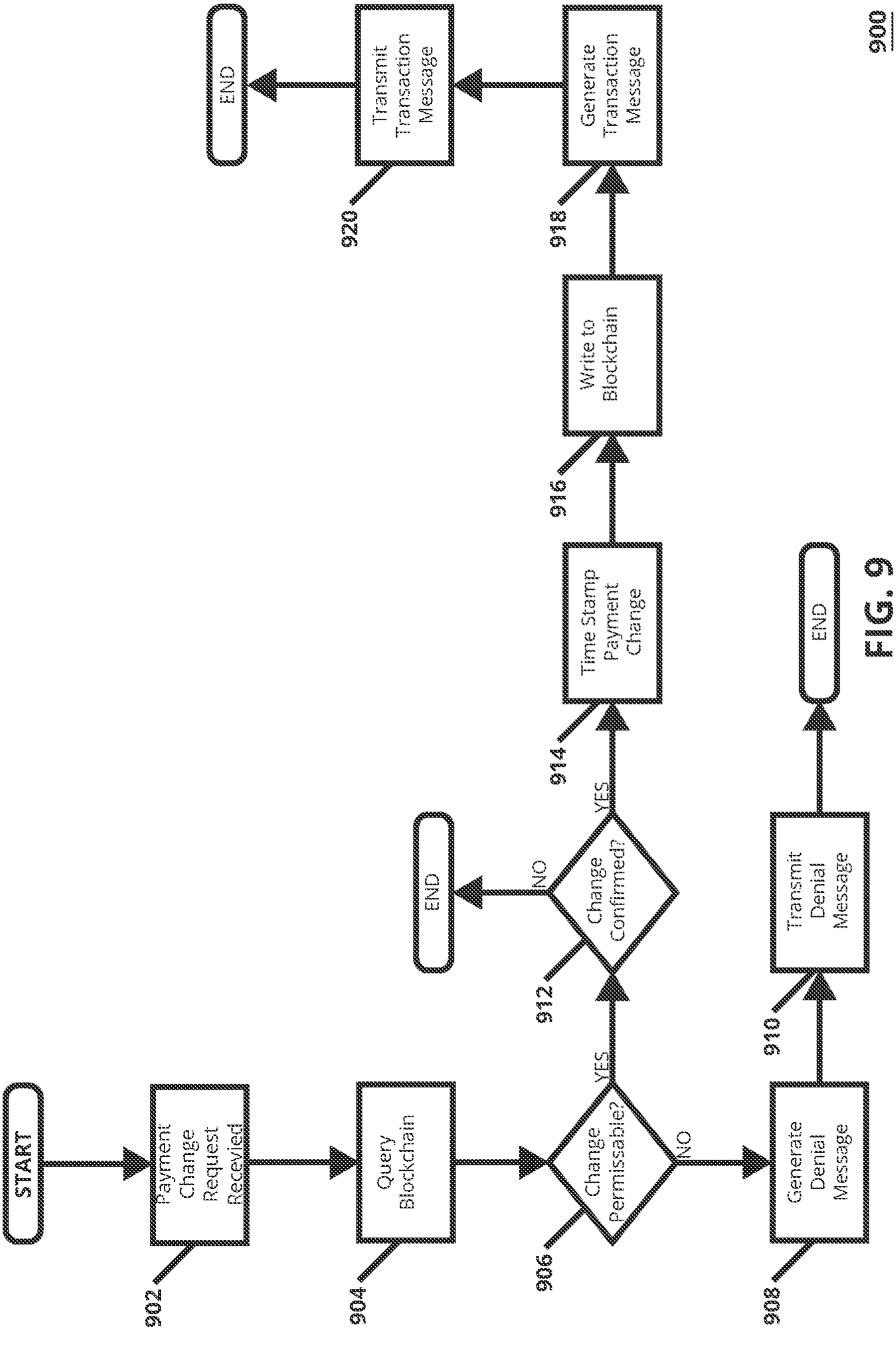
START
Payment Change Request Recevied
902
Query Blockchain
904
Change Permissable?
906
NO
YES
Generate Denial Message
908
Transmit Denial Message
910
END
Change Confirmed?
912
NO
END
YES
Time Stamp Payment Change
914
Write to Blockchain
916
Generate Transaction Message
918
Transmit Transaction Message
920
END

FIG. 9

900

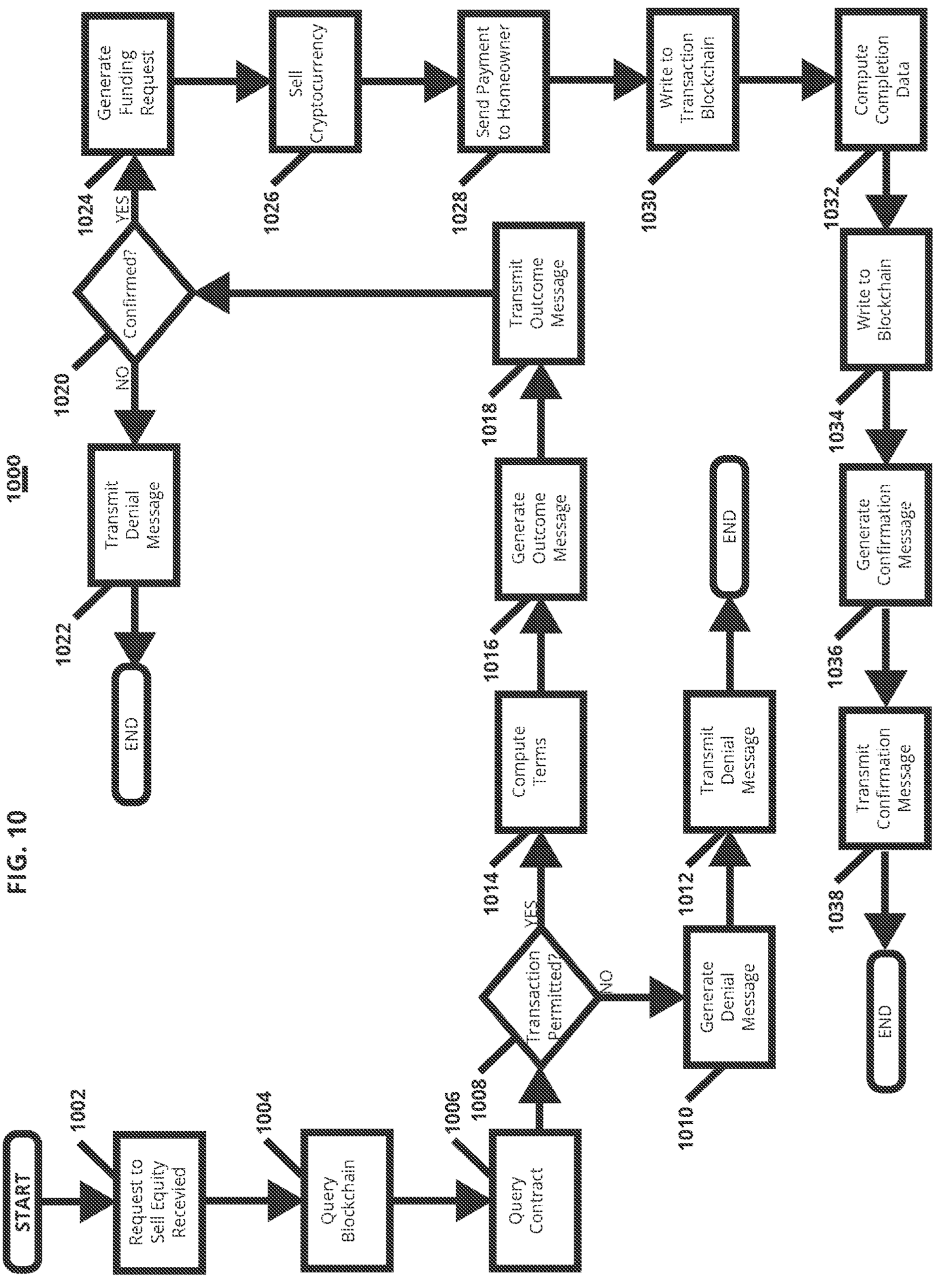
1000
START
Request to Sell Equity Recevied
1002
Query Blockchain
1004
Query Contract
1006
Transaction Permitted?
1008
YES
NO
Generate Denial Message
1010
Transmit Denial Message
1012
END
Compute Terms
1014
Generate Outcome Message
1016
Transmit Outcome Message
1018
Confirmed?
1020
NO
Transmit Denial Message
1022
END
YES
Generate Funding Request
1024
Sell Cryptocurrency
1026
Send Payment to Homeowner
1028
Write to Transaction Blockchain
1030
Compute Completion Data
1032
Write to Blockchain
1034
Generate Confirmation Message
1036
Transmit Confirmation Message
1038
END

FIG. 10

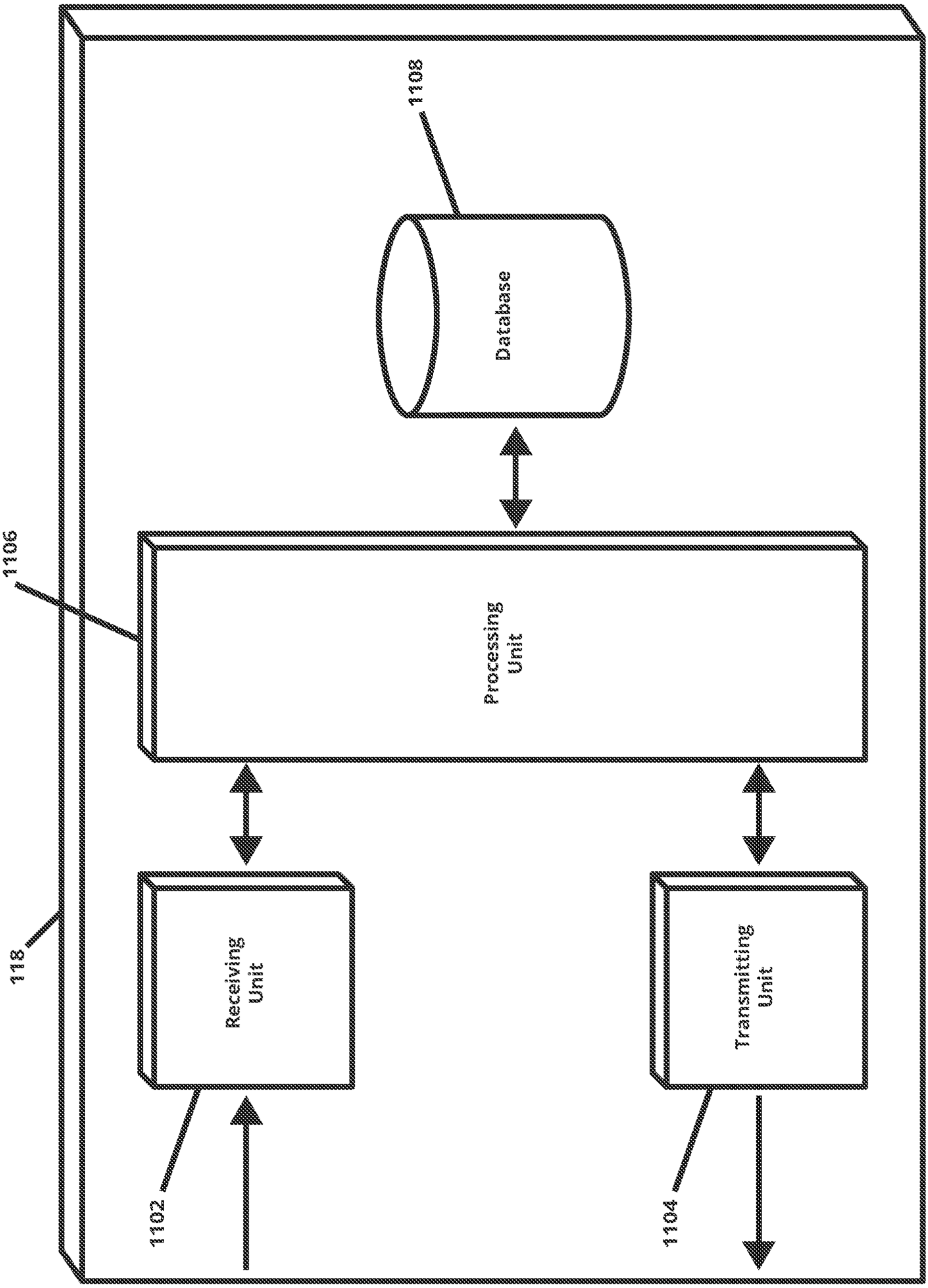
1108
Database
1106
Processing Unit
118
Receiving Unit
Transmitting Unit
1102
1104

FIG. 11

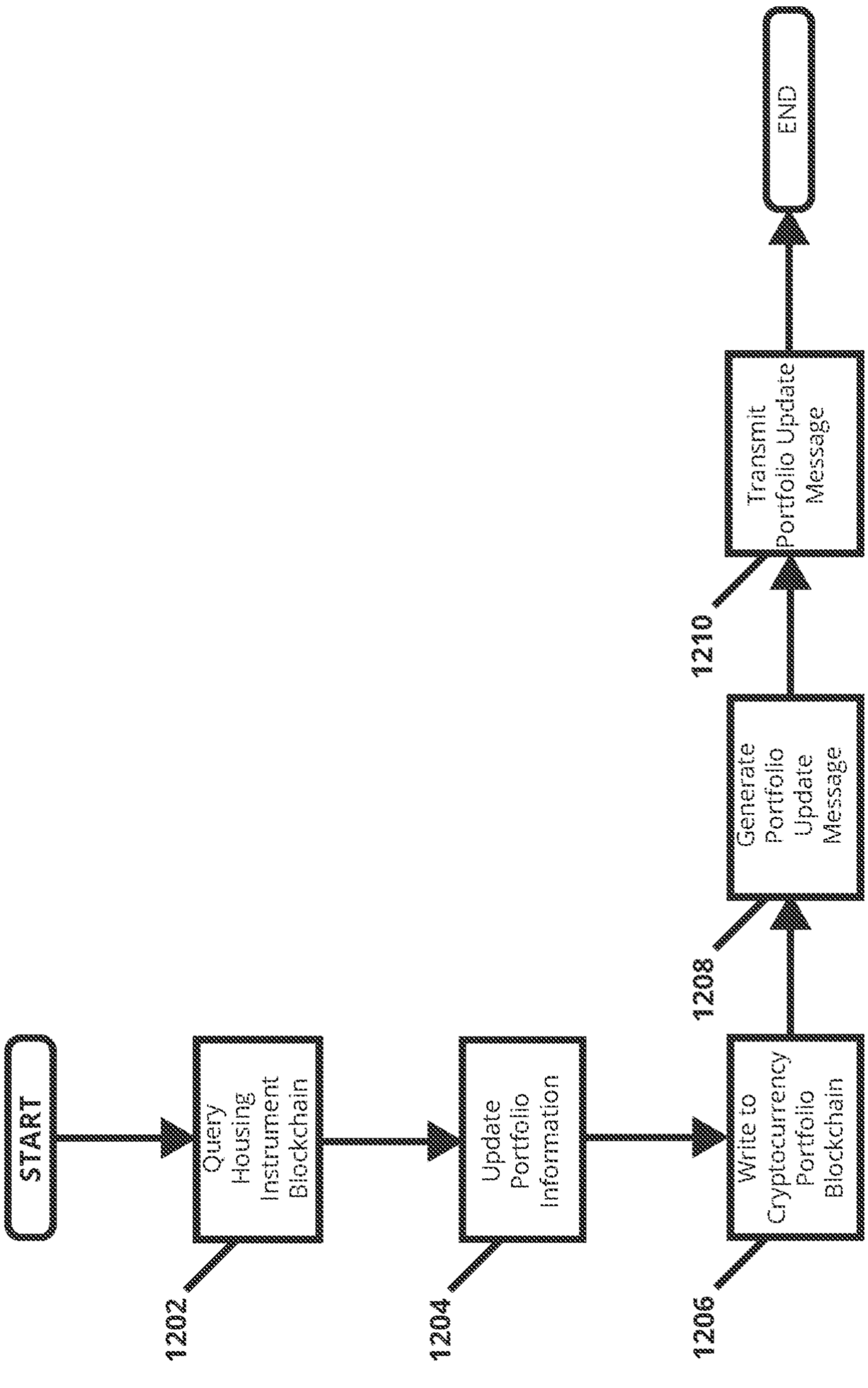
START
Query Housing Instrument Blockchain
1202
Update Portfolio Information
1204
Write to Cryptocurrency Portfolio Blockchain
1206
Generate Portfolio Update Message
1208
Transmit Portfolio Update Message
1210
END

FIG. 12

1200

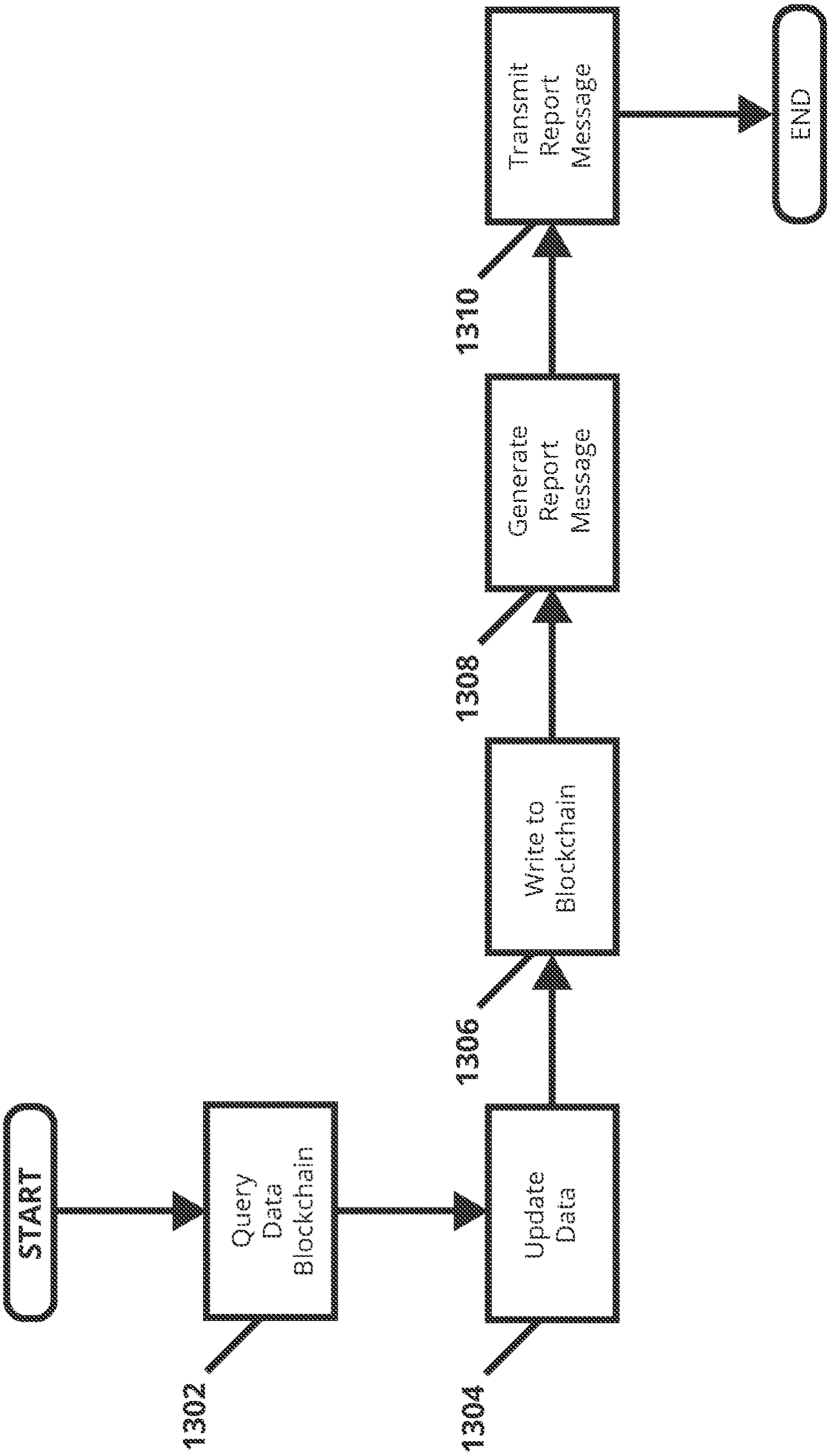
START
Query Data Blockchain
1302
Update Data
1304
Write to Blockchain
1306
Generate Report Message
1308
Transmit Report Message
1310
END

FIG. 13

1300

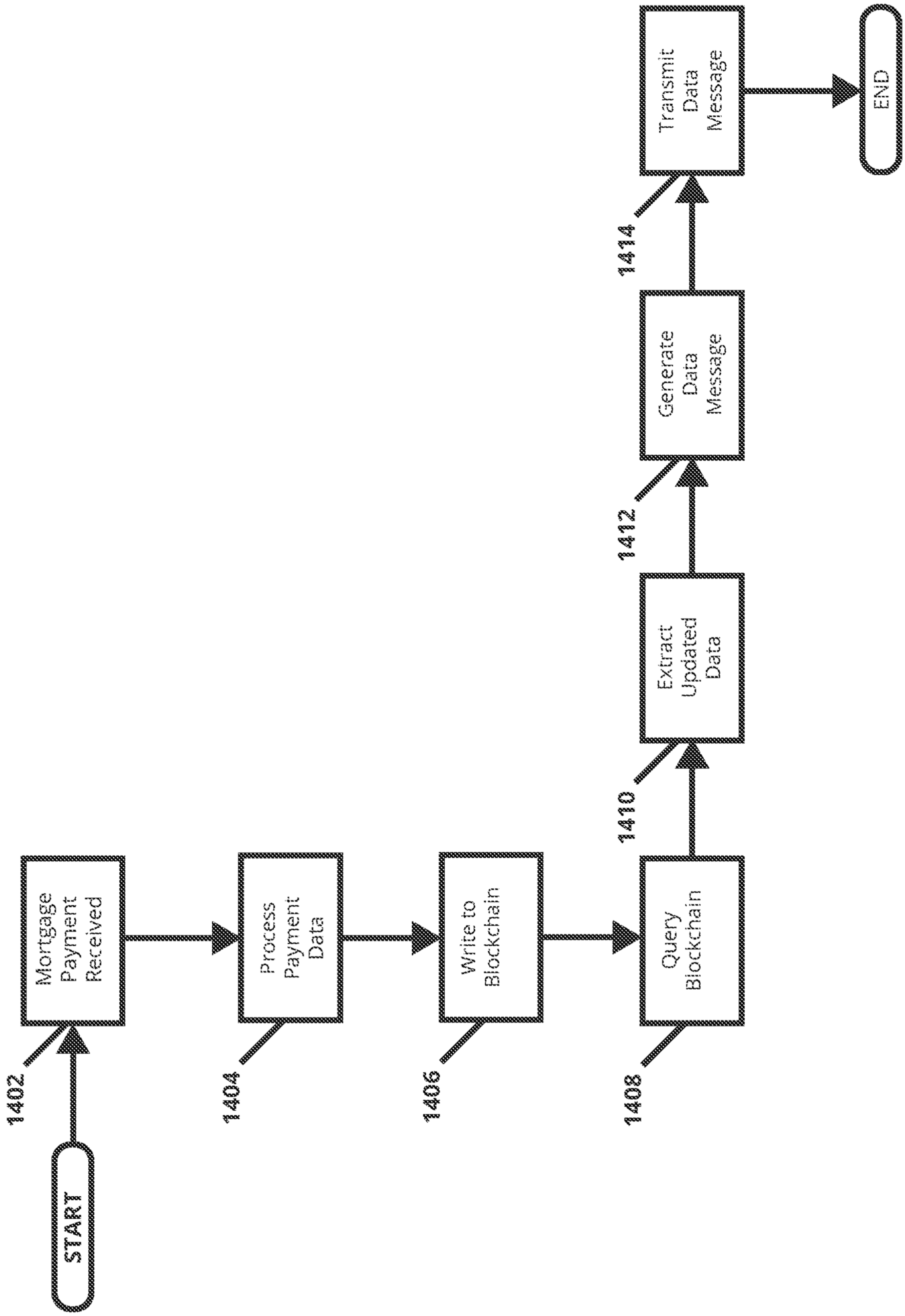
START
1402
Mortgage Payment Received
1404
Process Payment Data
1406
Write to Blockchain
1408
Query Blockchain
1410
Extract Updated Data
1412
Generate Data Message
1414
Transmit Data Message
END

1400

FIG. 14

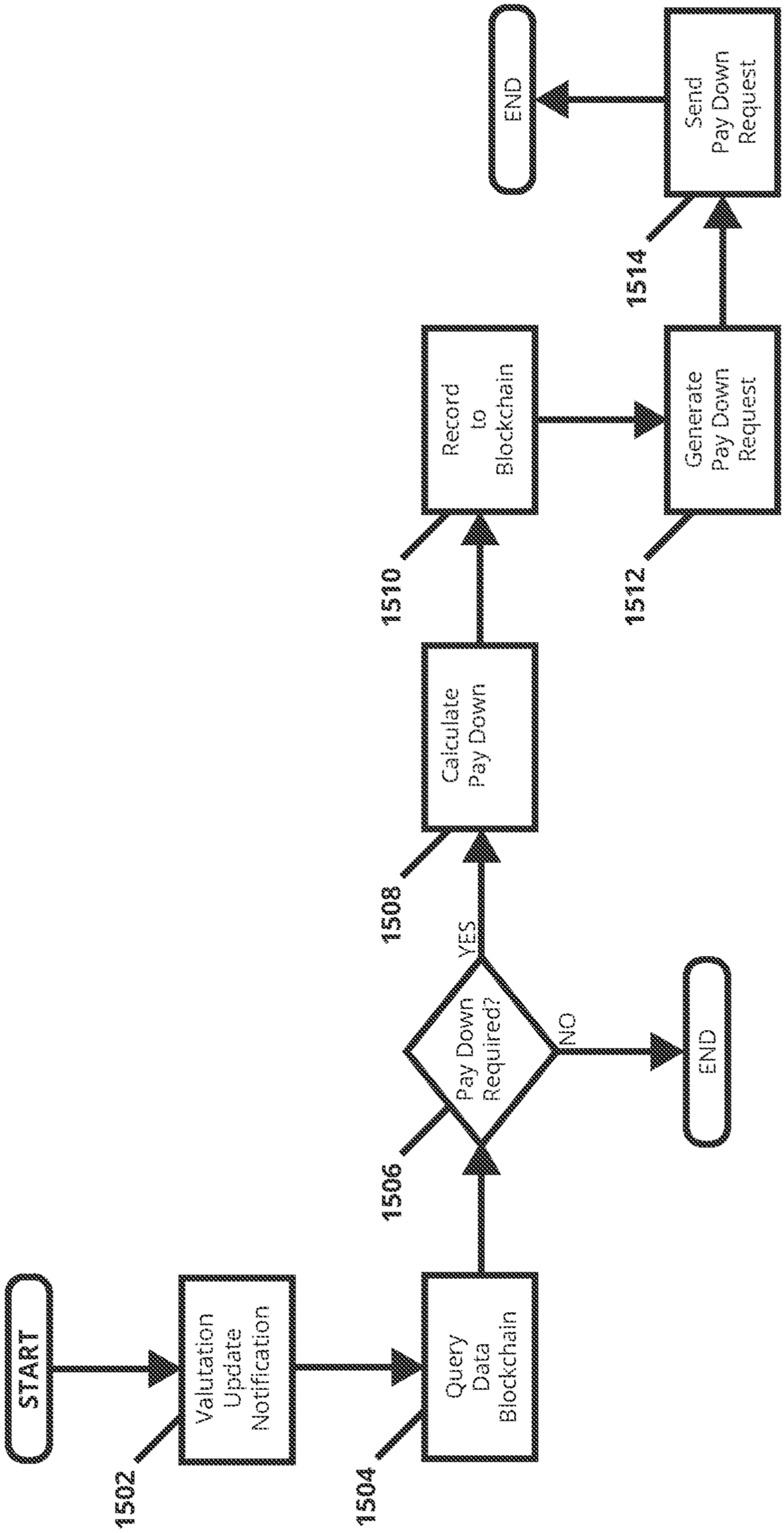
START
1502
Valutation Update Notification
1504
Query Data Blockchain
1506
Pay Down Required?
NO
END
YES
1508
Calculate Pay Down
1510
Record to Blockchain
1512
Generate Pay Down Request
1514
Send Pay Down Request
END

FIG. 15

1500

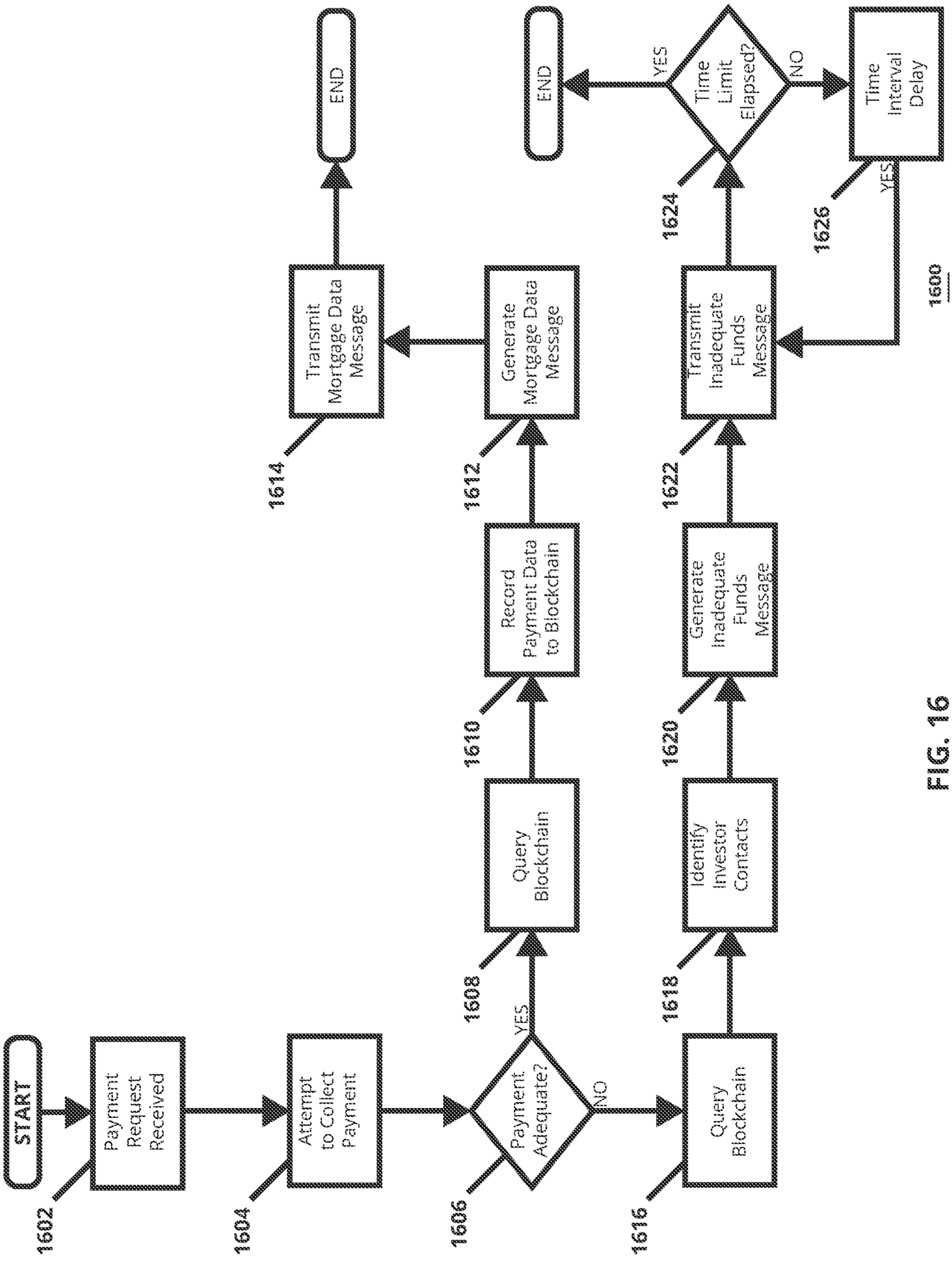
START
Payment Request Received
1602
Attempt to Collect Payment
1604
Payment Adequate?
1606
YES
NO
Query Blockchain
1608
Record Payment Data to Blockchain
1610
Generate Mortgage Data Message
1612
Transmit Mortgage Data Message
1614
END
Query Blockchain
1616
Identify Investor Contacts
1618
Generate Inadequate Funds Message
1620
Transmit Inadequate Funds Message
1622
Time Limit Elapsed?
1624
YES
NO
END
Time Interval Delay
1626
YES
1600

FIG. 16

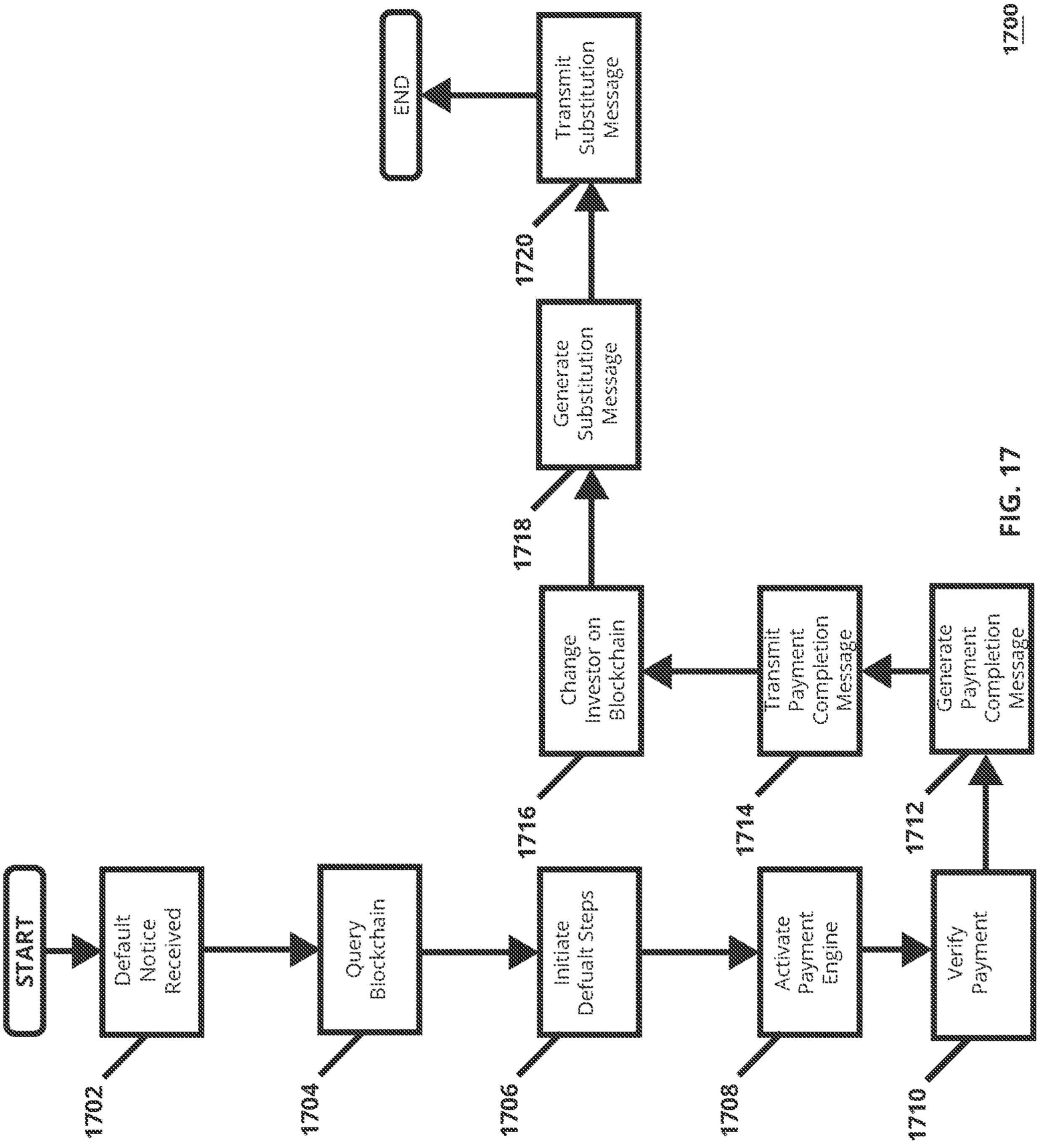
START
Default Notice Received
Query Blockchain
Initiate Defualt Steps
Activate Payment Engine
Verify Payment
Generate Payment Completion Message
Transmit Payment Completion Message
Change Investor on Blockchain
Generate Substitution Message
Transmit Substitution Message
END
1702
1704
1706
1708
1710
1712
1714
1716
1718
1720

FIG. 17

1700

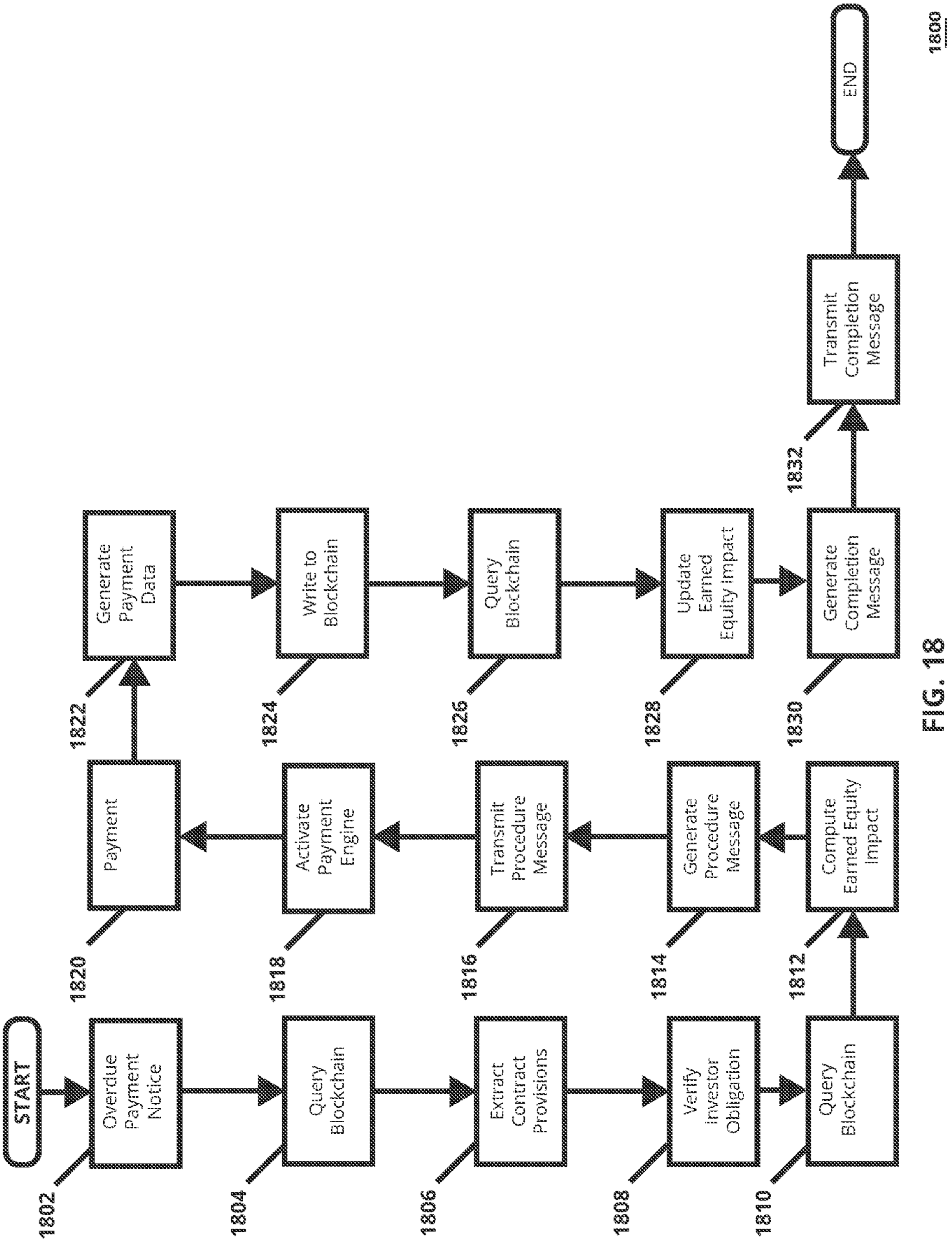
START
1802 Overdue Payment Notice
1804 Query Blockchain
1806 Extract Contract Provisions
1808 Verify Investor Obligation
1810 Query Blockchain
1812 Compute Earned Equity Impact
1814 Generate Procedure Message
1816 Transmit Procedure Message
1818 Activate Payment Engine
1820 Payment
1822 Generate Payment Data
1824 Write to Blockchain
1826 Query Blockchain
1828 Update Earned Equity Impact
1830 Generate Completion Message
1832 Transmit Completion Message
END
1800

FIG. 18

1900

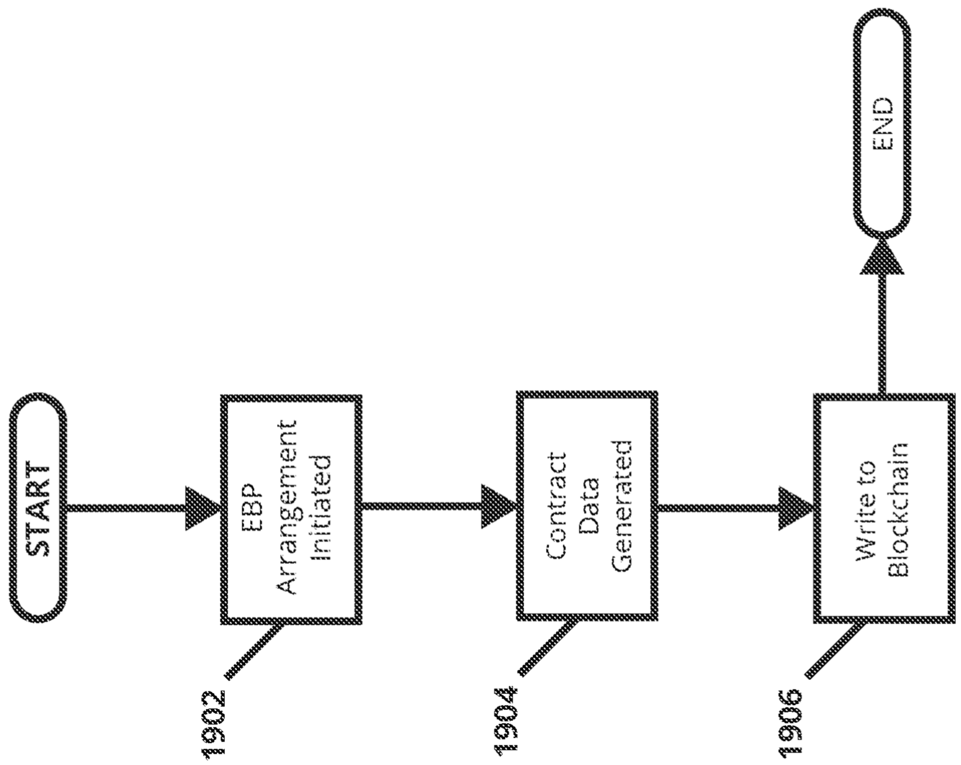
START
EBP Arrangement Initiated
Contract Data Generated
Write to Blockchain
END
1902
1904
1906

FIG. 19

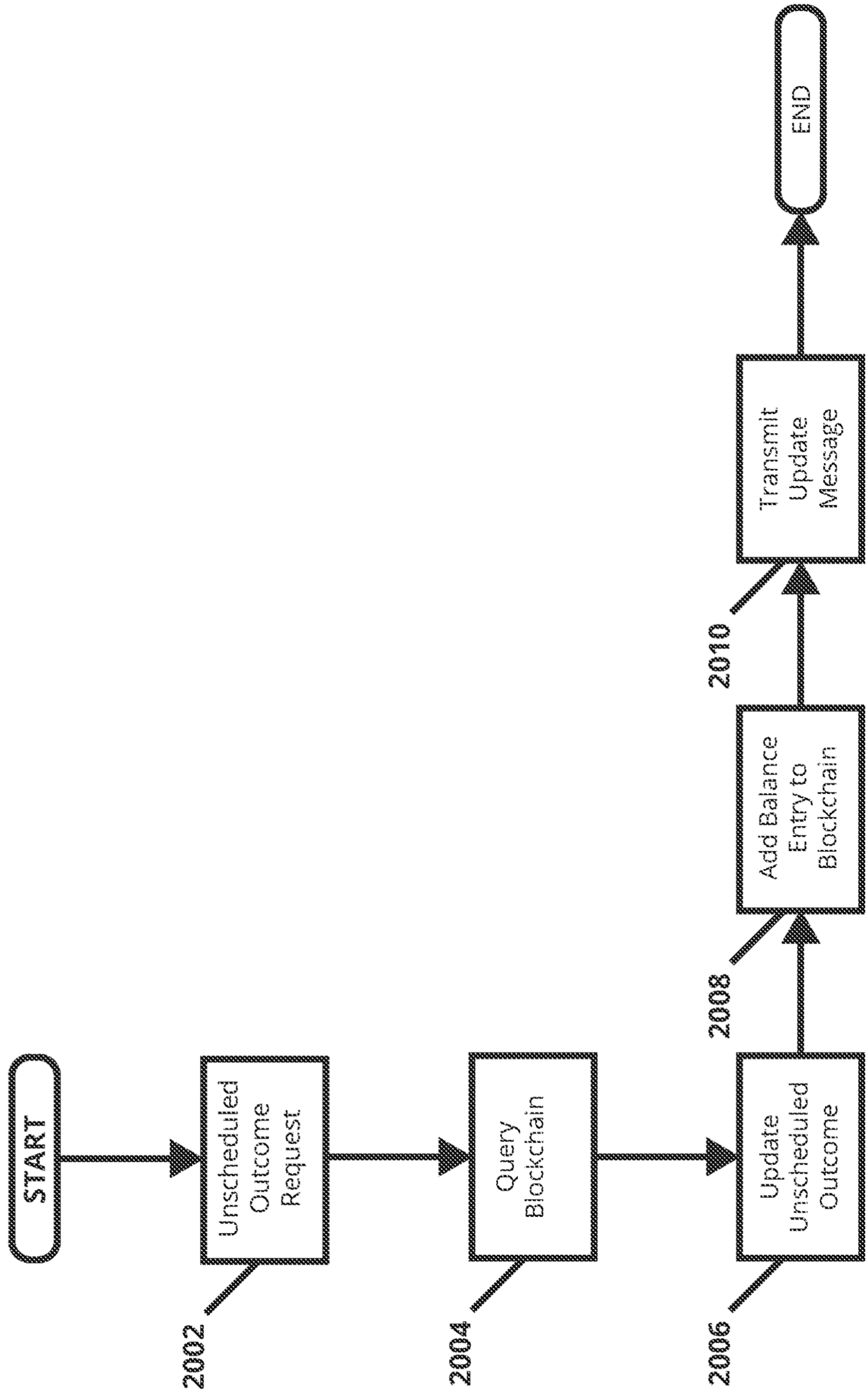
START
Unscheduled Outcome Request
2002
Query Blockchain
2004
Update Unscheduled Outcome
2006
2008
Add Balance Entry to Blockchain
2010
Transmit Update Message
END

2000

FIG. 20

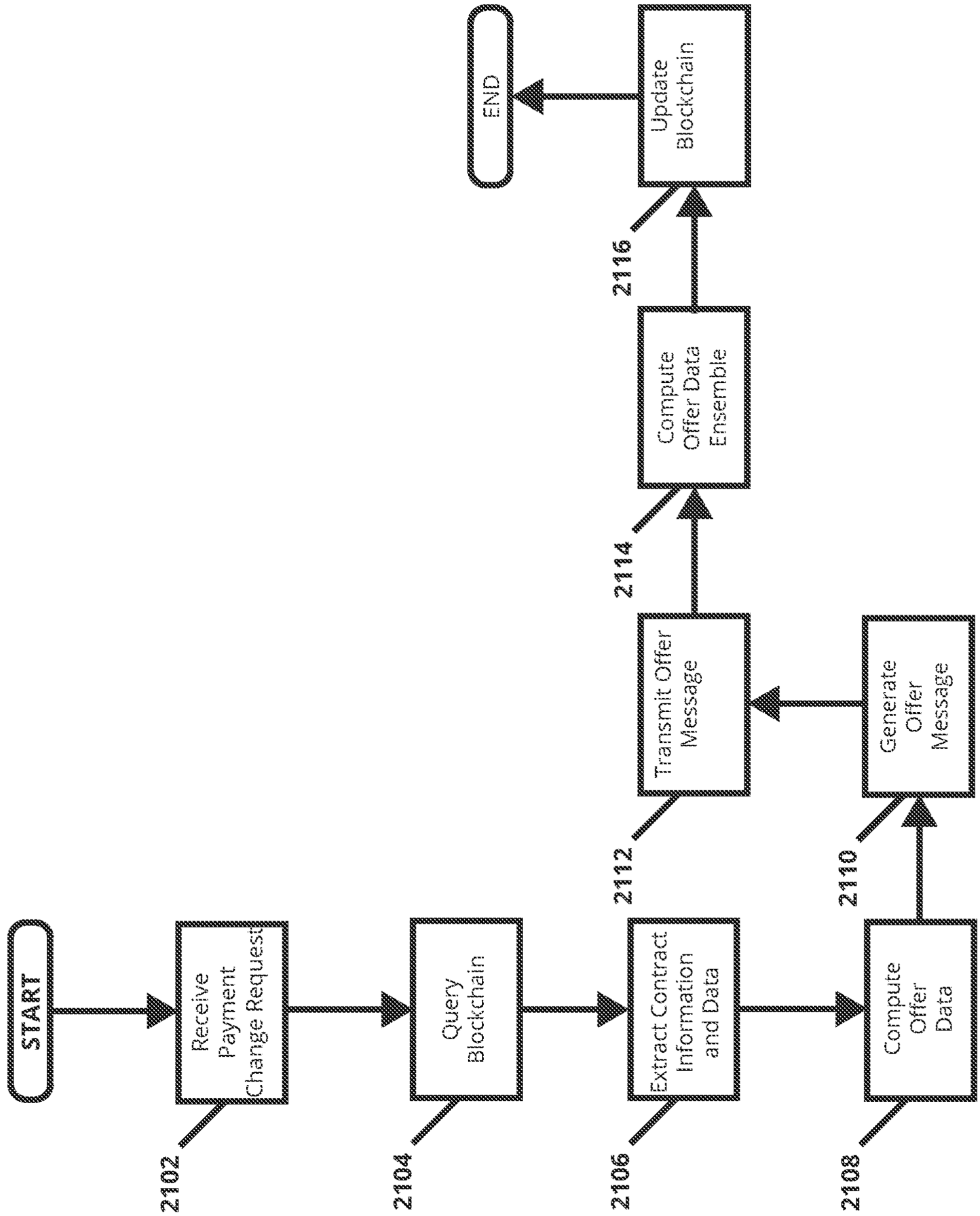
START
Receive Payment Change Request
2102
Query Blockchain
2104
Extract Contract Information and Data
2106
Compute Offer Data
2108
Generate Offer Message
2110
Transmit Offer Message
2112
Compute Offer Data Ensemble
2114
Update Blockchain
2116
END

FIG. 21

2100

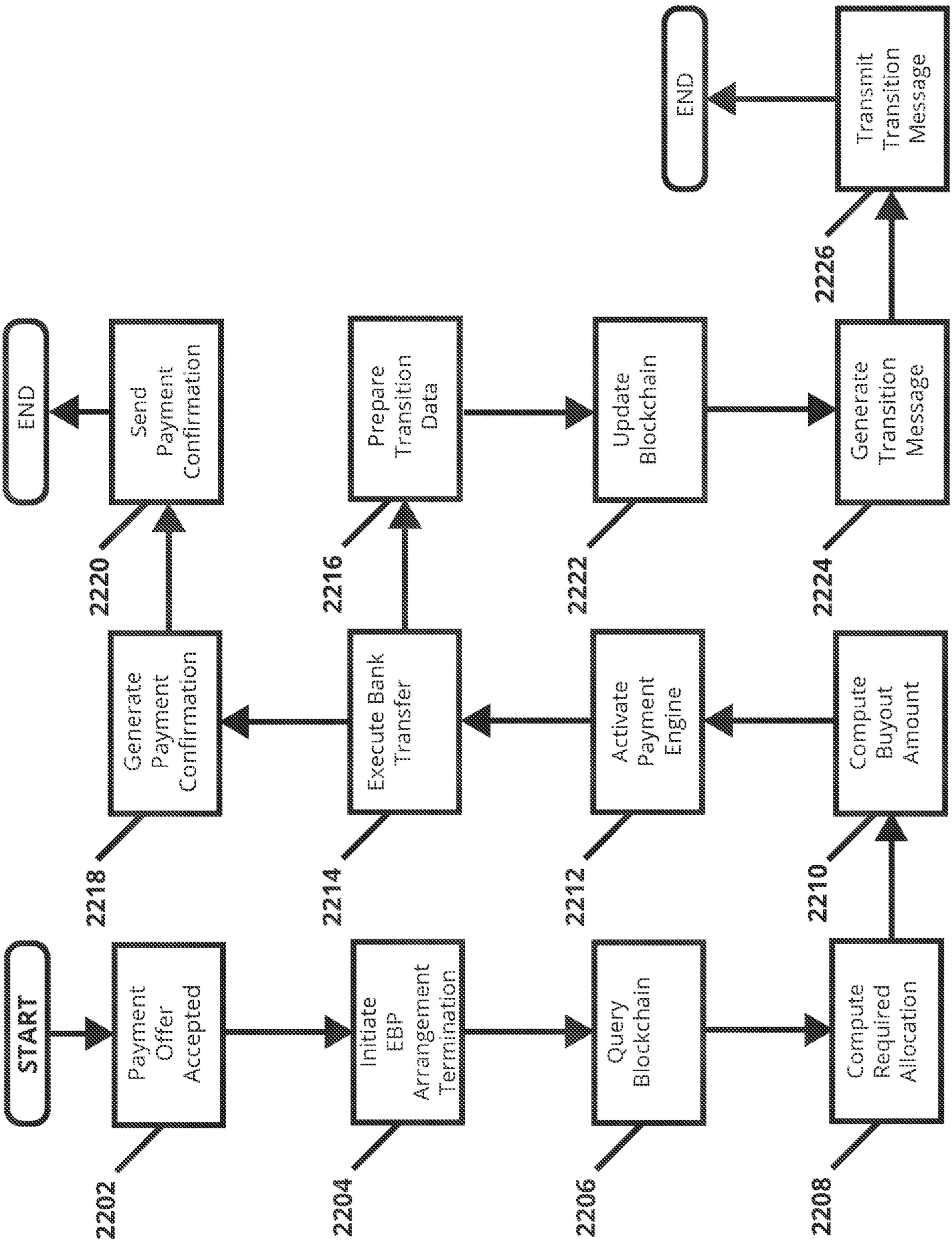
START
Payment Offer Accepted
2202
Initiate EBP Arrangement Termination
2204
Query Blockchain
2206
Compute Required Allocation
2208
Compute Buyout Amount
2210
Activate Payment Engine
2212
Execute Bank Transfer
2214
Generate Payment Confirmation
2218
Send Payment Confirmation
2220
END
Prepare Transition Data
2216
Update Blockchain
2222
Generate Transition Message
2224
Transmit Transition Message
2226
END
2200

FIG. 22

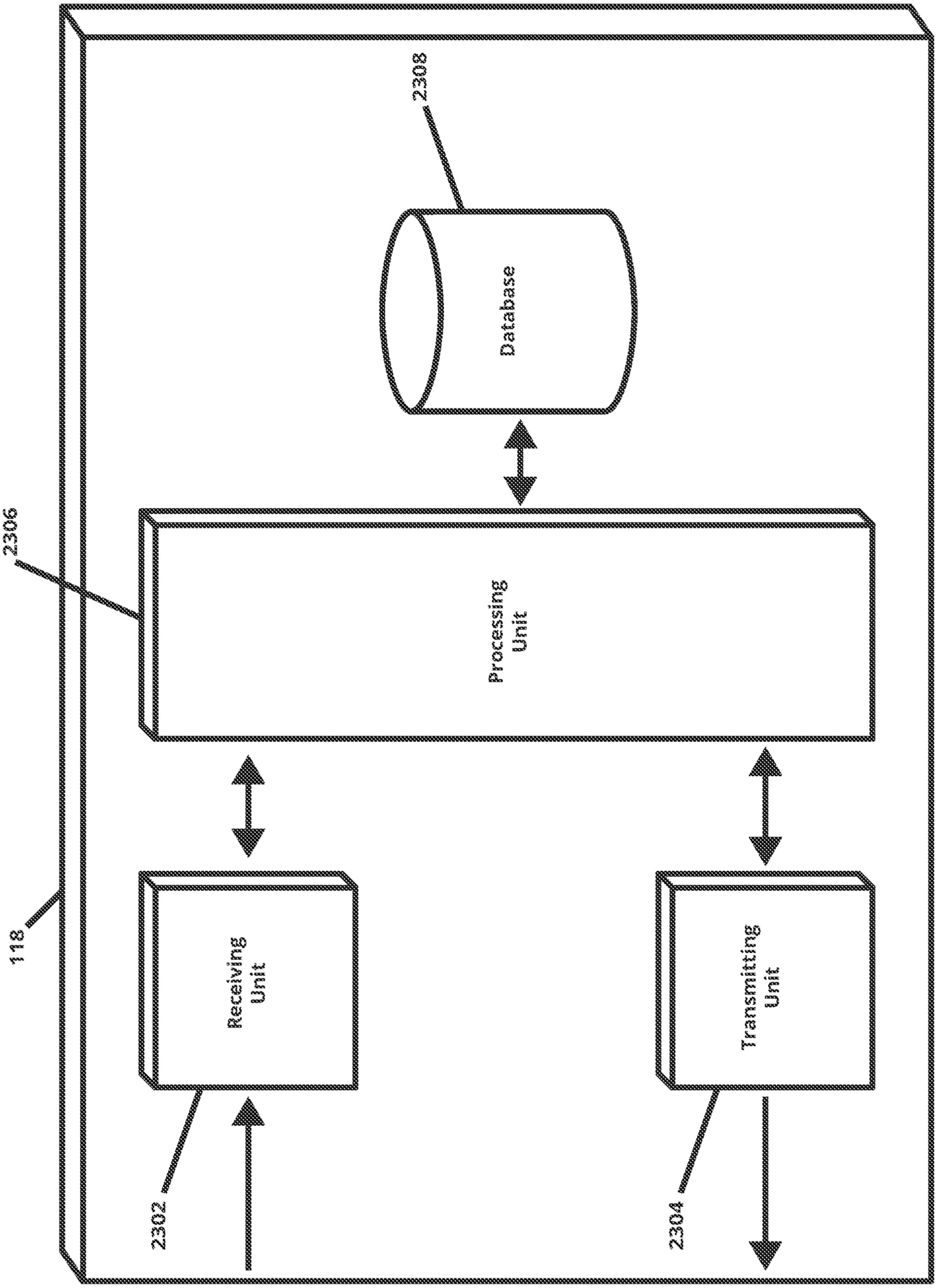
2308
Database
2306
Processing Unit
118
Receiving Unit
Transmitting Unit
2302
2304

FIG. 23

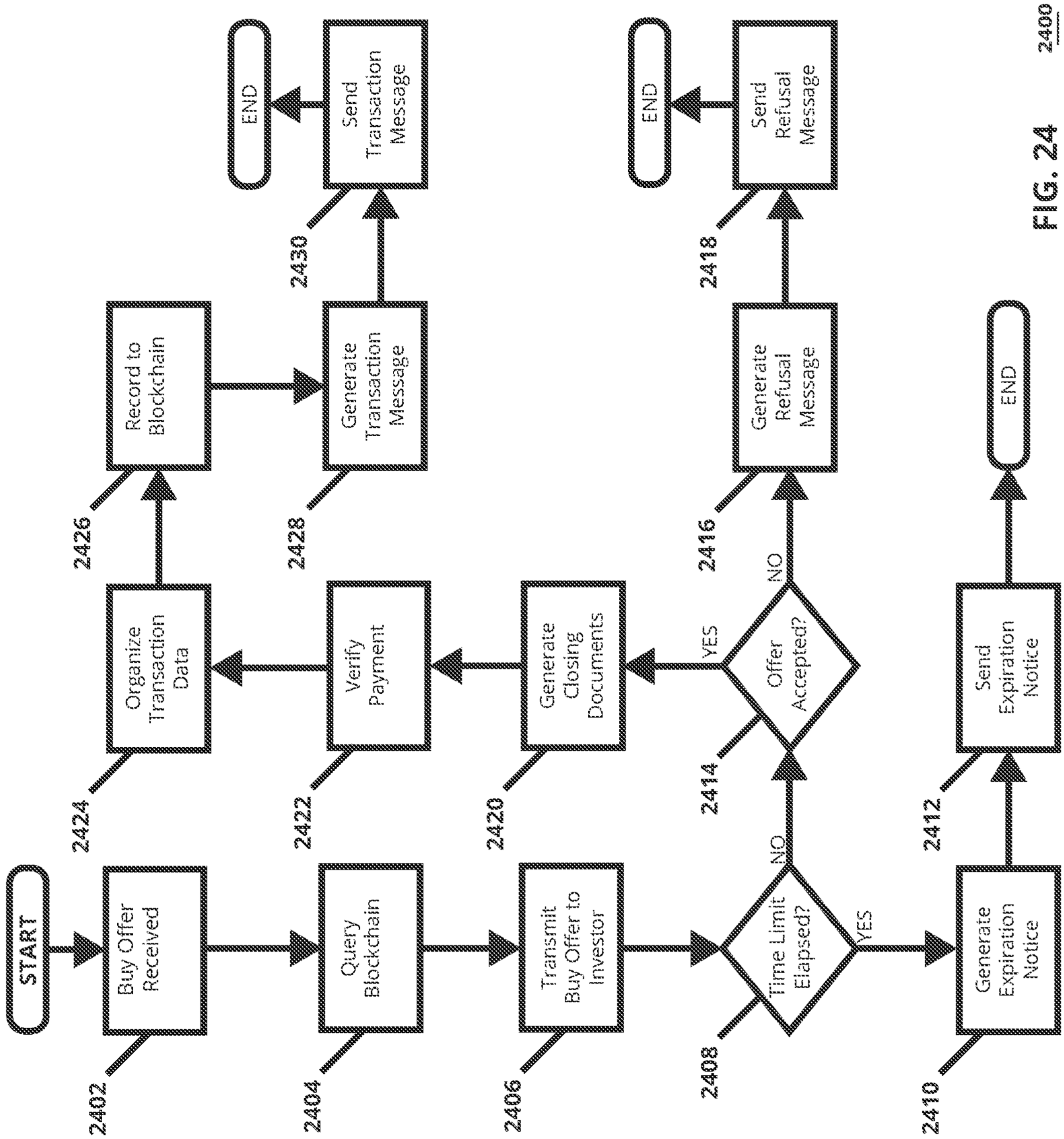
START
Buy Offer Received
2402
Query Blockchain
2404
Transmit Buy Offer to Investor
2406
Time Limit Elapsed?
2408
YES
NO
Generate Expiration Notice
2410
Send Expiration Notice
2412
END
Offer Accepted?
2414
YES
NO
Generate Refusal Message
2416
Send Refusal Message
2418
END
Generate Closing Documents
2420
Verify Payment
2422
Organize Transaction Data
2424
Record to Blockchain
2426
Generate Transaction Message
2428
Send Transaction Message
2430
END

FIG. 24

2400

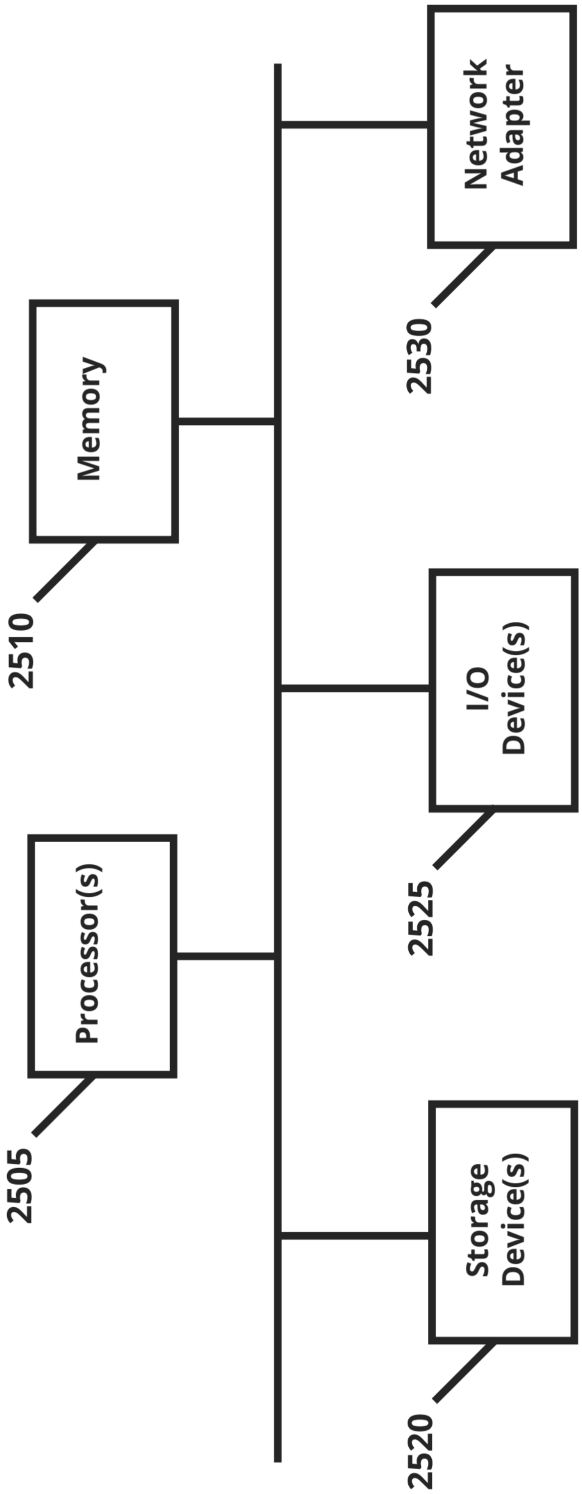
2505
Processor(s)
2510
Memory
2520
Storage Device(s)
2525
I/O Device(s)
2530
Network Adapter

Fig. 25

2500

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62614720
- US 24182019
- WO 2010085481 A1
- US 9870562 B2


### Non-patent literature cited in the description


- **A.J. AUERBACH**. Retrospective Capital Gains Taxation. *American Economic Review*, March 1991, vol. 81, 167-178